(19)

Europäisches
Patentamt

European
Patent Office

Office européen
des brevets

(11) **EP 3 812 142 A1**

(12) **EUROPÄISCHE PATENTANMELDUNG**

(43) Veröffentlichungstag:
**28.04.2021  Patentblatt 2021/17**

(21) Anmeldenummer: **19204745.4**

(22) Anmeldetag: **23.10.2019**

(51) Int Cl.:
**B29D 11/00** *(2006.01)*   **G02C 7/02** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Carl Zeiss Vision International GmbH**
**73430 Aalen (DE)**

(72) Erfinder:
• **Christmann, Michel-Rene**
  **73433 Aalen (DE)**
• **Lischer, Christian**
  **73431 Aalen (DE)**
• **Llobera Adan, Andreu**
  **73431 Aalen (DE)**
• **Liu, Yujing**
  **73430 Aalen (DE)**

(74) Vertreter: **Carl Zeiss AG - Patentabteilung**
**Carl-Zeiss-Strasse 22**
**73447 Oberkochen (DE)**

(54) **VERFAHREN ZUR HERSTELLUNG EINES BRILLENGLASES SOWIE EIN ERZEUGNIS UMFASSEND EIN BRILLENGLAS**

(57)   Ein Verfahren zur Herstellung eines Brillenglases sowie ein Erzeugnis umfassend (i) ein Brillenglas oder (ii) eine auf einem Datenträger befindliche Darstellung des Brillenglases in Form von computerlesbaren Daten oder (iii) einen Datenträger mit einer virtuellen Darstellung des Brillenglases in Form von computerlesbaren Daten oder (iv) eine Darstellung des Brillenglases in Form eines computerlesbaren Datensignals.

EP 3 812 142 A1

**Beschreibung**

Die vorliegende Erfindung betrifft ein Verfahren zur Herstellung eines Brillenglases sowie ein Erzeugnis umfassend (i) ein Brillenglas oder (ii) eine auf einem Datenträger befindliche Darstellung des Brillenglases in Form von computerlesbaren Daten oder (iii) einen Datenträger mit einer virtuellen Darstellung des Brillenglases in Form von computerlesbaren Daten oder (iv) eine Darstellung des Brillenglases in Form eines computerlesbaren Datensignals.

Die Defokussierung des Auges des Nutzers kann zu einer Fehlsichtigkeit (Ametropie) des Nutzers führen, insbesondere zu einer Kurzsichtigkeit (Myopie) oder zu einer Weitsichtigkeit (Hyperopie) des Nutzers. Vor allem in den asiatischen Ländern ist eine zunehmende Häufigkeit der Kurzsichtigkeit, insbesondere bei Kindern und Jugendlichen, zu beobachten, wobei die Kurzsichtigkeit in etwa 80% der Fälle durch ein erhöhtes Augenlängenwachstum verursacht wird. Als Faustformel gilt hierbei, dass eine Verlängerung des Augapfels von etwa 1 mm zu einer Fehlsichtigkeit von ungefähr drei Dioptrien (dpt) führt.

US 2017/0131567 A1 offenbart ein Brillenglas, welches objektseitig einen ersten Bereich mit einer ersten Brechkraft und einen zweiten Bereich mit einer von der ersten Brechkraft verschiedenen Brechkraft aufweist. Der erste Bereich soll der Korrektion des Auges dienen. Der zweite Bereich soll ein Bild nicht auf der Netzhaut abbilden und so ein Fortschreiten von Fehlbildungen des Auges unterbinden. Dieser zweite Bereich umfasst eine Vielzahl von konkav oder konvex ausgeformten inselförmigen Bereichen, welche auf einer Kreisfläche mit einem Radius von 20 mm um den Mittelpunkt des Brillenglases angeordnet sind. Jeder dieser inselförmigen, kreisförmigen Bereiche weist eine Fläche von 0,50 bis 3,14 mm2 und einen Durchmesser von 0,8 bis 2,0 mm auf. Ein kreisförmiger Bereich mit einem Radius von 2,5 bis 10,0 mm um den Mittelpunkt des Brillenglases kann keine inselförmigen Bereiche umfassen. Das Brillenglas soll ausreichende Durchsicht bei gleichzeitiger Unterbindung des Fortschreitens der Myopie gewährleisten. US 2017/0131567 A1 offenbart kein Herstellungsverfahren für ein derartiges Brillenglas.

WO 2006/034652 A1 offenbart verschiedene Verfahren um ein Fortschreiten der Myopie oder der Hyperopie zu behandeln. Eines dieser Verfahren umfasst die Bereitstellung einer Fresnellinse, welche erste optische Zonen mit einer ersten Brechkraft und zweite optische Zonen mit einer zweiten Brechkraft aufweist. Mittels der ersten Brechkraft soll die Korrektion des Auges erfolgen und mittels der zweiten Brechkraft soll wenigstens eine Defokussierung vor oder hinter der Netzhaut erzeugt werden. Ein weiteres dieser Verfahren umfasst die Bereitstellung eines optischen Systems, welches eine hintere Schicht und eine teilweise transparente vordere Schicht umfasst. Dieses optische System ermöglicht ein erstes Bild einer dieser Schichten auf der Netzhaut abzubilden sowie ein zweites Bild der anderen Schicht zu erzeugen, wobei dieses andere Bild vor oder hinter der Netzhaut defokussiert ist. Ein weiteres dieser Verfahren umfasst eine Linse, welche eine zentrale Zone mit einer ersten Brechkraft und wenigstens eine periphere Zone mit einer zweiten Brechkraft umfasst. Die erste optische Zone soll einen Lichtstrahl eines zentralen Objekts auf die Netzhaut und die zweite optische Zone soll einen Lichtstrahl eines peripheren Objekts vor oder hinter die Netzhaut fokussieren. Ein weiteres dieser Verfahren umfasst ein optisches System, welches eine zentrales Objekt und wenigstens ein peripheres Objekt aufweist. Ein erstes Bild des zentralen Objekts soll auf der Netzhaut und ein zweites Bild des peripheren Objekts soll vor oder nach der Netzhaut abgebildet werden. Ein weiteres der offenbarten Verfahren umfasst die Herstellung eines ersten Bildes auf der Netzhaut sowie die Herstellung eines zweiten defokussierten Bildes. WO 2006/034652 A1 offenbart kein Herstellungsverfahren für die dort beschriebenen Linsen.

WO 2010/075319 A2 offenbart in Figur 11 eine Brille, welche Brillengläser mit kleinen Erhebungen, kleinen Vertiefungen oder mit lichtdurchlässigen oder transparenten Einschlüssen umfasst. Die Einschlüsse sollen einen von dem restlichen Brillenglasmaterial verschiedenen Brechungsindex aufweisen. Diese Erhebungen, Vertiefungen oder Einschlüsse auf oder in den Brillengläsern sollen bewirken, dass der Nutzer dadurch ein unscharfes Bild erhält. In einer ersten Brille kann eines dieser Brillengläser eine Fläche aufweisen, welche eine scharfe Fokussierung erlaubt, so dass der Nutzer lesen oder seinen gewohnten Aktivitäten nachgehen kann. In einer zweiten Brille, welche im Wechsel mit der ersten Brille getragen werden soll, kann das jeweils andere dieser Brillengläser ebenfalls eine Fläche aufweisen, welche eine scharfe Fokussierung ermöglicht. Die Unschärfe, welche durch ein derartiges Brillenglas erzeugt wird, hängt beispielsweise von der Anordnung, der Dichte oder der Dimension der Erhebungen, der Vertiefungen oder der Einschlüsse oder von dem Material der Einschlüsse ab. Alternativ kann die Unschärfe durch Streuung von Licht an kleinen Partikeln innerhalb des Brillenglases oder durch eine Beschichtung des Brillenglases hervorgerufen werden. Auch ein inverses Gleitsicht-Brillenglas, welches eine negative Korrektur am oberen Rand und eine negativere Korrektur am unteren Rand des Brillenglases aufweist, kann eine Unschärfe über das gesamte Gesichtsfeld ermöglichen. WO 2010/075319 A2 offenbart kein Herstellungsverfahren für die in Figur 11 dargestellten Brillengläser.

US 2015/0160477 A1 offenbart eine mehrere Elemente umfassende Linse, welche ein große konvexe Linse und wenigstens eine kleine konkave Linse umfasst.

WO 2018/076057 A1 offenbart ein Brillenglas, welches ein Grundglas zur wenigstens teilweisen Korrektur des Refraktionsfehlers des Auges und wenigstens ein Mikrolinsenarray umfasst. Das Brillenglas soll das Längenwachstum des Auges anhalten oder reduzieren. Als vorteilhaft wird in WO 2018/076057 A1 beschrieben, dass das Muster oder Raster des Mikrolinsenarrays, der Durchmesser, die Höhe, der Brechungsindex und/oder die Brennweite der Mikrolinsen und/oder der räumliche Abstand zwischen den Mikrolinsen verändert werden kann. Das Mikrolinsenarray kann aus mehr als einer Schicht, beispielsweise einer Schicht aus einer transparenten Folie und einer Schicht aus einem Polymer, aufgebaut sein oder als Teil des Brillenglases abgegossen werden. Das Mikrolinsenarray kann mittels eines Klebemittels oder mechanisch mit dem Grundglas verbunden oder ein Teil dessen sein. Der prozentuale Anteil der Mikrolinsen umfassenden Fläche an der kompletten Oberfläche des Brillenglases kann zwischen 10% und 80% liegen. Die Mikrolinsen können beispielsweise in kreisförmiger, ovaler, rechteckiger, hexagonaler oder quadratischer Form vorliegen. Zwischen wenigstens zwei Mikrolinsen kann der Abstand von Zentrum zu Zentrum zwischen wenigstens 0,05 bis 8 mm betragen.

WO 2018/026697 A1 offenbart ein Verfahren ein Brillenglas, welches ein Punktmuster umfasst. Das Punktmuster umfasst auf der Oberfläche des Brillenglases Erhebungen oder Vertiefungen, welche regelmäßig oder unregelmäßig über die Oberfläche des Brillenglases verteilt sind. Die einzelnen Punkte, deren maximales Ausmaß ≤ 0,3 mm beträgt, weisen einen Abstand zueinander von ≤ 1 mm auf. Die Punkte können kreisförmig sein oder eine beliebige Form aufweisen. Innerhalb des Punktemusters kann der Abstand der einzelnen Punkte jeweils gleich oder jeweils verschieden zueinander sein. Das Brillenglas weist in einem Bereich von mehr als 1 mm um die Sichtachse kein Punktemuster auf. Ausgehend von dem Bereich ohne Punktemuster zum Brillenglasrand hin können die Punkte das gleiche Ausmaß aufweisen. Mit zunehmendem Abstand von dem Bereich ohne Punktemuster können die Punkte auch größer oder kleiner werden. Im Vergleich zu dem Bereich ohne Punktemuster kann bei Durchsicht durch das Punktemuster der Kontrast eines Objekts um wenigstens 30% herabgesetzt werden. Handelt es sich bei den einzelnen Punkten um Erhebungen auf der Oberfläche des Brillenglases können diese beispielsweise mittels Inkjet-Druck, Tampondruck, Siebdruck, Transferdruck, lithographischem Druck oder Heißprägung erzeugt werden. Die Erhebungen können weiterhin durch Abgießen des Brillenglases mittels einer geeigneten Form hergestellt werden oder Bestandteil eines auf die Oberfläche des Brillenglases aufzubringenden Films sein. Handelt es sich bei den Punkten um Vertiefungen in der Oberfläche des Brillenglases können diese beispielsweise durch Ätzen oder Materialabtrag von der Oberfläche des Brillenglases erzeugt werden. Weiterhin können die Vertiefungen auch durch Abgießen des Brillenglases mittels einer geeigneten Form hergestellt werden. Anstelle von Erhebungen oder Vertiefungen kann es sich bei den Punkten auch um Einschlüsse im Brillenglas handeln. Das Punktemuster kann für jeden Patienten in Abhängigkeit von der gewünschten Kontrastreduzierung außerhalb des Bereichs ohne Punktemuster individuell angepasst werden.

JP 2019078859 A offenbart ein Brillenglas, welches die Weitsichtigkeit im Alter korrigieren soll. Dieses Brillenglas umfasst Mikrolinsen unterschiedlicher fokussierende Wirkung. Die dioptrische Wirkung kann beispielsweise vom Zentrum zum Rand des Brillenglases abnehmen. Die Mikrolinsen mit unterschiedlicher fokussierende Wirkung sollen bewirken, dass der Brillenträger in unterschiedlichen Nahentfernungen unabhängig von der Tagesform des Brillenträgers immer durch einen Bereich im Brillenglas blicken kann, durch welchen er eine scharfe Abbildung erhält. Die Mikrolinsen können eine hexagonale Form aufweisen, welche direkt aneinander angrenzend oder mit geringem Abstand auf dem Brillenglas vorliegen sollen. Anstelle der hexagonalen Form können die Mikrolinsen auch als Dreieck, Viereck, Kreis oder Ellipse vorliegen.

WO 2019/166653 A1 offenbart ein Linsenelement, welches einen Bereich, dessen Brechkraft auf der Verschreibung für das Auge basiert, sowie eine Vielzahl von wenigstens drei nicht zusammenhängenden optischen Elementen umfasst. Wenigstens eines dieser optischen Elemente soll eine nicht sphärische optische Wirkung, welche nicht einen einzigen Fokuspunkt hat, aufweisen und somit das Fortschreiten von Myopie oder Hyperopie verlangsamen. Weiterhin kann wenigstens eines dieser optischen Elemente eine multifokale, eine torische oder diffraktive Mikrolinse sein, welches auf der Vorderfläche oder der Rückfläche des Linsenelements optional abtrennbar angeordnet ist. Die optischen Elemente sollen eine Form aufweisen, welche von einem Umkreis mit einem Durchmesser von ≥ 0,8 mm und ≤ 3,0 mm umgeben sind. Die optischen Elemente können beispielsweise als konzentrische Ringe auf einer Oberfläche des Linsenelements angeordnet sein. Die nicht zusammenhängenden optischen Elemente können gemäß WO 2019/166653 A1 auf verschiedene Weise hergestellt werden, beispielsweise durch Oberflächenbearbeitung, Abgießen, Prägung oder Fotolithographie.

WO 2019/166654 A1 offenbart ein Linsenelement, welches einen Bereich, dessen erste Brechkraft auf der Verschreibung für das Auge basiert und dessen zweite Brechkraft von der ersten Brechkraft verschieden ist, sowie eine Vielzahl von wenigstens drei optischen Elementen umfasst. Wenigstens eines dieser Linsenelemente soll ein Bild nicht auf der Netzhaut des Auges fokussieren, um so ein Fortschreiten einer abnormalen Refraktion des Auges zu verlangsamen. Der Unterschied zwischen der ersten Brechkraft und der zweiten Brechkraft liegt bei ≥ 0,5 D. Bei vorliegender Myopie soll die zweite Brechkraft Lichtstrahlen vor der Netzhaut des Auges fokussieren, was im Zusammenspiel mit den optischen Elementen zu einer Verlangsamung des Fortschreitens von Myopie oder Hyperopie führen soll. Vorzugsweise sollen wenigstens 50% der optischen Elemente ein Bild nicht auf die Netzhaut fokussieren. Die optischen Elemente können gemäß WO 2019/166654 A1 beispielsweise mittels Oberflächenbearbeitung, Abgießen, Prägung oder Fotolithographie hergestellt werden.

WO 2019/166655 A1 offenbart ein Linsenelement, welches einen Bereich, dessen Brechkraft auf der Verschreibung für das Auge basiert, und eine Vielzahl von wenigstens drei optischen Elementen umfasst. Die optischen Elemente sind derart, dass entlang wenigstens eines Abschnitts des Linsenelements die mittlere sphärische Brechkraft (englisch: mean sphere) der optischen Elemente von einem Punkt dieses Abschnitts in Richtung der Peripherie des Abschnitts ansteigt. Dieser Anstieg soll die Defokussierung eines Lichtstrahls im Fall von vorliegender Myopie vor oder im Fall von vorliegender Hyperopie hinter der Netzhaut verstärken und so das Fortschreiten von Myopie oder Heteropie verlangsamen. Außerdem kann auch die mittlere zylindrische Brechkraft (englisch: mean cylinder) entlang wenigstens eines Abschnitts des Linsenelements von einem Punkt dieses Abschnitts in Richtung der Peripherie dieses Abschnitts ansteigen. Die optischen Elemente können gemäß WO 2019/166655 A1 beispielsweise mittels Oberflächenbearbeitung, Abgießen, Prägung, additiver Herstellung oder Fotolithographie hergestellt werden.

WO 2019/166657 A1 offenbart ein Linsenelement, welches einen Bereich mit einer ersten Brechkraft basierend auf der Verschreibung für einen Brillenträger unter Standardtragebedingungen für foveales Sehen bereitstellt sowie weiterhin eine Vielzahl von wenigstens drei optischen Elementen umfasst. Wenigstens eines dieser optischen Elemente soll ein Bild unter Standardtragebedingungen und für peripheres Sehen nicht auf der Netzhaut abbilden und so das Fortschreiten einer Sehstörung verlangsamen. Weiterhin offenbart WO 2019/16657 A1 ein Verfahren zur Bestimmung eines Linsenelements, welches eine Sehstörung verlangsamen soll. Dieses Verfahren umfasst die Zurverfügungstellung der Verschreibungsdaten, der Tragebedingungen, der Netzhautdaten sowie hierauf basierend die Bestimmung des Linsenelements. Die optischen Elemente können gemäß WO 2019/166657 A1 beispielsweise mittels Oberflächenbearbeitung, Abgießen, Prägung oder Fotolithographie hergestellt werden.

WO 2019/166659 A1 offenbart ein Linsenelement, welches einen Bereich mit einer auf der Verschreibung für das Auge basierenden Brechkraft und eine Vielzahl von wenigstens zwei optischen Elementen umfasst. Wenigstens eines dieser optischen Elemente soll ein Bild nicht auf der Netzhaut des Auges fokussieren, so dass das Fortschreiten einen abnormalen Refraktion verlangsamt wird. Die wenigstens zwei zusammenhängenden optischen Elemente sollen unabhängig voneinander sein, also unabhängige Bilder abbilden. Ist die Oberfläche, auf welcher die wenigstens zwei optischen Elemente angeordnet ist, sphärisch, sind zwei optische Elemente dann zusammenhängend, wenn es einen Pfad von einem zum anderen Element gibt, auf dem die sphärische Fläche nicht berührt wird. Entsprechendes gilt für nicht sphärische Oberflächen, welche einer sphärischen Oberfläche angenähert werden. Zusammenhängende optische Elemente sollen das Aussehen des Linsenelements verbessern und einfacher herstellbar sein. Die optischen Elemente können gemäß WO 2019/166659 A1 beispielsweise mittels Oberflächenbearbeitung, Abgießen, Prägung oder Fotolithographie hergestellt werden.

Aufgabe der vorliegenden Erfindung war es, ein alternatives Verfahren zur Herstellung eines der vorstehend im Stand der Technik beschriebenen Brillengläser zur Verfügung zu stellen. Des Weiteren war es Aufgabe der vorliegenden Erfindung, ein alternatives Verfahren zur Verfügung zu stellen, welches keinen mechanischen Bearbeitungsschritt zur Erzielung der dioptrischen Wirkung oder zur Erzielung der finalen Oberflächentopographie erfordert.

Diese Aufgabe wurde gelöst durch Bereitstellung eines Verfahrens gemäß Anspruch 1. Diese Aufgabe wurde des Weiteren gelöst durch Bereitstellung eines Erzeugnisses gemäß Anspruch 12.

Das Substrat kann wenigstens ein polymeres Material und/oder wenigstens ein mineralisches Glas umfassen, wobei das polymere Material oder das mineralische Glas jeweils als Brillenglas-Halbfertigprodukt, d.h. als Linsenrohling mit nur einer optisch fertig bearbeiteten Fläche gemäß DIN EN ISO 13666:2013-10, Absatz 8.4.2, oder als fertiges Brillenglas, d.h. als Brillenglas mit zwei fertig bearbeiteten optischen Flächen vor oder nach der Randbearbeitung gemäß DIN EN ISO 13666:2013-10, Absatz 8.4.6, vorliegen kann. Die Brillenglas-Halbfertigprodukte können als Einstärken-Brillenglas-Halbfertigprodukte, Mehrstärken-Brillenglas-Halbfertigprodukte oder Gleitsicht-Brillenglas-Halbfertigprodukte gemäß DIN EN ISO 13666:2013-10, Absätze 8.4.3, 8.4.4 und 8.4.5, vorliegen. Bei den fertigen Brillengläsern kann es sich um Einstärken-Brillengläser, Mehrstärken-Brillengläser, Zweistärken-Brillengläser, Dreistärken-Brillengläser, Gleitsicht-Brillengläser oder degressive Brillengläser gemäß DIN EN ISO 13666:2013-10, Absätze 8.3.1, 8.3.2, 8.3.3, 8.3.4, 8.3.5 und 8.3.6 handeln. Die als Substrat einsetzbaren Brillenglas-Halbfertigprodukte bzw. fertigen Brillengläser können beispielsweise auf den in nachstehender Tabelle 1 genannten Grundmaterialien basieren.

Tabelle 1: Beispiele für Grundmaterialien für Brillenglas-Halbfertigprodukte bzw. fertige Brillengläser

| Handelsname | Grundmaterial | Mittlerer Brechungsindex n* | Abbe-Zahl ν* |
|---|---|---|---|
| CR 39, CR 330, CR 607, CR 630, RAV 700, 7NG, 7AT, 710, 713, 720 | Polyallyldiglycolcarbonat ((P)ADC) | 1,500 | 56 |
| RAVolution | Polyharnstoff / Polyurethan | 1,500 | 54 |
| Trivex | Polyharnstoff / Polyurethan | 1,530 | 45 |

(fortgesetzt)

| Handelsname | Grundmaterial | Mittlerer Brechungsindex n* | Abbe-Zahl v* |
|---|---|---|---|
| Panlite, Lexan | Polycarbonat (PC) | 1,590 | 29 |
| MR 6 | Polythiourethan | 1,598 | |
| MR 8 | Polythiourethan | 1,598 | 41 |
| MR 7 | Polythiourethan | 1,664 | 32 |
| MR 10 | Polythiourethan | 1,666 | 32 |
| MR 174 | Polyepisulfid | 1,738 | 32 |
| MGC 1.76 | Polyepisulfid | 1,76 | 30 |
| | Mineral 1.5 | 1,525 | 58 |
| | Mineral 1.6 | 1,604 | 44 |
| | Mineral 1.7 | 1,701 | 39,2 |
| | Mineral 1.8 | 1,802 | 34,4 |
| | Mineral 1.9 | 1,885 | 30 |
| * Bezogen auf Natrium D-Linie | | | |

Die der optisch fertig bearbeiteten Fläche gegenüberliegende Fläche des Brillenglas-Halbfertigprodukts kann vor oder nach Beschichtung der optisch fertig bearbeiteten Fläche des Brillenglas-Halbfertigprodukts bevorzugt durch mechanische Bearbeitung, wie beispielsweise Fräsen und/oder Schleifen und/oder Drehen und/oder Polieren, in die zweite optisch fertig bearbeitete Fläche überführt werden. Bevorzugt erfolgt diese mechanische Bearbeitung vor Beschichtung des Brillenglas-Halbfertigprodukts.

Bei dem Substrat handelt es sich bevorzugt um ein fertiges Brillenglas.

Das Substrat kann keine optische Korrektionswirkung aufweisen. Alternativ kann das Substrat mit einer optischen Korrektionswirkung und/oder einer Bildfehlerkorrektur für das blickende Auge ausgestattet sein. Unter optischer Korrektionswirkung wird die sphärische Korrektion, die astigmatische Korrektion und die Korrektion der Achslage sowie optional die Korrektion durch ein Prisma mit Basislage verstanden. Diese optische Korrektionswirkung ist herkömmlicherweise für die Ferne oder für die Nähe in Einstärken-Brillengläsern verwirklicht. Bei Mehrstärken-Brillengläsern, Zweistärken-Brillengläsern, Dreistärken-Brillengläsern, Gleitsicht-Brillengläsern oder degressiven Brillengläsern kann die optische Korrektionswirkung für die Ferne und/oder für die Nähe jeweils eine sphärische Korrektion, eine astigmatische Korrektion, eine Korrektion der Achslage sowie optional eine Korrektion durch ein Prisma mit Basislage beinhalten. Die Bildfehlerkorrektion für das blickende Auge wird, unabhängig davon, ob es sich um eine Bildfehlerkorrektion für die Ferne oder für die Nähe handelt, bevorzugt analog zu Werner Köppen "Konzeption und Entwicklung von Gleitsichtgläsern", Deutsche Optiker Zeitschrift DOZ, Oktober 1995, Seite 42 - 45, berechnet. Hierzu werden die Flächeneigenschaften mindestens einer Substratoberfläche in einem Optimierungsprozess durch Iteration so lange verändert bis eine gewünschte Bildfehlerverteilung für das blickende Auge innerhalb einer vorgegebenen Toleranz erreicht ist, d.h. bis die Merit-Funktion einen vorgegebenen Wert unterschritten hat.

Die Herstellung des Substrats kann entweder mittels Urformen und anschließender mechanischer Bearbeitung, wie beispielsweise Fräsen und/oder Schleifen und/oder Drehen und/oder Polieren oder, bei auf wenigstens einem polymerem Material basierenden Substraten, mittels eines additiven Herstellungsverfahrens erfolgen. Bei der Herstellung eines auf wenigstens einem polymeren Material basierenden Substrat, bevorzugt mittels eines additiven Herstellungsverfahrens, kann das Substrat einen einheitlichen Brechungsindex, wie beispielsweise in vorstehender Tabelle 1 aufgeführt, oder eine ortsabhängige Brechungsindexverteilung aufweisen. Die ortsabhängige Brechungsindexverteilung wird bevorzugt vorab mittels optischer Rechenprogramme, wie beispielsweise ZEMAX (Firma Zemax LLC), berechnet und optimiert. Für die Berechnung müssen bevorzugt die Position des Substrats vor dem dafür vorgesehenen Auge, die Pupillendistanz, die Vorneigung des Substrats, der Fassungsscheibenwinkel des Substrats sowie die Substratgröße bekannt sein. Darüber hinaus wird, insbesondere bei der Berechnung von Mehrstärken-Brillengläsern, Zweistärken-Brillengläsern, Dreistärken-Brillengläsern, Gleitsicht-Brillengläsern und degressiven Brillengläsern ein Objektabstandsmodell zugrunde gelegt, welches die Position von Objektpunkten im Blickfeld des Brillenträgers relativ zu dessen Augendrehpunkten beschreibt. Ein beispielsweise als Substrat einsetzbares Gleitsicht-Brillenglas, welches eine ortsabhängige Brechungsindexverteilung aufweist, ist in EP 3 352 001 A1, insbesondere in EP 3 352 001 A1, Anspruch 1 oder gemäß Regel 137(2) EPÜ geändertem Anspruch 1, oder in PCT/EP2019/069422, insbesondere in PCT/EP2019/069422, Anspruch 1, offenbart.

Umfasst das Substrat sowohl wenigstens ein polymeres Material als auch wenigstens ein mineralisches Glas, ist das mineralische Glas bevorzugt als Dünnglas und das polymere Material bevorzugt als Brillenglas-Halbfertigprodukt oder als fertiges Brillenglas oder als wenigstens eine Kunststofffolie ausgebildet. Das Brillenglas-Halbfertigprodukt oder das fertige Brillenglas können auch bei dieser Ausführungsform mittels eines additiven Herstellungsverfahrens hergestellt sein und entweder einen einheitlichen Brechungsindex oder eine ortsabhängige Brechungsindexverteilung aufweisen. Umfasst bei dieser Ausführungsform das Substrat wenigstens ein Dünnglas als mineralisches Glas und wenigstens eine Kunststofffolie als polymeres Material, ist die wenigstens eine Kunststofffolie bevorzugt zwischen wenigstens zwei Dünngläsern angebracht. Die wenigstens eine Kunststofffolie basiert bevorzugt auf Polyethylen, Polypropylen, Polyethylenterephthalat, Polycarbonat, Polymethylmethacrylat, Polyvinylchlorid, Polyvinylacetat, Polyvinylbutyrat und/oder Mischungen hiervon. Die wenigstens eine Kunststofffolie kann beispielsweise mit Cellulosetriacetat stabilisiert werden. Die wenigstens eine Kunststofffolie kann eingefärbt oder nicht eingefärbt sein. Soll das wenigstens eine Kunststofffolie und wenigstens ein Dünnglas umfassende Substrat eingefärbt sein, ist bevorzugt die wenigstens eine Kunststofffolie eingefärbt. Die wenigstens eine Kunststofffolie weist bevorzugt eine mittlere Dicke aus einem Bereich von 9 $\mu$m bis 205 $\mu$m, besonders bevorzugt aus einem Bereich von 14 $\mu$m bis 103 $\mu$m auf. Umfasst bei dieser Ausführungsform das Substrat wenigstens ein Dünnglas als mineralisches Glas und wenigstens ein fertiges Brillenglas als polymeres Material, kann sich wenigstens ein Dünnglas auf der Vorderfläche und/oder auf der Rückfläche des fertigen Brillenglases befinden. Bevorzugt befindet sich wenigstens ein Dünnglas sowohl auf der Vorderfläche als auch auf der Rückfläche des fertigen Brillenglases.

Umfasst bei dieser Ausführungsform das Substrat wenigstens ein Dünnglas als mineralisches Glas und wenigstens ein Brillenglas-Halbfertigprodukt als polymeres Material wird bevorzugt zunächst die optisch nicht fertig bearbeitete Fläche bearbeitet und dann die Vorderfläche und/oder die Rückfläche des so erhaltenen fertigen Brillenglases mit wenigstens einem Dünnglas verbunden. Alternativ wird bei der Verwendung eines Brillenglas-Halbfertigprodukts als polymeres Material das wenigstens eine Dünnglas mit der bereits fertig bearbeiteten optischen Fläche verbunden, die optisch nicht fertig bearbeitete Fläche bearbeitet und diese bearbeitete Fläche optional anschließend mit wenigstens einem weiteren Dünnglas verbunden. Die Verbindung mit wenigstens einem weiteren Dünnglas ist hierbei bevorzugt. Bevorzugt handelt es sich bei der fertig bearbeiteten optischen Fläche des Brillenglas-Halbfertigprodukts um dessen Vorderfläche und bei der optisch nicht fertig bearbeiteten Fläche um dessen Rückfläche. Alternativ zu der Überführung der optisch nicht fertig bearbeiteten Fläche in eine zweite optisch fertig bearbeitete Fläche und deren anschließende Verbindung mit wenigstens einem Dünnglas kann diese zweite Fläche nach Überführung in eine zweite optisch fertig bearbeitete Fläche mit wenigstens einer Beschichtung versehen werden. Diese Beschichtung wird bevorzugt aus der Gruppe bestehend aus wenigstens einer Hartlackschicht, wenigstens einer Entspiegelungsschicht, wenigstens einer Antibeschlagschicht, wenigstens einer elektrisch leitfähigen oder elektrisch halbleitenden Schicht und wenigstens einer Clean-Coat-Schicht ausgewählt. Besonders bevorzugt umfasst die Beschichtung wenigstens eine Hartlackschicht, wenigstens eine Entspiegelungsschicht und wenigstens eine Clean-Coat-Schicht, wobei die wenigstens eine Hartlackschicht die dem Substrat am nächsten liegende Schicht und die wenigstens eine Clean-Coat-Schicht die am weitesten vom Substrat entfernt liegende Schicht ist.

Das wenigstens eine, mit der Vorderfläche des fertigen Brillenglases verbundene Dünnglas kann identisch oder verschieden, beispielsweise in Bezug auf die Glaskomposition, die mittlere Dicke, die Oberflächentopographie, den Krümmungsradius und/oder die Form, zu dem wenigstens einen, mit der Rückfläche des fertigen Brillenglases verbundenen Dünnglas sein. Gleiches gilt auch bei der Verwendung wenigstens eines Brillenglas-Halbfertigprodukts oder wenigstens einer Kunststofffolie als polymeres Material. Bei Verwendung eines Brillenglas-Halbfertigprodukts wird hierbei die optisch nicht fertig bearbeitete Fläche vor der Verbindung mit wenigstens einem Dünnglas in eine optisch fertig bearbeitete Fläche überführt.

Die Verbindung des wenigstens einen Dünnglases mit der optisch fertig bearbeiteten Fläche, bevorzugt der Vorderfläche, des Brillenglas-Halbfertigprodukts bzw. mit einer der fertig bearbeiteten optischen Flächen, bevorzugt der Vorderfläche, des fertigen Brillenglases erfolgt bevorzugt stoffschlüssig und formschlüssig. Bevorzugt wird die Rückfläche des wenigstens einen Dünnglases mit der optisch fertig bearbeiteten Vorderfläche des Brillenglas-Halbfertigprodukts bzw. des fertigen Brillenglases verbunden. Die Rückfläche des wenigstens einen Dünnglases und/oder die optisch fertig bearbeitete Vorderfläche des Brillenglas-Halbfertigprodukts bzw. des fertigen Brillenglases kann mit wenigstens einer Beschichtung versehen sein. Diese wenigstens eine Beschichtung kann wenigstens eine farbgebende Schicht, wenigstens eine photochrome Schicht und/oder wenigstens eine polarisierende Schicht umfassen. Die wenigstens eine farbgebende Schicht umfasst bevorzugt eine färbbare Schicht gemäß US 4,355,135 A, insbesondere gemäß Anspruch 1 der US 4,355,135 A, gemäß US 4,294,950 A, insbesondere gemäß einem der Ansprüche 1 oder 6 der US 4,294,950 A, oder gemäß US 4,211,823 A, insbesondere gemäß einem der Ansprüche 1 oder 2 der US 4,211,823 A. Besonders bevorzugt umfasst die farbgebende Schicht eine färbbare Schicht gemäß US 4,355,135 A, insbesondere bevorzugt gemäß Anspruch 1 der US 4,355,135 A. Die wenigstens eine photochrome Schicht umfasst bevorzugt eine Schicht gemäß

US 2006/0269741 A1, insbesondere gemäß US 2006/0269741 A1, Anspruch 6, oder eine Schicht gemäß US 2004/0220292 A1, insbesondere gemäß US 2004/0220292 A1, Anspruch 1. Die wenigstens eine photochrome Schicht weist bevorzugt eine mittlere Dicke aus einem Bereich von 5 $\mu$m bis 200 $\mu$m, weiter bevorzugt aus einem Bereich von 9 $\mu$m bis 166 $\mu$m, besonders bevorzugt aus einem Bereich von 17 $\mu$m bis 121 $\mu$m und ganz besonders bevorzugt aus einem Bereich von 21 $\mu$m bis 81 $\mu$m auf. Die wenigstens eine polarisierende Schicht umfasst bevorzugt entweder eine Polarisationsfolie oder eine Schicht mit polarisierenden Eigenschaften. Als Polarisationsfolie kann eine Folie aus beispielsweise Polyvinylalkohol oder Polyethylenterephthalat eingesetzt werden, welche dichroitische Farbmittel umfasst. Die Polarisationsfolie kann einen einschichtigen oder mehrschichtigen Folienaufbau aufweisen. Die Polarisationsfolie kann passgenau zur Rückfläche des wenigstens einen Dünnglases vorgeformt vorliegen. Bevorzugt wird die Polarisationsfolie unter Anlegen von Vakuum unter Zuhilfenahme einer Form, vorzugsweise einer Metallform, vorgeformt. Eine Schicht mit polarisierenden Eigenschaften ist beispielsweise in EP 1 965 235 A1, EP 0 217 502 A1, EP 1 674 898 A1, US 2006/0066947 A1,
WO 2005/050265 A1, WO 2009/029198 A1, WO 2009/156784 A1 oder WO 2015/160612 A1 offenbart. In vorstehend genannten Anmeldungen ist die Schicht mit polarisierenden Eigenschaften jeweils Bestandteil einer dort beschriebenen Schichtenfolge. Im Rahmen dieser Erfindung wird vorzugsweise nur die in den genannten Anmeldungen beschriebene Schicht mit polarisierenden Eigenschaften als polarisierende Schicht eingesetzt.

Bevorzugt ist zwischen der Rückfläche des wenigstens einen Dünnglases und der optisch fertig bearbeiteten Vorderfläche des Brillenglas-Halbfertigprodukts bzw. des fertigen Brillenglases nur eine einzige Schicht, ausgewählt aus wenigstens einer farbgebenden Schicht, wenigstens einer photochromen Schicht und wenigstens einer polarisierenden Schicht, vorhanden. Sind mehrere Schichten zwischen der Rückfläche des wenigstens einen Dünnglases und der optisch fertig bearbeiteten Vorderfläche des Brillenglas-Halbfertigprodukts bzw. des fertigen Brillenglases vorhanden, liegen diese in nachstehenden bevorzugten Reihenfolgen von objektseitig nach augenseitig vor:

Dünnglas / photochrome Schicht / polarisierende Schicht / farbgebende Schicht / Brillenglas-Halbfertigprodukt bzw. fertiges Brillenglas oder
Dünnglas / photochrome Schicht / farbgebende Schicht / polarisierende Schicht / Brillenglas-Halbfertigprodukt bzw. fertiges Brillenglas oder
Dünnglas / polarisierende Schicht / farbgebende Schicht / Brillenglas-Halbfertigprodukt bzw. fertiges Brillenglas.

Wird wenigstens eine Kunststofffolie als polymeres Material verwendet, ist die vorstehend beschriebene wenigstens eine farbgebende Schicht, wenigstens eine photochrome Schicht und/oder wenigstens eine polarisierende Schicht bevorzugt auf der Rückfläche des Dünnglases aufgebracht. Umfasst die Rückfläche des Dünnglases mehrere dieser Schichten, ist deren Reihenfolge zwischen Dünnglas und der wenigstens einen Kunststofffolie entsprechend den vorstehend beschriebenen Reihenfolgen zwischen Dünnglas und Brillenglas-Halbfertigprodukt bzw. fertigem Brillenglas.

Besonders bevorzugt ist zwischen der Rückfläche des wenigstens einen Dünnglases und der optisch fertig bearbeiteten Vorderfläche des Brillenglas-Halbfertigprodukts bzw. des fertigen Brillenglases keine Schicht vorhanden.

Die optionale, bevorzugte Verbindung der zweiten fertig bearbeiteten optischen Fläche des Brillenglas-Halbfertigprodukts bzw. des fertigen Brillenglases mit wenigstens einem weiteren Dünnglas erfolgt bevorzugt ebenfalls stoffschlüssig und formschlüssig. Bevorzugt wird hierbei die optisch fertig bearbeitete Rückfläche des Brillenglas-Halbfertigprodukts bzw. des fertigen Brillenglases mit der Vorderfläche des wenigstens einen Dünnglases verbunden. Die optisch fertig bearbeitete Rückfläche des Brillenglas-Halbfertigprodukts bzw. des fertigen Brillenglases und/oder die Vorderfläche des wenigstens einen Dünnglases kann mit wenigstens einer Beschichtung versehen sein. Diese wenigstens eine Beschichtung umfasst bevorzugt eine farbgebende Schicht. Die farbgebende Schicht wurde bereits vorstehend definiert. Bevorzugt umfasst die optisch fertig bearbeitete Rückfläche des Brillenglas-Halbfertigprodukts bzw. des fertigen Brillenglases und/oder die Vorderfläche des wenigstens einen Dünnglases keine Beschichtung. Alternativ zu der Verbindung der optisch fertig bearbeiteten Rückfläche des Brillenglas-Halbfertigprodukts bzw. der Rückfläche des fertigen Brillenglases mit wenigstens einem Dünnglas kann die jeweilige Rückfläche mit wenigstens einer Beschichtung versehen werden. Diese Beschichtung wird bevorzugt aus der Gruppe bestehend aus wenigstens einer Hartlackschicht, wenigstens einer Entspiegelungsschicht, wenigstens einer Antibeschlagschicht, wenigstens einer elektrisch leitfähigen oder elektrisch halbleitenden Schicht und wenigstens einer Clean-Coat-Schicht ausgewählt. Besonders bevorzugt umfasst die Beschichtung wenigstens eine Hartlackschicht, wenigstens eine Entspiegelungsschicht und wenigstens eine Clean-Coat-Schicht, wobei die wenigstens eine Hartlackschicht die dem Substrat am nächsten liegende und die wenigstens eine Clean-Coat-Schicht die dem Substrat am weitesten entfernt liegende Schicht darstellt.

Die Beschichtung der Vorderfläche und/oder der Rückfläche des wenigstens einen Dünnglases kann jeweils mittels eines PVD-Verfahrens, eines Tauchbeschichtungsverfahrens und/oder eines Schleuderbeschichtungsverfahrens erfolgen. Die anschließende Aushärtung der im Schleuderbeschichtungsverfahren und/oder Tauchbeschichtungsverfahren erhaltenen Beschichtung kann entweder thermisch oder strahlungshärtend erfolgen. Bevorzugt erfolgt die Aushärtung dieser Beschichtung strahlungshärtend.

Die Verbindung der jeweils optisch fertig bearbeiteten Fläche des Brillenglas-Halbfertigprodukts bzw. der wenigstens einen fertig bearbeiteten optischen Fläche des fertigen Brillenglases bzw. der wenigstens einen Kunststofffolie jeweils mit dem wenigstens einen Dünnglas erfolgt bevorzugt mittels eines Klebemittels. Das Klebemittel kann hierbei beispielsweise als Primer oder Ausgleichsmaterial für die unterschiedliche Wärmeausdehnung der einzelnen Komponenten dienen. Weiterhin kann, im Fall, dass das Brillenglas-Halbfertigprodukt oder das fertige Brillenglas einen einheitlichen Brechungsindex aufweist, über die Auswahl des Klebemittels eine Angleichung eines gegebenenfalls vorhandenen Brechungsindexunterschieds $\Delta$nD der einzelnen Komponenten zueinander erzielt werden. Vorzugsweise erfolgt hierbei nicht nur die Angleichung des Brechungsindex nD, sondern auch die Angleichung der Abbe-Zahl, so dass die Änderung des Brechungsindex der einzelnen Komponenten über das sichtbare Spektrum hinweg gleich ist. Einsetzbare Klebemittel sind beispielsweise in der DE 10 2012 210 185 A1, der WO 2009/056196 A1 oder der WO 2015/121341 A1 beschrieben. Bevorzugt werden die einzelnen Komponenten mittels eines Klebemittels basierend auf einer aminkatalysierten Thiolhärtung von Epoxidharzen analog WO 2015/121341 A1, insbesondere analog Anspruch 1 der WO 2015/121341 A1, bei einer Temperatur aus einem Bereich von 20°C bis 80°C, bevorzugt aus einem Bereich von 40°C bis 70°C und besonders bevorzugt aus einem Bereich von 45°C bis 65°C, miteinander verbunden.

Zwischen der, der fertig bearbeiteten optischen Fläche des Brillenglas-Halbfabrikats bzw. des fertigen Brillenglases zugewandten Oberfläche des wenigstens einen Dünnglases und der fertig bearbeiteten optischen Fläche kann wenigstens eine Schicht vorhanden sein. Diese wenigstens eine Schicht weist bevorzugt die gleiche Oberflächentopographie wie die jeweils darunter liegende Oberfläche, auf die diese wenigstens eine Schicht aufgebracht wurde, auf. Geringfügige Abweichungen in der Oberflächentopographie der beiden zusammenzufügenden Oberflächen können beispielsweise mittels eines Klebemittels verfüllt werden. Für eine formschlüssige Verbindung der jeweiligen Oberflächen ist es bevorzugt, dass die Krümmungsradien der jeweils miteinander zu verbindenden Komponenten bevorzugt weniger als 1 mm, weiter bevorzugt in einem Bereich von 0,03 mm bis $\leq$ 0,8 mm, besonders bevorzugt in einem Bereich von 0,04 mm bis $\leq$ 0,7 mm und ganz besonders bevorzugt in einem Bereich von 0,05 mm bis $\leq$ 0,6 mm voneinander abweichen. Bevorzugt weisen das wenigstens eine Dünnglas sowie das Brillenglas-Halbfertigprodukt bzw. das fertige Brillenglas vor dem Zusammenfügen mittels eines Klebemittels einen identischen Durchmesser und einen identischen Krümmungsradius auf. Bevorzugt weist die wenigstens eine Kunststofffolie einen Durchmesser auf, welcher ausreichend groß ist, dass die wenigstens eine Kunststofffolie die Vorderfläche des augenseitigen Dünnglases und die Rückfläche des objektseitigen Dünnglases komplett bedeckt. Etwaig überstehende Kunststofffolie wird bevorzugt abgeschnitten. Für den Fall, dass die wenigstens eine Kunststofffolie bereits den gleichen Krümmungsradius wie das hiermit zu verbindende Dünnglas aufweist, weist die wenigstens eine Kunststofffolie bevorzugt den identischen Durchmesser wie das Dünnglas auf.

Umfasst das Substrat wenigstens zwei mineralische Gläser, ist eines der mineralischen Gläser bevorzugt als Dünnglas und das andere mineralische Glas bevorzugt als Brillenglas-Halbfertigprodukt oder fertiges Brillenglas ausgebildet. In Bezug auf Dünngläser und deren optionale vorderflächige und/oder rückflächige Beschichtung gilt das vorstehend Beschriebene. Bevorzugt ist das wenigstens eine Dünnglas mit der optisch fertig bearbeiteten Fläche des Brillenglas-Halbfertigprodukts, vorzugsweise dessen Vorderfläche, bzw. mit wenigstens einer der optisch fertig bearbeiteten Flächen des fertigen Brillenglases, bevorzugt dessen Vorderfläche verbunden. Bevorzugt sind sowohl die Vorderfläche als auch die Rückfläche eines fertigen Brillenglases jeweils mit wenigstens einem Dünnglas verbunden. Weiterhin bevorzugt ist nach Bearbeitung der der optisch fertig bearbeiteten Fläche des Brillenglas-Halbfertigprodukts gegenüberliegenden Fläche auch diese mit wenigstens einem Dünnglas verbunden. Die Verbindung mit wenigstens einem Dünnglas kann durch Ansprengen oder mittels eines Klebemittels, bevorzugt mittels eines Klebemittels, erfolgen. Als Klebemittel können die vorstehend aufgeführten Klebemittel eingesetzt werden. Die Rückfläche des wenigstens einen Dünnglases und/oder die Vorderfläche des Brillenglas-Halbfertigprodukts bzw. die Vorderfläche des fertigen Brillenglases kann vor dem Zusammenfügen mit wenigstens einer Beschichtung versehen werden. Diese Beschichtung kann beispielsweise wenigstens eine polarisierende Schicht und/oder wenigstens eine photochrome Schicht umfassen. Eine polarisierende Schicht und eine photochrome Schicht wurden bereits beschrieben. Auch die Rückfläche des Brillenglas-Halbfertigprodukts bzw. die Rückfläche des fertigen Brillenglases und/oder die Vorderfläche des wenigstens einen Dünnglases kann vor dem Zusammenfügen mit wenigstens einer Beschichtung versehen werden. Diese Beschichtung kann beispielsweise wenigstens eine farbgebende Schicht. Eine farbgebende Schicht wurde ebenfalls bereits vorstehend beschrieben. Ist bei dieser Ausführungsform nur die Vorderfläche oder nur die Rückfläche des Brillenglas-Halbfertigprodukts bzw. des fertigen Brillenglases jeweils mit wenigstens einem Dünnglas verbunden kann die jeweils gegenüberliegende Fläche, sofern optisch fertig bearbeitet, alternativ zu der bereits erwähnten Verbindung mit wenigstens einem Dünnglas wenigstens eine Beschichtung aufweisen. Diese Beschichtung kann wenigstens eine Entspiegelungsschicht, wenigstens eine Antibeschlagsschicht, wenigstens eine elektrisch leitfähige oder elektrisch halbleitende Schicht und/oder wenigstens eine Clean-Coat-Schicht umfassen. Bevorzugt umfasst diese Beschichtung wenigstens Entspiegelungsschicht und wenigstens eine Clean-Coat-Schicht umfassen. Die Clean-Coat-Schicht ist hierbei die am weitesten von der zu beschichtenden Oberfläche entfernt liegende Schicht.

Umfasst oder ist das Substrat wenigstens ein Dünnglas weist dieses bevorzugt eine mittlere Dicke aus einem

Bereich von 10 μm bis 1000 μm, weiter bevorzugt aus einem Bereich von 13 μm bis 760 μm, weiter bevorzugt aus einem Bereich von 16 μm bis 510 μm, besonders bevorzugt aus einem Bereich von 18 μm bis 390 μm und ganz besonders bevorzugt aus einem Bereich von 19 μm bis 230 μm auf. Insbesondere bevorzugt weist das wenigstens eine Dünnglas eine mittlere Dicke aus einem Bereich von 21 μm bis 210 μm auf. Ist sowohl die Vorderfläche als auch die Rückfläche des fertigen Brillenglases mit wenigstens einem Dünnglas verbunden, kann die mittlere Dicke des wenigstens einen objektseitig verbundenen Dünnglases verschieden zu oder gleich der mittleren Dicke des augenseitig verbundenen Dünnglases sein. Bevorzugt ist die mittlere Dicke des wenigstens einen objektseitig verbundenen Dünnglases gleich der mittleren Dicke des augenseitig verbundenen Dünnglases.

Unter der mittleren Dicke des wenigstens einen Dünnglases wird das arithmetische Mittel verstanden. Unterhalb einer mittleren Dicke von 10 μm ist das wenigstens eine Dünnglas mechanisch zu instabil, um mit der fertig bearbeiteten optischen Fläche des Brillenglas-Halbfertigprodukts bzw. um mit wenigstens einer der fertig bearbeiteten optischen Flächen des fertigen Brillenglases verbunden oder beschichtet werden zu können, ohne dass das wenigstens eine Dünnglas zerbricht. Oberhalb einer mittleren Dicke von 1000 μm kann das wenigstens eine Dünnglas zu Substraten führen, welche eine zu große Randdicke oder eine zu große Mittendicke aufweisen würden. Die mittlere Dicke des wenigstens einen Dünnglases wird bevorzugt mit dem Messgerät Filmetrics F10-HC (Firma Filmetrics Inc.) vermessen. Die mittlere Dicke des wenigstens einen Dünnglases wird bevorzugt anhand des wenigstens einen Dünnglases in der Form, wie es tatsächlich zum Einsatz kommt, d.h. so wie das wenigstens eine Dünnglas vor dem Verbinden mit der fertig bearbeiteten optischen Fläche des Brillenglas-Halbfertigprodukts bzw. vor dem Verbinden mit wenigstens einer der fertig bearbeiteten optischen Flächen des fertigen Brillenglases vorliegt, bestimmt. Alternativ kann die mittlere Dicke des wenigstens einen Dünnglases mittels einer rasterelektronenmikroskopischen Aufnahme anhand eines Querschliffs bestimmt werden. Dies kann entweder anhand eines Querschliffs des Dünnglases oder anhand eines Querschliffs des Substrats umfassend wenigstens ein, mit der fertig bearbeiteten optischen Fläche eines Brillenglas-Halbfertigprodukts verbundenes Dünnglas bzw. anhand eines Substrats umfassend wenigstens ein, mit wenigstens einer der fertig bearbeiteten optischen Flächen des fertigen Brillenglases verbundenes Dünnglas, erfolgen. Hierzu wird die Dicke des wenigstens einen Dünnglases an wenigstens 3 Stellen bestimmt und statistisch gemittelt. Bevorzugt erfolgt die Bestimmung der mittleren Dicke des wenigstens einen Dünnglases mittels einer rasterelektronenmikroskopischen Aufnahme anhand eines Querschliffs dieses Substrats.

Die relative Standardabweichung der Dickenverteilung des wenigstens einen Dünnglases liegt bevorzugt bei 0,1% bis 100%, bevorzugt bei 0,2% bis 81%, besonders bevorzugt bei 0,3% bis 66% und ganz besonders bevorzugt bei 0,4% bis 24%. Die relative Standardabweichung in [%] ist dabei der Quotient aus berechneter Standardabweichung und mittlerer Dicke.

Das wenigstens eine Dünnglas weist bevorzugt eine Oberflächenrauigkeit Ra von < 1 nm auf. Weiter bevorzugt liegt die Oberflächenrauigkeit Ra des wenigstens einen Dünnglases in einem Bereich von 0,1 nm bis 0,8 nm, besonders bevorzugt in einem Bereich von 0,3 nm bis 0,7 nm und ganz besonders bevorzugt in einem Bereich von 0,4 nm bis 0,6 nm. Vorstehend genannte Werte für die Oberflächenrauigkeit Ra beziehen sich jeweils auf die Vorderfläche und die Rückfläche des wenigstens einen nicht umgeformten, planen Dünnglases. Nach einer Umformung gelten vorstehend genannte Werte jeweils bevorzugt nur für diejenige Oberfläche des wenigstens einen Dünnglases, welche nicht mit dem zur Umformung verwendeten Formkörper in Kontakt gebracht wurde. In Abhängigkeit vom zur Umformung eingesetzten Formkörper können vorstehend genannte Werte auch für die Oberfläche des wenigstens einen Dünnglases gelten, welche mit dem zur Umformung eingesetzten Formkörper in Kontakt war. Die Oberflächenrauigkeit Ra des wenigstens einen Dünnglases wird bevorzugt mittels Weißlichtinterferometrie, bevorzugt mit dem Gerät NewView 7100 (Firma Zygo Corporation), bestimmt. Weist das wenigstens eine Dünnglas weitere oberflächliche Unebenheiten auf, so kann die flächenmäßige Analyse der jeweiligen Oberfläche weiterhin durch phasenmessende Deflektometrie, bevorzugt mit dem Gerät SpecGage (Firma 3D-Shape GmbH), bestimmt werden.

Das wenigstens eine Dünnglas kann mit unterschiedlichen Oberflächentopographien, beispielsweise plan, sphärisch, asphärisch, asphärisch rotationssymmetrisch, torisch, atorisch, progressiv, als symmetrische Freiformfläche oder als unsymmetrische Freiformfläche, vorliegen. Im Zusammenhang mit der Oberflächentopographie des wenigstens einen Dünnglases wird unter "plan" verstanden, dass das wenigstens eine Dünnglas keine makroskopisch sichtbare Biegung oder Krümmung aufweist. Weist das wenigstens ein Dünnglas eine nicht plane Oberfläche auf, kann eine gewünschte Oberflächentopographie, beispielsweise durch Verformen eines planen Dünnglases auf einer entsprechenden Negativform erreicht werden. Die Oberflächentopographie des wenigstens einen augenseitig angeordneten Dünnglases kann identisch oder verschieden zu der Form des wenigstens einen objektseitig angeordneten Dünnglases sein. Der Krümmungsradius des wenigstens einen Dünnglases liegt bevorzugt in einem Bereich von 10 mm bis unendlich, bevorzugt in einem Bereich von 20 mm bis 1600 mm, weiter bevorzugt in einem Bereich von 35 mm bis 1535 mm, weiter bevorzugt in einem Bereich von 56 mm bis 600 mm, besonders bevorzugt in einem Bereich von 66 mm bis 481 mm und ganz besonders bevorzugt in einem Bereich von 75 mm bis 376 mm. Ein Krümmungsradius des wenigstens einen Dünnglases von unendlich entspricht hierbei einer planen Oberfläche. Bei nicht sphärischen Oberflächen des wenigstens einen Dünnglases beziehen sich die vorstehend angegebenen Krümmungsradien jeweils auf eine angenäherte sphärische Form.

Das wenigstens eine Dünnglas kann auf diversen Glaskompositionen, wie beispielsweise Borosilikatglas, Aluminium-Borosilikatglas oder alkalifreiem Borosilikatglas, basieren. Bevorzugt basiert das wenigstens eine Dünnstglas auf einem Borosilikatglas oder einem Aluminium-Borosilikatglas. Ist sowohl die Vorderfläche als auch die Rückfläche des fertigen Brillenglases mit wenigstens einem Dünnglas verbunden, weist das wenigstens eine, mit der Vorderfläche verbundene Dünnglas bevorzugt die gleiche Glaskomposition wie das wenigstens eine, mit der Rückfläche verbundene Dünnglas auf. Dünngläser sind beispielsweise kommerziell erhältlich unter den Bezeichnungen D 263® T eco, D 263® LA eco, D 263® M, AF 32® eco, SCHOTT AS 87 eco, B 270® i (jeweils Fa. Schott AG) oder Corning Willow Glass oder Corning Gorilla Glass, jeweils Firma Corning Inc. (Fa. Corning Inc.).

Das Substrat kann sowohl auf der Vorderfläche, d.h. der objektseitigen Fläche, welche gemäß DIN EN ISO 13666:2013-10, Absatz 5.8 bestimmungsgemäß in der Brille vom Auge abgewandt liegt, als auch auf der Rückfläche, d.h. der augenseitigen Fläche, welche gemäß DIN EN ISO 13666:2013-10, Absatz 5.9 bestimmungsgemäß in der Brille dem Auge zugewandt liegt, wenigstens eine Schicht umfassen, welche durch Inkontaktbringen mit wenigstens einem Medium ihre Oberflächentopographie verändern kann. Das Substrat kann alternativ nur auf der Vorderfläche oder nur auf der Rückfläche wenigstens eine Schicht umfassen, welche durch Inkontaktbringen mit wenigstens einem Medium ihre Oberflächentopographie verändern kann. Die Veränderung der Oberflächentopographie der wenigstens einen Schicht durch Inkontaktbringen mit wenigstens einem Medium kann teilweise reversibel oder irreversibel sein. Teilweise reversibel meint hierbei, dass sich eine durch Inkontaktbringen mit wenigstens einem Medium erzielte Veränderung der Oberflächentopographie nach Beendigung des Inkontaktbringens weiter verändern kann, aber nicht mehr zur Oberflächentopographie der wenigstens einen Schicht vor dem Inkontaktbringen zurückkehrt. Ist die Veränderung der Oberflächentopographie teilweise reversibel, kann diese teilweise Veränderung beispielsweise durch eine Beschichtung zu einem gewünschten Zeitpunkt der Veränderung "eingefroren" und somit beibehalten werden. Bevorzugt ist die Veränderung der Oberflächentopographie irreversibel. Unter einer irreversiblen Veränderung der Oberflächentopographie ist hierbei zu verstehen, dass eine einmal erzielte veränderte Oberflächentopographie nicht mehr verändert wird und somit weder teilweise reversibel noch reversibel ist. Eine irreversibel veränderte Oberflächentopographie wird durch nachträgliche Bearbeitungsschritte, wie beispielsweise das Beschichten wenigstens einer weiteren Schicht auf die wenigstens eine Schicht, welche durch Inkontaktbringen mit wenigstens einem Medium ihre Oberflächentopographie verändert hat oder das Einarbeiten eines Brillenglases, welches ein Substrat und wenigstens eine Schicht umfasst, welche durch Inkontaktbringen mit wenigstens einem Medium ihre Oberflächentopographie verändert hat, in eine Brillenfassung nicht verändert.

Wenigstens eine der Oberflächen des Substrats kann die wenigstens eine Schicht, welche durch Inkontaktbringen mit wenigstens einem Medium ihre Oberflächentopographie verändern kann, vollflächig oder wenigstens partiell umfassen. Wenigstens eine der Oberflächen des Substrats kann somit vollflächig mit dieser wenigstens einen Schicht belegt oder beschichtet sein oder wenigstens ein Teilbereich wenigstens einer der Oberflächen des Substrats kann somit mit dieser wenigstens einen Schicht belegt oder beschichtet sein. Ist nur wenigstens ein Teilbereich wenigstens einer der Oberflächen des Substrats mit dieser wenigstens einen Schicht belegt oder beschichtet, kann dieser wenigstens eine Teilbereich wenigstens an einen weiteren Teilbereich angrenzen oder zu wenigstens einem weiteren Teilbereich auf derselben Oberfläche des Substrats benachbart sein. Wenigstens zwei Teilbereiche auf derselben Oberfläche des Substrats sind dann aneinander angrenzend, wenn diese wenigstens zwei Teilbereiche wenigstens einen gemeinsamen Berührungspunkt aufweisen. Wenigstens zwei Teilbereiche auf derselben Oberfläche des Substrats sind dann benachbart, wenn diese wenigstens zwei Teilbereiche keinen gemeinsamen Berührungspunkt aufweisen.

Die wenigstens eine Oberfläche des Substrats, welche die wenigstens eine Schicht, welche durch Inkontaktbringen mit wenigstens einem Medium ihre Oberflächentopographie verändern kann, umfasst, kann zusätzlich zu dieser auf derselben Oberfläche des Substrats in der Schichtenfolge substratzugewandt wenigstens eine weitere, von dieser verschiedene Schicht, umfassen.

Die wenigstens eine Oberfläche des Substrats, welche die wenigstens eine Schicht, welche durch Inkontaktbringen mit wenigstens einem Medium ihre Oberflächentopographie verändern kann, umfasst, kann zusätzlich zu dieser auf derselben Oberfläche des Substrats in der Schichtenfolge substratabgewandt wenigstens eine weitere, von dieser verschiedene und/oder zu dieser identische Schicht, umfassen.

Die Oberfläche der wenigstens einen Schicht, welche durch Inkontaktbringen mit wenigstens einem Medium ihre Oberflächentopgraphie verändern kann, kann sphärisch, asphärisch, torisch, atorisch, plan oder als Freiformfläche ausgestaltet sein.

Bei der Veränderung der Oberflächentopographie der wenigstens einen Schicht durch Inkontaktbringen mit wenigstens einem Medium handelt es sich bevorzugt um wenigstens eine Erhebung der Oberfläche dieser wenigstens einen Schicht, welche durch Inkontaktbringen mit wenigstens einem Medium ihre Oberflächentopographie verändern kann, in Bezug auf die Oberfläche dieser wenigstens einen Schicht vor dem Inkontaktbringen mit dem wenigstens einen Medium. Bei dieser wenigstens einen Erhebung handelt es sich bevorzugt um wenigstens eine positive Veränderung der Oberflächentopographie in Bezug auf die Oberflächentopographie vor dem Inkontaktbringen der Oberfläche der wenigstens einen Schicht mit wenigstens einem Medium. Unabhängig davon, ob die Vorderfläche oder die Rückfläche des Substrats wenigstens eine Schicht umfasst, welche durch Inkontaktbringen mit wenigstens einem Medium ihre Oberflächentopographie verändern kann, ist die wenigstens eine positive Veränderung der Oberflächentopographie in Bezug auf die Oberflächentopographie vor dem Inkontaktbringen mit wenigstens einem Medium bevorzugt substratabgewandt.

Bei der Veränderung der Oberflächentopographie der wenigstens einen Schicht durch Inkontaktbringen mit wenigstens einem Medium handelt es sich bevorzugt um einen Diffusionsvorgang. Bei diesem Diffusionsvorgang sind bevorzugt das erste und zweite Ficksche Gesetz zu berücksichtigen.

Die Oberflächentopographie der wenigstens einen Schicht kann durch Inkontaktbringen mit wenigstens einem Medium lokal oder vollflächig über die gesamte Oberfläche der wenigstens einen Schicht verändert werden. Wenigstens eine der Oberflächen des Substrats kann diese wenigstens eine Schicht, welche durch Inkontaktbringen mit wenigstens einem Medium ihre Oberflächentopographie verändern kann, vollflächig oder partiell umfassen.

Sowohl bei wenigstens einer lokalen als auch bei einer vollflächigen Veränderung der Oberflächentopographie kann die bevorzugt positiv veränderte Oberfläche der wenigstens einen Schicht wenigstens zwei zusammenhängende und/oder wenigstens zwei nicht zusammenhängende Maxima umfassen. Wenigstens zwei Maxima sind bevorzugt dann zusammenhängend, wenn es mindestens einen Pfad von dem einen Maximum zu dem anderen Maximum der wenigstens zwei Maxima gibt, auf welchem die nicht veränderte Oberfläche der wenigstens einen Schicht nicht berührt wird. Wenigstens zwei Maxima sind bevorzugt dann nicht zusammenhängend, wenn es mindestens einen Pfad von dem einen Maximum zu dem anderen Maximum der wenigstens zwei Maxima gibt, auf welchem die nicht veränderte Oberfläche der wenigstens einen Schicht berührt wird.

Bei wenigstens einer lokalen Veränderung der Oberflächentopographie der wenigstens einen Schicht kann deren maximale laterale Ausdehnung bevorzugt in einem Bereich von 5 μm bis 20 mm, weiter bevorzugt in einem Bereich von 10 μm bis 10 mm, weiter bevorzugt in einem Bereich von 20 μm bis 5 mm, besonders bevorzugt in einem Bereich von 50 μm bis 4 mm und ganz besonders bevorzugt in einem Bereich von 70 μm bis 3 mm liegen. Die maximale laterale Ausdehnung einer lokal veränderten Oberfläche ist der maximale Abstand zwischen den beiden maximal beabstandeten Schnittpunkten der veränderten Oberfläche mit der nicht veränderten Oberfläche der wenigstens einen Schicht. Bei einer nicht planen Oberfläche der wenigstens einen Schicht ist der Abstand zwischen den beiden maximal beabstandeten Schnittpunkten der veränderten Oberfläche mit der nicht veränderten Oberfläche der wenigstens einen Schicht nicht identisch der Oberfläche der wenigstens einen Schicht. Die maximale laterale Ausdehnung wird bevorzugt mittels eines auf der Weißlichtinterferometrie basierenden optischen Profilometers bestimmt. Als optisches Profilometer wird bevorzugt das optische Profilometer NewView 7100 der Firma Zygo Corporation eingesetzt.

Bei wenigstens einer lokalen Veränderung der Oberflächentopographie oder bei einer vollflächigen Veränderung der Oberflächentopographie der wenigstens einen Schicht kann die Veränderung der Oberfläche in Bezug auf die nicht veränderte wenigstens eine Schicht bevorzugt in einem Bereich von 1 nm bis 10 μm, weiter bevorzugt in einem Bereich von 2 nm bis 9 μm, weiter bevorzugt in einem Bereich von 3 nm bis 8 μm, besonders bevorzugt in einem Bereich von 4 nm bis 7 μm und ganz besonders bevorzugt in einem Bereich von 5 nm bis 6 μm liegen. Umfasst die veränderte Oberfläche wenigstens zwei zusammenhängende und/oder wenigstens zwei nicht zusammenhängende Maxima gelten vorstehend genannte Bereiche für jedes dieser wenigstens zwei Maxima. Die Veränderung der Oberflächentopographie ist bevorzugt die Höhe des Maximums in Bezug zu dem Abstand zwischen den beiden maximal beabstandeten Schnittpunkten der veränderten Oberfläche mit der nicht veränderten Oberfläche der wenigstens einen Schicht.

Die Veränderung der Oberflächentopographie in Bezug auf die nicht veränderte Oberfläche der wenigstens einen Schicht wird ebenfalls bevorzugt mittels eines auf der Weißlichtinterferometrie basierenden optischen Profilometers bestimmt.

Die lokale Veränderung der Oberflächentopographie der wenigstens einen Schicht kann beispielsweise eine optische Wirkung aus einem Bereich von 0,2 dpt bis 50 dpt, bevorzugt aus einem Bereich von 0,25 dpt bis 40 dpt, weiter bevorzugt aus einem Bereich von 0,3 dpt bis 30 dpt, besonders bevorzugt aus einem Bereich von 0,4 dpt bis 20 dpt und ganz besonders bevorzugt aus einem Bereich von 0,5 dpt bis 10 dpt aufweisen. Jede lokale Veränderung der Oberflächentopographie derselben Oberfläche der wenigstens einen Schicht kann hierbei eine identische oder eine voneinander verschiedene optische Wirkung aufweisen. Umfasst die lokale Veränderung der Oberflächentopographie nur ein Maximum umfasst, wird deren optische Wirkung bevorzugt gemäß nachstehenden Formeln berechnet:

$$R = \frac{c^2}{8h} + \frac{h}{2}$$

mit R = Radius, c = Kreissehne, h = Segmenthöhe und

$$\frac{1}{f} = (n-1)\left[\frac{1}{R1} - \frac{1}{R2} + \frac{(n-1)*d}{(n*R1*R2)}\right]$$

mit f = Brennweite, n = Brechungsindex der wenigstens einen Schicht, deren Oberflächentopgraphie verändert werden kann, R1 = Radius der veränderten Oberfläche, R2 = Radius der unveränderten Oberfläche, d = Abstand zwischen der veränderten Oberfläche zu der unveränderten Oberfläche.

Umfasst sowohl die Vorderfläche als auch die Rückfläche des Substrats jeweils wenigstens eine Schicht, welche durch Inkontaktbringen mit wenigstens einem Medium ihre Oberflächentopographie verändern kann, kann die Veränderung der Oberflächentopographie der Vorderfläche gleich oder verschieden zu der Veränderung der Oberflächentopographie der Rückfläche sein. Bevorzugt ist in diesem Fall die Veränderung der Oberflächentopographie der Vorderfläche verschieden zu der Veränderung der Oberflächentopographie der Rückfläche.

Ist wenigstens eine der Oberflächen des Substrats vollflächig mit wenigstens einer Schicht, welche durch Inkontaktbringen mit wenigstens einem Medium ihre Oberflächentopographie verändern kann, belegt oder beschichtet, kann die Oberflächentopographie dieser Schicht lokal verändert werden. Diese wenigstens eine lokale Veränderung der Oberflächentopographie der wenigstens einen Schicht kann dadurch erzeugt werden, dass der wenigstens eine Bereich der Oberfläche der wenigstens einen Schicht, dessen Oberflächentopographie nicht verändert werden soll, maskiert wird und nur der wenigstens eine Bereich der Oberfläche, welcher eine Veränderung der Oberflächentopographie erfahren soll, mit dem wenigstens einen Medium in Kontakt gebracht wird. Zur Maskierung des wenigstens einen Bereichs der Oberfläche der wenigstens einen Schicht, dessen Oberflächentopographie nicht verändert werden soll, können sämtliche Maskierungsmittel verwendet werden, welche bevorzugt

- eine gute Haftung an dieser Oberfläche aufweisen,
- Bereiche oder Aussparungen für den wenigstens einen Bereich der Oberfläche der wenigstens einen Schicht umfassen können, welcher eine Veränderung der Oberflächentopograpie erfahren soll,
- durch Inkontaktbringen mit dem wenigstens einen Medium für die Zeit des Inkontaktbringens ihre Funktion als Maskierungsmittel nicht verlieren und
- welche nach Inkontaktbringen mit dem wenigstens einen Medium rückstandsfrei entfernt werden können.

Bei den Bereichen oder Aussparungen des Maskierungsmittels handelt es sich bevorzugt um wenigstens einen Bereich oder wenigstens eine Aussparung.

Das Maskierungsmittel kann beispielsweise wenigstens einen Haftkleber, wenigstens ein Klebemittel, wenigstens eine Beschichtung, wenigstens einen Fotolack oder wenigstens eine Folie umfassen. Die Bereiche oder Aussparungen im Maskierungsmittel, für welche der wenigstens eine Bereich der Oberfläche der wenigstens einen Schicht eine Veränderung der Oberflächentopographie erfahren soll, können in Abhängigkeit vom Maskierungsmittel auf unterschiedliche Weise hergestellt werden. Wird wenigstens ein Haftkleber oder wenigstens eine Folie als Maskierungsmittel eingesetzt, können diese Bereiche oder Aussparungen beispielsweise mittels eines Laserstrahls erzeugt werden. Wird wenigstens ein Haftkleber oder eine Folie als Maskierungsmittel eingesetzt, werden diese Bereiche oder Aussparungen bevorzugt mittels eines Laserstrahls vor Applikation der wenigstens einen Folie auf der Oberfläche der wenigstens einen Schicht erzeugt. Bei der Folie kann es sich beispielsweise um eine Metallfolie oder um eine Kunststofffolie handeln, welche gegebenenfalls wiederverwendet werden kann. Wird wenigstens ein Klebemittel als Maskierungsmittel eingesetzt, wird der wenigstens eine Bereich der Oberfläche der wenigstens einen Schicht, welche durch Inkontaktbringen mit dem wenigstens einen Medium keine Veränderung der Oberflächentopographie erfahren soll bevorzugt mittels eines Druckverfahrens, besonders bevorzugt mittels eines Inkjet-Verfahrens mit diesem wenigstens Klebemittel belegt. Wird wenigstens eine Beschichtung als Maskierungsmittel eingesetzt, können diese Bereiche oder Aussparungen beispielsweise mittels eines Lift-Off-Verfahrens erzeugt werden. Hierzu wird beispielsweise das Negativ des Maskierungsmittels, also der wenigstens eine Bereich der Oberfläche der wenigstens einen Schicht, welche eine Veränderung der Oberflächentopographie erfahren soll, mittels eines Druckverfahrens beispielsweise auf diese wenigstens eine Oberfläche aufgebracht, mit wenigstens einer weiteren Schicht, beispielsweise einer Metallschicht, belegt und die als Negativ aufgedruckten Bereiche vor dem Inkontaktbringen mit dem wenigstens einen Medium entfernt. Die als Negativ aufgedruckten Bereiche können beispielsweise wenigstens ein Wachs umfassen oder daraus bestehen. Alternativ kann der wenigstens eine Bereich der Oberfläche der wenigstens einen Schicht, welcher durch Inkontaktbringen mit dem wenigstens einen Medium keine Veränderung der Oberflächentopographie erfahren soll, beispielsweise mittels eines Druckverfahrens, bevorzugt mittels eines Inkjet-Verfahrens, mit wenigstens einer weiteren Schicht, beispielsweise wenigstens einer Primer-Lackschicht und wenigstens einer Hartlackschicht oder wenigstens einer Hartlackschicht, belegt werden. Als Primer-Lackschicht wird bevorzugt eine Beschichtungszusammensetzung umfassend

i) wenigstens eine wässrige aliphatische, cycloaliphatische, aromatische oder heteroaromatische Polyurethandispersion, wenigstens eine wässrige aliphatische, cycloaliphatische, aromatische oder heteroaromatische Polyharnstoffdispersion, wenigstens eine wässrige aliphatische, cycloaliphatische, aromatische oder heteroaromatische Polyurethan-Polyharnstoffdispersion und/oder wenigstens eine wässrige aliphatische, cycloaliphatische, aromatische oder heteroaromatische Polyesterdispersion, besonders bevorzugt wenigstens eine wässrige aliphatische Polyurethandispersion oder wenigstens eine wässrige aliphatische Polyesterdispersion und ganz besonders bevorzugt wenigstens eine wässrige aliphatische Polyurethandispersion,

ii) wenigstens ein Lösungsmittel sowie

iii) optional wenigstens ein Additiv

eingesetzt.

Als Hartlackschicht wird bevorzugt eine Schicht eingesetzt, zu deren Herstellung eine Zusammensetzung gemäß EP 2 578 649 A1, insbesondere gemäß EP 2 578 649 A1, Anspruch 1, eingesetzt wird. Gemäß EP 2 578 649 A1, Anspruch 1, umfasst diese Zusammensetzung

ein Silanderivat der Formel (I) Si(OR1)(OR2)(OR3)(OR4), worin R1, R2, R3 und R4, die gleich oder unterschiedlich sein können, ausgewählt werden aus Alkyl, Acyl, Alkylenacyl, Cycloalkyl, Aryl oder Alkylenaryl, die gegebenenfalls substituiert sein können, und/oder ein Hydrolyse- und/ader Kondensationsprodukt des Silanderivats der Formel (I),

ein Silanderivat der Formel (II) R6R73-nSi(OR5)n, worin R5 eine unsubstituierte oder substituierte Akyl-, Acyl-, Alkylenacyl-, Cycloalkyl-, Aryl- oder Alkylenarylgruppe ist, R6 ein organischer Rest ist, der eine Epoxidgruppe enthält, R7 eine unsubstituierte oder substituierte Alkyl-, Cycloalkyl-, Aryl- oder Alkylenarylgruppe ist, n 2 oder 3 ist, und/oder ein Hydrolyse- und/oder ein Kondensationsprodukt des Silanderivats der Formel (II),

ein kolloidales anorganisches Oxid, Fluorid oder Oxyfluorid,

eine Epoxidverbindung, die mindestens zwei Epoxidgruppen aufweist,

ein Katalysatorsystem, umfassend eine Lewis-Säure und ein thermolatentes Lewis-Säure-Base-Adduct. Wird wenigstens ein Fotolack als Maskierungsmittel eingesetzt, können diese Bereiche oder Aussparungen beispielsweise durch Bestrahlung mit UV-Licht erzeugt werden.

Umfasst das wenigstens eine Maskierungsmittel wenigstens einen Haftkleber, wenigstens einen Fotolack oder wenigstens eine Folie, wird das wenigstens eine Maskierungsmittel bevorzugt nach Inkontaktbringen mit dem wenigstens einen Medium entfernt. Umfasst das wenigstens eine Maskierungsmittel wenigstens ein Klebemittel, wird das wenigstens eine Klebemittel bevorzugt nach Inkontakbringen mit dem wenigstens einen Medium nicht entfernt. Stattdessen dient das wenigstens eine Klebemittel nach Entfernen des wenigstens einen Mediums bevorzugt zur Verbindung mit wenigstens einer weiteren Komponente, beispielsweise zur Verbindung mit wenigstens einem Dünnglas. Dünngläser wurden in Bezug auf ihre mittlere Dicke, ihre Oberflächenrauigkeit, ihre Glaskomposition, ihren Krümmungsradius und ihre Oberflächentopographie vorstehend im Zusammenhang mit einsetzbaren Substraten bereits beschrieben.

Beim Inkontaktbringen mit dem wenigstens einen Medium kann sowohl das Maskierungsmittel als auch mittels der Bereiche oder Aussparungen des Maskierungsmittel der wenigstens eine Bereich der Oberfläche der wenigstens einen Schicht, welche wenigstens eine Veränderung der Oberflächentopographie erfahren soll, in Kontakt mit diesem gebracht. Alternativ kann auch mittels der Bereiche oder Aussparungen des Maskierungsmittels nur der wenigstens eine Bereich der Oberfläche der wenigstens einen Schicht, welcher wenigstens eine Veränderung der Oberflächentopographie erfahren soll, mit dem wenigstens einen Medium in Kontakt gebracht werden. Umfasst die wenigstens eine Schicht mittels der Bereiche oder Aussparungen des Maskierungsmittels wenigstens zwei Bereiche der Oberfläche, welche wenigstens eine Veränderung der Oberflächentopographie erfahren sollen, kann der eine Bereich der Oberfläche mit dem wenigstens einen identischen Medium wie der andere Bereich der Oberfläche oder mit wenigstens einem von diesem verschiedenen Medium in Kontakt gebracht werden. Hierbei kann das wenigstens eine Medium identisch in Bezug auf die chemische Zusammensetzung, aber verschieden in Bezug auf dessen Konzentration oder in Bezug die auf dem zu verändernden Bereich der Oberfläche aufzubringende Menge sein. Bereiche oder Aussparungen des Maskierungsmittels identischer Form und identischer Größe können durch die Variation des wenigstens einen Mediums, mit welchem die zu veränderte Oberfläche der wenigstens einen Schicht in Kontakt gebracht wird, eine unterschiedliche Veränderung der Oberflächentopographie der Oberfläche der wenigstens einen Schicht hervorrufen. Soll mittels der Bereiche oder Aussparungen des Maskierungsmittels nur der wenigstens eine Bereich der Oberfläche der wenigstens einen Schicht, welcher wenigstens eine Veränderung der Oberflächentopographie erfahren soll, mit dem wenigstens einen Medium in Kontakt gebracht werden, erfolgt dieses Inkontaktbringen bevorzugt mittels eines Druckverfahrens, besonders bevorzugt mittels eines Inkjet-Verfahrens.

Bevorzugt werden beim Inkontaktbringen mit dem wenigstens einen Medium sowohl das Maskierungsmittel als auch mittels der Bereiche oder Aussparungen des Maskierungsmittel diejenigen Bereiche der Oberfläche der wenigstens einen Schicht, welche wenigstens eine Veränderung der Oberflächentopographie erfahren sollen, in Kontakt mit diesem gebracht.

Umfasst das wenigstens eine Maskierungsmittel wenigstens eine Beschichtung kann diese Beschichtung oder Schicht von der wenigstens einen Schicht, welche durch Inkontaktbringen mit dem wenigstens einen Medium ihre Oberflächentopographie verändern kann, identisch oder verschieden sein. Umfasst das Maskierungsmittel wenigstens eine Beschichtung, welche identisch zu der wenigstens einen Schicht ist, welche durch Inkontaktbringen mit wenigstens einem Medium ihre Oberflächentopographie verändern kann, kann sowohl die wenigstens Schicht als auch das Maskierungsmittel selbst eine Veränderung der Oberflächentopographie. Unter einer identischen Beschichtung wird hierbei eine Beschichtung verstanden, welche in Bezug die Eigenschaft durch Inkontaktbringen mit wenigstens einem Medium ihre Oberflächentopographie verändern zu können, identisch ist. Das wenigstens eine Maskierungsmittel kann somit wenigstens eine zu der wenigstens einen Schicht, welche ihre Oberflächentopographie verändern kann identische Beschichtung umfassen, welche beispielsweise in Bezug auf ihre chemische Zusammensetzung verschieden zu dieser ist, aber ebenfalls die Eigenschaft aufweist, durch Inkontaktbringen mit wenigstens einem Medium die Oberflächentopographie verändern zu können. Beispielsweise kann es sich bei der wenigstens einen Schicht, die durch Inkontaktbringen mit wenigstens einem Medium ihre Oberflächentopographie verändern kann, um wenigstens eine photochrome Schicht ohne Farbmittel und bei der Beschichtung des Maskierungsmittel um wenigstens eine photochrome Schicht mit Farbmittel handeln, welche ebenfalls durch Inkontaktbringen mit wenigstens einem Medium ihre Oberflächentopographie verändern kann. Auch kann es sich bei der wenigstens einen Schicht, welche durch Inkontaktbringen mit wenigstens einem Medium ihre Oberflächentopographie verändern kann, um wenigstens eine photochrome Schicht mit wenigstens einem Farbmittel und bei der Beschichtung des Maskierungsmittels um wenigstens eine photochrome Schicht mit wenigstens einem hiervon verschiedenen Farbmittel handeln, welche ebenfalls durch Inkontaktbringen mit wenigstens einem Medium ihre Oberflächentopographie verändern kann. Das wenigstens eine Medium kann hierbei jeweils identisch oder verschieden voneinander sein. Soll das wenigstens eine Beschichtung umfassende Maskierungsmittel und die wenigstens eine identische Schicht, deren Oberflächentopographie verändert werden soll, mit wenigstens einem voneinander verschiedenen Medium in Kontakt gebracht werden, erfolgt dies bevorzugt mittels eines Druckverfahrens, bevorzugt mittels eines Inkjet-Verfahrens. Umfasst das wenigstens eine Maskierungsmittel wenigstens eine Beschichtung kann diese nach dem Inkontaktbringen mit dem wenigstens einen Medium entfernt werden oder nicht. Umfasst das wenigstens eine Maskierungsmittel wenigstens eine Beschichtung, welche nach vorstehender Definition identisch der wenigstens einen Schicht, deren Oberflächentopographie verändert werden soll, ist, wird das wenigstens eine Maskierungsmittel nach Inkontaktbringen mit dem wenigstens einen Medium bevorzugt nicht entfernt. Umfasst das wenigstens eine Maskierungsmittel wenigstens eine Beschichtung, welche gemäß vorstehender Definition nicht identisch der wenigstens einen Schicht, deren Oberflächentopographie verändert werden soll, ist, welche also keine Veränderung der Oberflächentopographie durch Inkontaktbringen mit wenigstens einem Medium erfährt, kann dieses wenigstens eine Maskierungsmittel nach Inkontaktbringen mit wenigstens einem Medium entfernt werden oder nicht. Umfasst das wenigstens eine Maskierungsmittel beispielsweise wenigstens eine Hartlackschicht, zu deren Herstellung besonders bevorzugt eine Zusammensetzung gemäß EP 2 578 649 A1, insbesondere gemäß EP 2 578 649 A1, Anspruch 1, eingesetzt wird, kann nach Veränderung der Oberflächentopographie der wenigstens einen Schicht und Entfernen des wenigstens einen Mediums diese Beschichtung auf der wenigstens einen Schicht verbleiben oder wieder von dieser entfernt werden. Umfasst das wenigstens eine Maskierungsmittel wenigstens eine vorstehend beschriebene Primer-Lackschicht und wenigstens eine vorstehend beschriebene Hartlackschicht, können diese beiden Schichten nach Veränderung der Oberflächentopographie der wenigstens einen Schicht und nach Entfernen des wenigstens einen Mediums auf dieser wenigstens einen Schicht verbleiben. Dies ist insbesondere dann von Vorteil, wenn die wenigstens eine Schicht substratabgewandt ohnehin mit wenigstens einer Beschichtung, bevorzugt wenigstens einer Hartlackschicht oder wenigstens einer Primer-Lackschicht und wenigstens einer Hartlackschicht beschichtet werden soll. Die weitere mögliche Beschichtung der wenigstens einen Schicht nach Veränderung von deren Oberflächentopographie und nach Entfernen des wenigstens einen Mediums wird nachstehend noch detailliert beschrieben. Vorab sei jedoch erwähnt, dass sofern die wenigstens eine weitere Beschichtung mit der Schichtdicke C sowohl auf das wenigstens eine Maskierungsmittel mit der Schichtdicke M und die veränderte Oberfläche der wenigstens einen Schicht mit maximalem Abstand L zur unveränderten Oberfläche aufgebracht wird, für $C > 2(M-L)$ keine optische Wirkung der veränderten Oberfläche zu beobachten ist, unabhängig vom Brechungsindex der wenigstens einen Schicht, deren Oberflächentopographie verändert wurde und unabhängig vom Brechungsindex der wenigstens einen weiteren Beschichtung. Sofern die weitere Beschichtung mit der Schichtdicke C sowohl auf das wenigstens eine Maskierungsmittel mit der Schichtdicke M und die veränderte Oberfläche der wenigstens einen Schicht mit maximalem Abstand L zur unveränderten Oberfläche aufgebracht wird, ist für $C < 2(M-L)$ eine optische Wirkung der veränderten Oberfläche abhängig vom Brechungsindex der wenigstens einen Schicht, deren Oberflächentopographie verändert wurde und abhängig vom Brechungsindex der wenigstens einen weiteren Beschichtung zu beobachten. Die Bereiche oder Aussparungen des Maskierungsmittels, in welchen die wenigstens eine Schicht durch Inkontaktbringen mit dem wenigstens einen Medium ihre Oberflächentopographie verändern soll, können sich an jeder beliebigen Stelle des Maskierungsmittels befinden. Die Bereiche oder Aussparungen des Maskierungsmittels können des Weiteren jede beliebige Form aufweisen. Beispielsweise können diese Bereiche oder Aussparungen des Maskierungsmittels kreisförmig, oval, linienförmig, dreieckig, viereckig, fünfeckig oder sechseckig sein. Vorstehend genannte Bereiche oder Aussparungen können weiterhin über ihre komplette Fläche als jeweilige Aussparung vorliegen oder die jeweilige Aussparung wiederum kann einen Bereich ohne Aussparung umfassen. Bevorzugt handelt es sich bei den Bereichen oder Aussparungen des Maskierungsmittels um wenigstens einen Kreis oder wenigstens eine Linie. Die Bereiche oder Aussparungen des Maskierungsmittels können weiterhin jede beliebige Fläche umfassen. Die Bereiche oder Aussparungen können beispielsweise eine Fläche aus einem Bereich von 0,03 mm$^2$ bis 60,8 mm$^2$, bevorzugt aus einem Bereich von 0,1 mm$^2$ bis 50,2 mm$^2$, weiter bevorzugt aus einem Bereich von 0,3 mm$^2$ bis 28,3 mm$^2$, besonders bevorzugt aus einem Bereich von 0,5 mm$^2$ bis 12,6 mm$^2$ und ganz besonders bevorzugt aus einem Bereich von 0,7 mm$^2$ bis 2,5 mm$^2$ umfassen.

Die Bereiche oder Aussparungen eines Maskierungsmittels können eine identische Form und/oder eine identische Fläche aufweisen. Alternativ können wenigstens zwei dieser Bereiche oder Aussparungen eines Maskierungsmittels eine voneinander verschiedene Form aufweisen. Des Weiteren können wenigstens zwei dieser Bereiche oder Aussparungen eines Maskierungsmittels eine identische Form, aber eine voneinander verschiedene Fläche aufweisen. Auch können wenigstens zwei dieser Bereiche oder Aussparungen eines Maskierungsmittel eine identische Fläche, aber eine voneinander verschiedene Form aufweisen. Weiterhin alternativ können wenigstens zwei Bereiche oder Aussparungen eines Maskierungsmittels eine voneinander verschiedene Form und eine voneinander verschiedene Fläche aufweisen. Neben den vorstehend genannten Variationsmöglichkeiten, welche einen Einfluss auf die Veränderung der Oberflächentopographie der wenigstens einen Schicht nehmen können, ist weiterhin die Schichtdicke der wenigstens einen Schicht, deren Oberfläche ihre Oberflächentopographie durch Inkontaktbringen mit wenigstens einem Medium verändern kann, zu nennen. Bei einer vollflächigen Belegung des Substrats mit der wenigstens einen Schicht kann diese über die komplette Fläche die gleiche Schichtdicke oder eine voneinander verschiedene Schichtdicke aufweisen. Soll die Schichtdicke der wenigstens einen Schicht über die komplette Oberfläche des Substrats in definierter Weise variieren, wird die wenigstens eine Schicht bevorzugt mittels eines Druckverfahrens, besonders bevorzugt mittels eines Inkjet-Verfahrens, aufgebracht. Eine unterschiedliche Schichtdicke der wenigstens einen Schicht an wenigstens zwei unterschiedlichen Stellen bietet eine unterschiedliche Ausgangsbasis für die Veränderung der Oberflächentopographie der wenigstens einen Schicht. Ein weiterer Parameter, welcher einen Einfluss auf die Veränderung der Oberflächentopographie der wenigstens einen Schicht nehmen kann ist die chemische Zusammensetzung der wenigstens einen Schicht selbst. Die chemische Zusammensetzung der wenigstens einen Schicht, welche vollflächig auf wenigstens einer Oberfläche des Substrats vorliegt, kann über die komplette Oberfläche identische oder verschieden voneinander sein. Weist die wenigstens eine Schicht nicht an jeder Stelle die identische chemische Zusammensetzung auf, wird dies bevorzugt mittels eines Druckverfahrens, besonders bevorzugt mittels eines Inkjet-Verfahrens realisiert.

Ist wenigstens eine der Oberflächen des Substrats vollflächig mit wenigstens einer Schicht, welche durch Inkontaktbringen mit wenigstens einem Medium ihre Oberflächentopographie verändern kann, belegt oder beschichtet, kann wenigstens eine lokale Veränderung der Oberflächentopographie dieser wenigstens einen Schicht alternativ oder zusätzlich zu der vorstehend beschriebenen Maskierung dadurch erzeugt werden, dass die wenigstens eine Schicht nur an derjenigen wenigstens einen Stelle oder in denjenigem wenigstens einen Bereich, an welcher oder in welchem die wenigstens eine lokale Veränderung der Oberflächentopographie erfolgen soll, mit dem wenigstens einen Medium in Kontakt gebracht wird. Dieses gezielte Inkontaktbringen der wenigstens einen Schicht mit dem wenigstens einen Medium erfolgt bevorzugt durch Aufbringen des wenigstens einen Mediums auf der Oberfläche der wenigstens einen Schicht. Bevorzugt erfolgt das Aufbringen des wenigstens einen Mediums mittels eines Druckverfahrens, besonders bevorzugt mittels eines Inkjet-Verfahrens. In Abhängigkeit von beispielsweise der Konzentration des wenigstens einen Mediums und/oder der Anzahl der Volumenelemente, welche mittels eines Inkjet-Verfahrens übereinander auf derselben Stelle oder auf demselben Bereich der Oberfläche der wenigstens einen Schicht aufgebracht werden, kann die Veränderung der Oberflächentopographie variieren. Somit ist es möglich, zum einen durch Auswahl der Stelle oder des Bereichs der Oberfläche die Oberflächentopographie der wenigstens einen Schicht gezielt zu verändern. Zum anderen kann durch die Konzentration des wenigstens einen Mediums und/oder die Anzahl der bevorzugt mittels eines Inkjet-Verfahrens übereinander aufgebrachten Volumenelemente des wenigstens einen Mediums die Veränderung der Oberflächentopographie gezielt beeinflusst werden. Die lokale Veränderung der Oberflächentopographie der Oberfläche der wenigstens einen Schicht kann weiterhin durch die Auswahl des wenigstens einen Mediums, welches identisch oder verschieden zueinander sein kann, beeinflusst werden. Das wenigstens eine Medium ist bevorzugt identisch in Bezug auf die chemische Zusammensetzung, kann aber eine unterschiedliche Konzentration aufweisen.

Ist wenigstens eine der Oberflächen des Substrats vollflächig mit wenigstens einer Schicht, welche durch Inkontaktbringen mit wenigstens einem Medium ihre Oberflächentopographie verändern kann, belegt oder beschichtet, kann die Oberflächentopographie dieser wenigstens einen Schicht vollflächig verändert werden. Umfassen sowohl die Vorderfläche als auch die Rückfläche des Substrats jeweils vollflächig wenigstens eine Schicht, welche durch Inkontaktbringen mit wenigstens einem Medium jeweils ihre Oberflächentopographie verändern kann, kann diese Veränderung der Oberflächentopographie der wenigstens einen augenseitigen Schicht identisch oder verschieden zu der Veränderung der Oberflächentopographie der wenigstens einen objektseitigen Schicht sein. Umfassen sowohl die Vorderfläche als auch die Rückfläche des Substrats jeweils vollflächig wenigstens eine Schicht, welche durch Inkontaktbringen mit wenigstens einem Medium jeweils ihre Oberflächentopographie verändern kann, ist bevorzugt die jeweilige Veränderung der Oberflächentopographie verschieden zueinander. Hierbei kann die Oberflächentopographie der wenigstens einen, vollflächig auf wenigstens einer der Oberflächen vorliegenden Schicht eine vollflächige Veränderung der Oberflächentopographie erfahren, welche verschieden zu der vollflächigen Veränderung der Oberflächentopographie der wenigstens einen, vollflächig auf der jeweils gegenüberliegenden Oberfläche vorliegenden Schicht ist. Alternativ hierzu kann die Oberflächentopographie der wenigstens einen, vollflächig auf wenigstens einer der Oberflächen vorliegenden Schicht eine vollflächige Veränderung der Oberflächentopographie und die wenigstens eine, vollflächig auf der gegenüberliegenden Oberfläche vorliegende Schicht keine oder wenigstens eine lokale Veränderung der Oberflächentopographie erfahren. In Bezug auf die wenigstens eine lokale Veränderung der Oberflächentopographie der wenigstens einen Schicht wird auf die vorstehenden Ausführungen verwiesen. Umfasst sowohl die Vorderfläche als auch die Rückfläche des Substrats jeweils vollflächig wenigstens eine Schicht, welche jeweils durch Inkontaktbringen mit wenigstens einem Medium ihre Oberflächentopographie verändern kann, kann die wenigstens eine auf einer der Oberflächen vorliegende Schicht wenigstens eine Veränderung der Oberflächentopographie und die wenigstens eine auf der jeweils gegenüberliegenden Oberfläche vorliegende Schicht keine Veränderung der Oberflächentopographie erfahren.

Umfasst wenigstens eine der Oberflächen des Substrats vollflächig wenigstens eine Schicht, welche durch Inkontaktbringen mit wenigstens einem Medium ihre Oberflächentopographie verändern kann, kann diese Veränderung der Oberflächentopographie der wenigstens einen Schicht zunächst vollflächig erfolgen und anschließend kann diese vollflächig veränderte Oberfläche weiter wenigstens eine lokale Veränderung der Oberflächentopographie erfahren. Alternativ kann auch umgekehrt die wenigstens eine vollflächig vorliegende Schicht zunächst wenigstens eine lokale Veränderung der Oberflächentopographie und anschließend eine vollflächige Veränderung der Oberflächentopographie erfahren. Sowohl die vollflächige als auch wenigstens eine lokale Veränderung der Oberflächentopographie kann in allen vorstehend genannten Ausführungsformen wenigstens einmal erfolgen. Umfassen beide Oberflächen des Substrats jeweils vollflächig wenigstens eine Schicht, welche durch Inkontaktbringen mit wenigstens einem Medium jeweils ihre Oberflächentopographie verändern kann, kann die Veränderung der Oberflächentopographie derselben wenigstens einen Schicht wenigstens einmal lokal und wenigstens einmal vollflächig erfolgen und die wenigstens eine gegenüberliegende Schicht kann keine Veränderung der Oberflächentopographie, eine identische Veränderung der Oberflächentopographie oder eine hiervon verschiedene Veränderung der Oberflächentopographie erfahren. Bevorzugt ist in letzterem Fall keine oder eine verschiedene Veränderung der Oberflächentopographie.

Die vollflächige Veränderung der Oberflächentopographie der wenigstens einen Schicht kann mittels wenigstens eines Maskierungsmittels erreicht werden, welches durch eine ausreichende Anzahl von Bereichen oder Aussparungen und/oder durch eine geeignete räumliche Anordnung von Bereichen oder Aussparungen eine vollflächige Veränderung der Oberflächentopographie der wenigstens einen Schicht durch Inkontaktbringen mit wenigstens einem Medium ermöglicht. Es wird davon ausgegangen, dass diese vollflächige Veränderung der wenigstens einen Oberflächentopographie der wenigstens einen Schicht, welche durch Inkontaktbringen mit wenigstens einem Medium ihre Oberflächentopographie verändern kann, auch unter Verwendung wenigstens eines Maskierungsmittels möglich ist, da es sich bei dieser Veränderung um einen Diffusionsvorgang handelt, bei welchem das erste und zweite Ficksche Gesetz zu berücksichtigen sind. Unter der Annahme eines Diffusionsvorgangs verändern somit auch diejenigen Bereiche der Oberfläche der wenigstens einen Schicht, welche mit dem wenigstens einen Maskierungsmittel belegt sind, wenigstens teilweise ihre Oberflächentopographie. Zur vollflächigen Veränderung der Oberflächentopographie der wenigstens einen Schicht, welche durch Inkontaktbringen mit wenigstens einem Medium ihre Oberflächentopographie verändern kann, ist bevorzugt das wenigstens eine Maskierungsmittel so ausgestaltet, dass unter Berücksichtigung des Diffusionsvorgangs eine vorab festgelegte Oberflächentopographie realisiert werden kann.

Eine vollflächige Veränderung der Oberflächentopographie der wenigstens einen Schicht umfasst hierbei auch, dass wenigstens zwei aneinander angrenzende positiv veränderte Teilbereiche der Oberfläche wenigstens einen gemeinsamen Schnittpunkt mit der Oberfläche der wenigstens einen Schicht vor deren Veränderung durch Inkontaktbringen mit wenigstens einem Medium umfassen. Die Bereiche oder Aussparungen des wenigstens einen Maskierungsmittels können, wie bereits vorstehend beschrieben, jede beliebige Form und/oder jede beliebige Fläche umfassen. Die Bereiche oder Aussparungen des wenigstens einen Maskierungsmittel werden bevorzugt in Abhängigkeit von der zu erzielenden Oberflächentopographie der wenigstens einen Schicht, welche durch Inkontaktbringen mit wenigstens einem Medium ihre Oberflächentopographie verändern soll, ausgefertigt. Beim Inkontaktbringen mit wenigstens einem Medium können mittels der Bereiche oder Aussparungen des wenigstens einen Maskierungsmittels sowohl wenigstens diejenigen Bereiche der wenigstens einen Schicht, welche durch Inkontaktbringen mit wenigstens einem Medium ihre Oberflächentopographie verändern sollen als auch das Maskierungsmittel selbst mit dem wenigstens einen Medium in Kontakt gebracht werden. Alternativ können auch mittels der Bereiche oder Aussparungen des wenigstens einen Maskierungsmittels nur diejenigen Bereiche der wenigstens einen Schicht, welche durch Inkontaktbringen mit wenigstens einem Medium ihre Oberflächentopographie verändern sollen, mit diesem in Kontakt gebracht werden. In letzterem Fall können mittels wenigstens zwei Bereichen oder Aussparungen des wenigstens einen Maskierungsmittels diese wenigstens zwei Bereiche der wenigstens einen Schicht, die ihre Oberflächentopographie verändern sollen, mit wenigstens einem identischen Medium oder mit voneinander verschiedenen Medien in Kontakt gebracht werden. Das wenigstens eine identische Medium kann hierbei in Bezug auf die chemische Zusammensetzung identisch sein, aber beispielsweise in unterschiedlicher Konzentration und/oder in unterschiedlicher Menge mit diesen wenigstens zwei Bereichen in Kontakt gebracht werden. Beispielsweise können durch Inkontaktbringen mit voneinander verschiedenen Medien oder durch Inkontaktbringen mit einem in Bezug auf die chemische Zusammensetzung identischen Medium in unterschiedlicher Konzentration und/oder in unterschiedlicher Menge wenigstens zwei in Bezug auf die Form und die Fläche identische Bereiche der wenigstens einen Schicht eine unterschiedliche Veränderung der Oberflächentopographie erfahren. Das gezielte Inkontaktbringen derjenigen Bereiche der Oberfläche der wenigstens einen Schicht, welche hierdurch eine Veränderung der Oberflächentopographie erfahren soll, erfolgt bevorzugt mittels eines Druckverfahrens, besonders bevorzugt mittels eines Inkjet-Verfahrens, mit welchem das jeweils gewünschte Medium an der jeweils gewünschten Position aufgebracht wird. Ist wenigstens eine der Oberflächen vollflächig mit wenigstens einer Schicht belegt, welche durch Inkontaktbringen mit wenigstens einem Medium ihre Oberflächentopographie verändern kann, kann diese Veränderung mittels wenigstens eines Maskierungsmittels, welches Bereiche oder Aussparungen in wenigstens einer geeigneten Form und mit wenigstens einer geeigneten Fläche umfasst auch durch wenigstens eine Variation des wenigstens einen Mediums gestaltet werden. Aus den sich hieraus ergebenden unzähligen Variationsmöglichkeiten ist somit eine Vielzahl von Oberflächentopographien zugänglich. Ergänzend zu den vorstehend bereits genannten Variationsmöglichkeiten sei noch erwähnt, dass die wenigstens eine Schicht, welche durch Inkontaktbringen mit wenigstens einem Medium ihre Oberflächentopographie verändern kann, vollflächig und in unterschiedlicher Schichtdicke auf derselben Oberfläche des Substrats vorliegen kann. Die unterschiedliche Schichtdicke bietet somit eine unterschiedliche Ausgangsbasis für die positive Veränderung der Oberflächentopographie der wenigstens einen Schicht. Eine unterschiedliche Schichtdicke der wenigstens einen Schicht wird bevorzugt mittels eines Druckverfahrens, besonders bevorzugt mittels eines Inkjet-Verfahrens realisiert.

Das wenigstens ein Maskierungsmittel kann wenigstens eines der vorstehend beschriebenen Maskierungsmittel umfassen. Bevorzugt umfasst das wenigstens eine Maskierungsmittel wenigstens eine Beschichtung, die identisch oder verschieden zu der wenigstens einen Schicht, welche durch Inkontaktbringen mit dem wenigstens einen Medium ihre Oberflächentopographie verändern kann, sein kann. In Bezug auf die identische oder zu der wenigstens einen Schicht verschiedene wenigstens eine Beschichtung wird auf die vorstehenden Ausführungen verwiesen.

Alternativ oder zusätzlich zu der vorstehend beschriebenen vollflächigen Veränderung der Oberflächentopographie der wenigstens einen, vollflächig auf wenigstens einer der Oberflächen des Substrats vorliegenden Schicht mittels wenigstens eines Maskierungsmittels kann eine vollflächige Veränderung der Oberflächentopographie der wenigstens einen Schicht durch vollflächiges oder wenigstens teilweises Inkontaktbringen mit wenigstens einem Medium erfolgen. Eine vollflächige Veränderung der Oberflächentopographie umfasst hierbei auch, dass wenigstens zwei Bereiche der wenigstens einen Schicht nach ihrer jeweiligen positiven Veränderung der Oberflächentopographie wenigstens einen gemeinsamen Schnittpunkt mit der unveränderten Oberfläche der wenigstens einen Schicht umfassen können. Die wenigstens eine Schicht, welche durch Inkontaktbringen mit wenigstens einem Medium ihre Oberflächentopographie verändern kann, kann hierbei über die komplette Oberfläche mit einem einzigen Medium, welches beispielsweise identisch in Bezug auf die chemische Zusammensetzung ist, in Kontakt gebracht werden. Dieses einzige Medium kann hierbei an jeder Stelle der Oberfläche mit identischer Konzentration und in identischer Menge vorliegen, so dass bei identischer Schichtdicke der wenigstens einen Schicht, bevorzugt eine identische Veränderung ihrer Oberflächentopographie zu beobachten ist. Alternativ hierzu kann die Oberfläche der wenigstens einen Schicht nicht an jeder Stelle mit einem einzigen Medium mit identischer Konzentration und in identischer Menge in Kontakt gebracht werden. Dennoch ist auch in letzterem Fall eine vollflächige Veränderung der Oberflächentopographie der wenigstens einen Schicht erreichbar, wenn die Abstände der ausgewählten Stellen, die mit diesem einzigen Medium in Kontakt gebracht werden, die Diffusionsvorgänge nach dem ersten und zweiten Fickschen Gesetz berücksichtigen. Weitere Variationsmöglichkeiten zur Gestaltung der Oberflächentopographie der wenigstens einen Schicht bietet eine unterschiedliche Schichtdicke derselben wenigstens einen Schicht und/oder eine unterschiedliche chemische Zusammensetzung derselben wenigstens einen Schicht. Eine unterschiedliche Schichtdicke und/oder eine unterschiedliche Schichtdicke derselben wenigstens einen Schicht wird bevorzugt mittels eines Druckverfahrens, besonders bevorzugt mittels eines Inkjet-Verfahrens, realisiert.

Die Oberfläche der wenigstens einen Schicht, welche durch Inkontaktbringen mit wenigstens einem Medium ihre Oberflächentopographie verändern kann, kann weiterhin dadurch vollflächig verändert werden, dass in Abhängigkeit von der zu erzielenden Oberflächentopographie ein einziges Medium, bevorzugt identisch in Bezug auf die chemische Zusammensetzung in unterschiedlicher Konzentration und/oder in unterschiedlicher Menge gezielt mit dieser Oberfläche in Kontakt gebracht wird. Dieses gezielte Inkontaktbringen kann hierbei vollflächig oder teilweise erfolgen. Bei einem teilweisen gezielten Inkontaktbringen werden bevorzugt die Diffusionsvorgänge nach dem ersten und zweiten Fickschen Gesetz berücksichtigt, so dass eine vollflächige Veränderung der Oberflächentopographie gewährleistet ist. Die Schichtdicke der wenigstens einen Schicht, welche durch Inkontaktbringen mit wenigstens einem Medium ihre Oberflächentopographie verändern kann, kann an jeder Stelle gleich sein oder sie kann variieren. Variiert die Schichtdicke dieser wenigstens einen Schicht, ist die Ausgangsbasis für die positive Veränderung der Oberflächentopographie an jeder Stelle dieser Schicht verschieden.

Die Oberfläche der wenigstens einen Schicht, welche durch Inkontakbringen mit wenigstens einem Medium ihre Oberflächentopographie verändern kann, kann weiterhin dadurch vollflächig verändert werden, dass in Abhängigkeit von der zu erzielenden Oberflächentopographie wenigstens zwei in Bezug auf ihre chemische Zusammensetzung voneinander verschiedene Medien gezielt mit dieser Oberfläche in Kontakt gebracht wird. Diese wenigstens zwei in Bezug auf ihre chemische Zusammensetzung voneinander verschiedenen Medien können weiterhin jeweils in unterschiedlicher Konzentration und/oder in unterschiedlicher Menge gezielt mit der jeweils zu verändernden Oberfläche in Kontakt gebracht werden. Auch bei der Verwendung von wenigstens zwei in Bezug auf ihre chemische Zusammensetzung voneinander verschiedenen Medien können diese gezielt vollflächig oder gezielt teilweise mit der jeweils zu verändernden Oberfläche in Kontakt gebracht werden. Bei einem teilweisen gezielten Inkontaktbringen werden auch bei der Verwendung von wenigstens zwei in Bezug auf die chemische Zusammensetzung voneinander verschiedenen Medien bevorzugt die Diffusionsvorgänge nach dem ersten und zweiten Fickschen Gesetz berücksichtigt, so dass eine vollflächige Veränderung der Oberflächentopographie gewährleistet ist. Ergänzend wird noch angemerkt, dass die Schichtdicke der wenigstens einen Schicht über die komplette Oberfläche an jeder Stelle gleich oder verschieden sein kann. Eine unterschiedliche Schichtdicke der wenigstens einen Schicht kann somit eine unterschiedliche Ausgangsbasis bieten und einen weiteren zu berücksichtigen Parameter für eine gezielte positive Veränderung der Oberflächentopographie darstellen.

Ein gezieltes Inkontaktbringen des wenigstens einen Mediums mit der vollflächig vorliegenden wenigstens einen Schicht kann auch umfassen, dass nacheinander wenigstens zwei in Bezug auf ihre chemische Zusammensetzung voneinander verschiedene Medien an identischer und/oder verschiedener Position mit der Oberfläche der wenigstens einen Schicht in Kontakt gebracht werden. Alternativ kann auch ein in Bezug auf die chemische Zusammensetzung identisches Medium nacheinander an identischer und/oder verschiedener Position mit der Oberfläche der wenigstens einen Schicht in Kontakt gebracht werden. Sowohl bei dem soeben beschriebenen nacheinander erfolgenden Inkontaktbringen von wenigstens zwei in Bezug auf die chemische Zusammensetzung voneinander verschiedenen Medien als auch bei dem nacheinander Inkontaktbringen mit einem einzigen Medium kann die jeweilige Konzentration und/oder die jeweilige Menge des Mediums variieren.

Aus den unzähligen Variationsmöglichkeiten wird deutlich, dass Oberflächenflächentopographien möglich werden, welche durch herkömmliche mechanische Bearbeitung eines Brillenglas-Rohlings oder eine Brillenglas-Halbfertigprodukts nicht zugänglich sind. Des Weiteren ist es möglich, über einen Konzentrationsgradienten des wenigstens einen Mediums eine unabhängige, bevorzugt unabhängige, kontinuierliche oder graduelle Veränderung der Oberflächentopographie der wenigstens einen Schicht zu erzeugen. Auch ist es möglich, über einen Gradienten der Anzahl der übereinander, bevorzugt mittels eines Inkjet-Verfahrens, auf die Oberfläche der wenigstens einen Schicht aufgebrachten Volumenelemente eine unabhängige, bevorzugt unabhängige, kontinuierliche oder graduelle Veränderung der Oberflächentopographie der wenigstens einen Schicht zu erzeugen. Auch eine Kombination der beiden vorstehend genannten Gradienten ist möglich.

Eine vollflächige Veränderung der Oberflächentopographie der wenigstens einen Schicht, kann alternativ auch dadurch erzielt werden, dass diese wenigstens eine Schicht partiell, aber in geeignetem lateralem Abstand auf wenigstens einer der Oberflächen des Substrats aufgebracht wird, dass durch Inkontaktbringen mit wenigstens einem Medium eine vollflächige Veränderung der Oberflächentopographie dieser Schicht erfolgt. Eine vollflächige Veränderung der Oberflächentopographie umfasst hier, dass wenigstens zwei Bereiche nach ihrer jeweiligen positiven Veränderung der Oberflächentopographie einen gemeinsamen Schnittpunkt mit der Oberfläche des Substrats umfassen können. Die wenigstens eine Schicht kann partiell und mit gleicher oder in unterschiedlicher Schichtdicke auf wenigstens einer der Oberflächen des Substrats vorliegen. Weiterhin kann die wenigstens eine Schicht, welche durch Inkontaktbringen mit wenigstens einem Medium ihre Oberflächentopographie verändern kann, an jeder aufgebrachten Stelle die identische oder eine voneinander verschiedene chemische Zusammensetzung aufweisen. Die partielle Aufbringung der wenigstens einen Schicht erfolgt bevorzugt mittels eines Druckverfahrens, besonders bevorzugt mittels eines Inkjet-Verfahrens. In Bezug auf die diversen Variationsmöglichkeiten in Bezug auf das wenigstens eine Medium wird auf die vorstehenden Ausführungen verwiesen.

Umfasst wenigstens eine der Oberflächen des Substrats wenigstens partiell wenigstens eine Schicht, welche nach Inkontaktbringen mit wenigstens einem Medium ihre Oberflächentopographie verändern kann, kann diese Veränderung der Oberflächentopographie vollflächig und/oder lokal erfolgen. Eine der Oberflächen umfasst die wenigstens eine Schicht partiell, sofern diese nicht vollflächig vorliegt. Die wenigstens eine Schicht wird bevorzugt mittels eines Druckverfahrens, besonders bevorzugt mittels eines Inkjet-Verfahrens auf wenigstens eine der Oberflächen des Substrats aufgebracht. Die vollflächige bzw. die lokale Veränderung der Oberflächentopographie dieser wenigstens einen partiell aufgebrachten Schicht kann wie vorstehend beschrieben erfolgen.

Das Inkontaktbringen der wenigstens einen Oberfläche der wenigstens einen Schicht mit wenigstens einem Medium erfolgt bevorzugt über einen Zeitraum aus einem Bereich von 20 Minuten bis 40 Stunden, weiter bevorzugt aus einem Bereich von 25 Minuten bis 30 Stunden, weiter bevorzugt aus einem Bereich von 30 Minuten bis 20 Stunden, besonders bevorzugt aus einem Bereich von 35 Minuten bis 15 Stunden und ganz besonders bevorzugt aus einem Bereich von 40 Minuten bis 10 Stunden. Das Inkontaktbringen kann bei Raumtemperatur, d.h. bei einer Temperatur von 22°C ± 2°C, oder bei erhöhter Temperatur erfolgen. Eine erhöhte Temperatur umfasst hierbei bevorzugt eine Temperatur aus einem Bereich von 25°C bis 80°C, weiter bevorzugt aus einem Bereich von 25°C bis 60°C, weiter bevorzugt aus einem Bereich von 27°C bis 55°C, besonders bevorzugt aus einem Bereich von 30°C bis 50°C und ganz besonders bevorzugt aus einem Bereich von 35°C bis 45°C. Das Inkontaktbringen kann weiterhin unter Xenon-Bestrahlung bei einer Wellenlänge aus einem Bereich von 280 nm bis 1200 nm erfolgen. Optional kann während des Inkontaktbringens unter Xenon-Bestrahlung die wenigstens eine Schicht, deren Oberflächentopographie verändert werden soll, mit vollentsalztem Wasser gespült werden. Vorstehend genannte Bedingungen für das Inkontaktbringen der Oberflächen der wenigstens einen Schicht mit wenigstens einem Medium können in jeder beliebigen Weise miteinander kombiniert werden.

Wie bereits vorstehend erklärt, handelt es sich bei der Veränderung der Oberflächentopographie der wenigstens einen Schicht, welche durch Inkontaktbringen mit wenigstens einem Medium ihre Oberflächentopographie verändern kann, bevorzugt um einen Diffusionsvorgang, bei welchem bevorzugt das erste und das zweite Ficksche Gesetz zu berücksichtigen sind, so dass also die Veränderung der Oberflächentopographie nicht auf diejenigen Bereiche oder diejenige Stelle der Oberfläche der wenigstens einen Schicht beschränkt ist, die mit dem wenigstens einen Medium in Kontakt werden oder wird.

Wird vorstehend von einem gezielten Inkontaktbringen der Oberfläche der wenigstens einen Schicht mit dem wenigstens einen Medium gesprochen, meint dies, dass die Oberfläche der wenigstens einen Schicht nur einer vorab festgelegten Stelle oder in einem vorab festgelegten Bereich mit dem wenigstens einen Medium in Kontakt gebracht wird oder werden. Die vorab festgelegte Stelle oder der vorab festgelegte Bereich richtet sich bevorzugt nach der gewünschten, zu erzielenden positiven Veränderung der Oberfläche der wenigstens einen Schicht.

Die lokale Veränderung der Oberflächentopographie der wenigstens einen Schicht, welche durch Inkontaktbringen mit wenigstens einem Medium ihre Oberflächentopographie verändern kann, kann bevorzugt auch als kurzwelliges Oberflächensegment angrenzend an eine langwellige Oberfläche verstanden werden. Die kurzwelligen Oberflächensegmente sind hierbei bevorzugt Oberflächensegmente mit einer Periodizität kleiner der kleinsten Periodizität der angrenzenden langwelligen Oberfläche der wenigstens einen Schicht. Dies gilt bevorzugt sowohl für eine vollflächige als auch für eine partielle Belegung wenigstens einer der Oberflächen des Substrats mit der wenigstens einen Schicht.

Aus vorstehend genannten zahlreichen Variationsmöglichkeiten, beispielsweise in Bezug auf das wenigstens eine Maskierungsmittel, das wenigstens eine Medium, die Schichtdicke der wenigstens einen Schicht, deren Oberflächentopographie durch Inkontaktbringen mit wenigstens einem Medium verändert werden kann, die chemische Zusammensetzung der wenigstens einen Schicht, der Zeitraum des Inkontaktbringens, die Temperatur des Inkontaktbringens und/oder die mögliche Bestrahlung während des Inkontaktbringens, wird deutlich, dass durch wenigstens ein Inkontaktbringen der wenigstens einen Schicht, deren Oberflächentopographie verändert werden soll, mit wenigstes einem Medium, eine Vielzahl an erdenklichen Oberflächentopographien zugänglich wird. Insbesondere sind auf diese Weise auch Oberflächentopographien zugänglich, welche durch herkömmliche mechanische Bearbeitungsverfahren, wie beispielsweise Fräsen und/oder Schleifen und/oder Drehen und/oder Polieren, nicht zugänglich sind. Diese Oberflächentopographien sind bevorzugt individuell für das Auge eines Brillenträgers anzufertigen.

Das Substrat und somit die wenigstens eine Schicht, deren Oberflächentopographie verändert werden soll, kann jede beliebige Oberflächentopographie, beispielsweise sphärisch, asphärisch, torisch, atorisch oder eine Freiformtopographie aufweisen. Durch Inkontaktbringen der Oberflächentopographie der wenigstens einen Schicht, deren Oberflächentopographie verändert werden soll, mit wenigstens einem Medium kann somit eine einfache, z.B. sphärische Oberflächentopographie der wenigstens einen Schicht in eine Freiformflächentopographie überführt werden. Die Oberflächentopographie des Substrats korrespondiert somit nicht mit Oberflächentopographie der wenigstens einen Schicht nach Inkontaktbringen mit wenigstens einem Medium.

Bei einer weiteren Ausführungsform kann wenigstens ein vorstehend in Zusammenhang mit einem zu verwendenden Substrat beschriebenes Dünnglas wenigstens eine Schicht umfassen, welche durch Inkontaktbringen mit wenigstens einem Medium ihre Oberflächentopographie verändern kann. Dieses wenigstens eine Dünnglas kann beispielsweise mittels eines Klebemittels mit wenigstens einer der Oberflächen eines der vorstehend beschriebenen Substrate oder mittels einer lösbaren Verbindung ("Clip-Verbindung oder Vorhängeverbindung") mit einem fertigen Brillenglas verbunden werden. Diese lösbare Verbindung kann beispielsweise dann von Interesse sein, wenn die veränderte Oberflächentopographie zu Demonstrationszwecken vorgestellt werden soll oder die veränderte Oberflächentopographie im Wechsel zu dem fertigen Brillenglas getragen werden soll.

Bevorzugt umfasst diejenige Oberfläche des Substrats, welches die einfachere Oberflächengeometrie aufweist, die wenigstens eine Schicht, deren Oberfläche durch Inkontaktbringen mit wenigstens einem Medium ihre Oberflächentopographie verändern kann. Weist beispielsweise eine der Oberflächen des Substrats eine sphärische oder plane Oberflächengeometrie und die gegenüberliegende Oberflächen eine Freiformflächengeometrie auf, so würde in diesem Fall bevorzugt diejenige Oberfläche mit der sphärischen oder planen Oberflächengeometrie die wenigstens eine Schicht, deren Oberflächentopographie durch Inkontaktbringen mit wenigstens einem Medium verändert werden kann, umfassen.

Die wenigstens eine Schicht, welche nach Inkontaktbringen mit wenigstens einem Medium ihre Oberflächentopographie verändern kann, umfasst bevorzugt eine photochrome Schicht gemäß EP 1 602 479 A1 A1, insbesondere gemäß EP 1 602 479 A1, Anspruch 9, oder eine Schicht gemäß EP 1 433 814 A1, insbesondere gemäß EP 1 433 814 A1, Anspruch 1, oder eine Schicht gemäß EP 1 561 571 A1, insbesondere gemäß EP 1 561 571 A1, Anspruch 10, oder eine photochrome Schicht gemäß WO 03/058300 A1, Seite 10, Zeile 23 bis Seite 21, Zeile 18.

EP 1 602 479 A1 offenbart eine photochrome Schicht, welche über einer auf einem Polyurethanharz basierenden Primerschicht aufzubringen ist. Die photochrome Schicht basiert auf einer härtbaren Zusammensetzung, welche 20 Gew.-% bis 90 Gew.-% eines radikalisch polymerisierbaren Monomers, 0,5 Gew.-% bis 20 Gew.-% eines radikalisch polymerisierbaren Monomers umfassend eine Silanolgruppe oder eine Gruppe, welche nach Hydrolyse eine Silanolgruppe bildet, 0,01 Gew.-% bis 15 Gew.-% einer Aminverbindung und 0,1 Gew.-% bis 30 Gew.-% einer photochromer Verbindung umfasst, wobei die Gew.-%-Angaben jeweils bezogen auf das Gesamtgewicht der Zusammensetzung sind. Wird die photochrome Schicht auf die in EP 1 602 479 A1 offenbarte Primerschicht aufgebracht, muss die photochrome Schicht nicht unbedingt die Aminverbindung umfassen. Als radikalisch polymerisierbares Monomer wird bevorzugt eine Mischung aus einem radikalisch polymerisierbaren Monomer ("high hardness monomer") mit einer Rockwellhärte von wenigstens 60 auf der L-Skala im gehärteten Produkt nach Homopolymerisation und einem radikalisch polymerisierbaren Monomer ("low hardness monomer") mit einer Rockwellhärte von weniger als 40 auf der L-Skala im gehärteten Produkt nach Homopolymerisation. EP 1 602 479 A1, Anspruch 9, beansprucht eine härtbare Zusammensetzung umfassend 100 Gewichtsteile eines radikalisch polymerisierbaren Monomers, 0,001 bis 5 Gewichtsteile eines Tensids auf Silikonbasis oder Fluorbasis und 0,01 bis 20 Gewichtsteile einer photochromen Verbindung.

EP 1 433 814 A1 offenbart eine härtbare Zusammensetzung, welche eine Kombination eines radikalisch polymerisierbaren Monomers mit einer Rockwellhärte von wenigstens 60 auf der L-Skala ("highhardness monomer") und eines radikalisch polymerisierbaren Monomers mit einer Rockwellhärte von weniger als 40 auf der L-Skala ("low-hardness monomer") und eine photochrome Verbindung umfasst. Außerdem kann die härtbare Zusammensetzung auch radikalisch polymerisierbare Monomere mit einer Rockwellhärte von wenigstens 40 und weniger als 60, jeweils auf der L-Skala, ("intermediate-hardness monomer") umfassen. Die entsprechenden Monomeren sind in der EP 1 433 814 A1 in den Absätzen [0049] bis [0097] näher spezifiziert. Zur Verbesserung der Ausgewogenheit zwischen den Eigenschaften der aus dieser härtbaren Zusammensetzung erhaltenen Beschichtung, wie Lösungsmittelbeständigkeit, Härte, Hitzebeständigkeit, Intensität der Eindunkelung und Geschwindigkeit der Aufhellung, liegt der Anteil der radikalisch polymerisierbaren Monomeren mit einer Rockwellhärte von weniger als 40 auf der L-Skala bevorzugt zwischen 5 und 70 Gew.-% und der Anteil der radikalisch polymerisierbaren Monomeren mit einer Rockwellhärte von wenigstens 60 auf der L-Skala bevorzugt zwischen 5 und 95 Gew.-%, jeweils bezogen auf das Gesamtgewicht aller radikalisch polymerisierbaren Monomere, ausgenommen den nachstehend genannten radikalisch polymerisierbaren Monomeren, welche eine Silanolgruppe umfassen oder diese nach Hydrolyse ausbilden, oder eine Isocyanatgruppe umfassen. Zur Verbesserung der Haftung zwischen der aus dieser härtbaren Zusammensetzung erhaltenen Beschichtung und einem Brillenglas-Substrat bzw. einem Hartlack, zur Verbesserung Abriebfestigkeit und zur Verbesserung der photochromen Eigenschaften umfasst die härtbare Zusammensetzung neben der vorstehenden Kombination von radikalisch polymerisierbaren Monomeren weiterhin ein radikalisch polymerisierbares Monomer, welches eine Silanolgruppe umfasst oder diese nach Hydrolyse ausbildet, oder ein radikalisch polymerisierbares Monomer, welches eine Isocyanatgruppe umfasst. Der Anteil des radikalisch polymerisierbaren Monomers, welches eine Silanolgruppe umfasst oder nach Hydrolyse ausbildet, oder eines radikalisch polymerisierbaren Monomers, welches eine Isocyanatgruppe umfasst, liegt gemäß EP 1 433 814 A1 bevorzugt zwischen 0.5 Gew.-% und 20 Gew.-%, bezogen auf das Gesamtgewicht aller radikalisch polymerisierbaren Monomeren. Die härtbare Zusammensetzung kann weiterhin ein Amin in einem Anteil von 0,01 bis 20 Gewichtsteilen, bezogen auf das Gesamtgewicht der radikalisch polymerisierbaren Monomere umfassen.

EP 1 433 814 A1, Anspruch 1, beansprucht eine härtbare Zusammensetzung, welche 100 Gewichtsteile eines radikalisch polymerisierbaren Monomers, 0,01 bis 20 Gewichtsteile einer Aminverbindung und 0,1 bis 20 Gewichtsteile einer photochromen Verbindung umfasst. Das radikalisch polymerisierbare Monomer beinhaltet hierbei ein radikalisch polymerisierbares Monomer, welches eine Silanolgruppe oder welches eine Gruppe, die nach Hydrolyse eine Silanolgruppe ausbildet, und/oder ein radikalisch polymerisierbares Monomer, welches eines Isocyanatgruppe umfasst.

EP 1 561 571 A1, Anspruch 10, beansprucht eine photopolymerisierbare und härtbare Zusammensetzung, welche (A) ein radikalisch polymerisierbares Monomer, (B) eine photochrome Verbindung und (C) eine Photopolymerisationsinitiator-Komponente umfasst, wobei die photochrome Verbindung (B) in einer Menge von 0,2 bis 20 Gew.-% enthalten ist und ein phosphorhaltiger Polymerisationsinitiator als Photopolymerisationsinitiator-Komponente (C) in einer Menge von 0,01 bis 10 Gew.-teilen und weitere Photopolymerisationsinitiatoren in einer Menge von 0,01 bis 10 Gew.-teilen pro 100 Gew.-teilen des radikalisch polymerisierbaren Monomeren (A) enthalten sind. Gemäß EP 1 561 571 A1 wird auf einem Substrat ein hochmolekularer Film mit einer Dicke von 1 bis 100 $\mu$m gebildet. Die radikalisch polymerisierbaren Monomere (A), welche radikalisch polymerisierbare Gruppen wie eine (Meth)Acryloylgruppe, eine (Meth)Acryloyloxygruppe, eine Vinylgruppe, eine Allylgruppe oder eine Styrolgruppe umfassen können, sind in der EP 1 561 571 A1 in den Absätzen [0035] bis [0111] näher beschrieben. Das radikalisch polymerisierbares Polymer umfasst gemäß EP 1 561 571 A1 bevorzugt 5 bis 95 Gew.-% eines harten Monomers ("highly hard monomer"), dessen Homopolymer eine Rockwellhärte auf der L-Skala von nicht weniger als 60 aufweist, und 5 bis 70 Gew.-% eines harten Monomers ("lowly hard monomer), dessen Homopolymer eine Rockwellhärte auf der L-Skala von nicht größer als 40 aufweist.

Besonders bevorzugt umfasst die wenigstens eine Schicht, welche nach Inkontaktbringen mit wenigstens einem Medium ihre Oberflächentopographie verändern kann, eine photochrome Schicht gemäß EP 1 602 479 A1, insbesondere gemäß EP 1 602 479 A1, Anspruch 9, oder eine Schicht gemäß EP 1 433 814 A1, insbesondere gemäß EP 1 433 814 A1, Anspruch 1.

Die wenigstens eine Schicht, welche durch Inkontaktbringen mit wenigstens einem Medium ihre Oberflächentopographie verändern kann, umfasst weiterhin besonders bevorzugt eine Zusammensetzung gemäß der vorstehend beschriebenen photochromen Schichten, welche jeweils kein Farbmittel umfasst.

Zwischen dem Substrat und der wenigstens einen Schicht, welche durch Inkontaktbringen mit wenigstens einem Medium ihre Oberflächentopographie verändern kann, kann, vorzugsweise substratzugewandt direkt angrenzend an die wenigstens eine reaktiven Schicht, wenigstens eine Primerschicht vorliegen. Als wenigstens eine Primerschicht kann die in EP 1 602 479 A1, insbesondere in EP 1 602 479 A1, Anspruch 1, offenbarte Polyurethanharzschicht oder die in WO 03/058300 A1, insbesondere in WO 03/058300 A1, Seite 22, Zeile 3, bis Seite 23, Zeile 13, offenbarte Primerschicht, eingesetzt werden. Als wenigstens eine Primerschicht wird bevorzugt die in EP 1 602 479 A1, insbesondere in EP 1 602 479 A1, Anspruch 1, offenbarte Polyurethanharzschicht eingesetzt. EP 1 602 479 A1, Anspruch 1, beansprucht ein Produkt, welches in der Schichtenfolge eine Polyurethanharzschicht auf wenigstens einer Oberfläche des Substrats umfasst. Diese Polyurethanharzschicht umfasst ein gehärtetes Produkt eines feuchtigkeitshärtenden Polyurethanharzes und/oder einer Vorstufe davon.

Die wenigstens eine Schicht, welche durch Inkonktbringen ihre Oberflächentopographie verändern kann, kann sowohl bei einer vollflächigen als auch bei einer partiellen Belegung wenigstens einer der Oberflächen des Substrats über die komplette vollflächige oder die komplette partielle Belegung identisch oder verschieden voneinander sein. Bei einer identischen Belegung ist wenigstens eine der Oberflächen des Substrats mit wenigstens einer Schicht, welche in Bezug auf die chemische Zusammensetzung identisch ist, vollflächig oder partiell belegt. Sowohl die Vorderfläche als auch die Rückfläche des Substrats können jeweils wenigstens eine Schicht, welche in Bezug auf chemische Zusammensetzung identisch ist vollflächige oder partiell umfassen. Umfasst sowohl die Vorderfläche als auch die Rückfläche des Substrats jeweils partiell wenigstens eine in Bezug auf die chemische Zusammensetzung identische Schicht, kann die jeweilige wenigstens eine Stelle und/oder der jeweilige wenigstens eine Bereich, an welcher und/oder in welchem die wenigstens eine Schicht wenigstens partiell vorliegt, auf der Vorderfläche und der Rückfläche identisch oder verschieden zueinander sein. Bevorzugt ist die jeweilige wenigstens eine Stelle und/oder der jeweilige wenigstens eine Bereich, an welcher und/oder in welchem die wenigstens eine Schicht wenigstens partiell vorliegt, auf der Vorderfläche und der Rückfläche verschieden zueinander. Die wenigstens eine Schicht, welche durch Inkontaktbringen mit wenigstens einem Medium ihre Oberflächentopographie verändern kann, kann auch in Bezug auf die chemische Zusammensetzung über die komplette vollflächige oder die komplette partielle Belegung wenigstens einer der Oberflächen des Substrats verschieden voneinander sein. Verschieden voneinander meint hierbei bevorzugt, dass die chemische Zusammensetzung der wenigstens einen Schicht an unterschiedlichen Stellen und/oder in unterschiedlichen Bereichen auf derselben Oberfläche des Substrats nicht identisch, sondern verschieden ist. Dies gilt sowohl für eine partielle als auch für eine vollflächige Belegung derselben Oberfläche des Substrats. Umfassen sowohl die Vorderfläche als auch die Rückfläche des Substrats wenigstens eine in Bezug auf die chemische Zusammensetzung verschiedene Schicht kann diese verschiedene Schicht wiederum auf der Vorderfläche identisch oder verschieden zu der wenigstens einen verschiedenen Schicht der Rückfläche sein. Sowohl bei einer vollflächigen als auch bei einer partiellen Belegung einer der Oberflächen ist die verschiedene Schicht wiederum verschieden zu der jeweils gegenüberliegenden Oberfläche.

Eine in Bezug auf die chemische Zusammensetzung voneinander verschiedene Schicht als auch eine partielle Belegung wenigstens einer der Oberflächen mit der wenigstens einen Schicht, welche hierbei identisch oder verschieden voneinander sein kann, erfolgt bevorzugt mittels eines Druckverfahrens, besonders bevorzugt mittels eines Inkjet-Verfahrens.

Die wenigstens eine Schicht, welche durch Inkontaktbringen mit wenisgtens einem Medium ihre Oberflächentopographie verändern kann, weist bevorzugt eine mittlere Dicke aus einem Bereich von 0,5 $\mu$m bis 200 $\mu$m, weiter bevorzugt aus einem Bereich von 1 $\mu$m bis 166 $\mu$m, weiter bevorzugt aus einem Bereich von 1,5 $\mu$m bis 121 $\mu$m, besonders bevorzugt aus einem Bereich von 1,8 $\mu$m bis 87 $\mu$m und ganz besonders aus einem Bereich von 2,0 $\mu$m bis 60 $\mu$m auf.

Die Schichtdicke der wenigstens einen Schicht, welche durch Inkontaktbringen mit wenigstens einem Medium ihre Oberflächentopographie verändern kann, kann über die komplette vollflächige oder die komplette partielle Belegung des Substrats wenigstens einer der Oberflächen des Substrats identisch oder verschieden sein. Eine partielle Belegung wenigstens einer der Oberflächen des Substrats wird bevorzugt mittels eines Druckverfahrens, besonders bevorzugt mittels eines Inkjet-Verfahrens realisiert. Eine Belegung derselben wenigstens einen Oberfläche des Substrats mit wenigstens einer Schicht in unterschiedlicher Schichtdicke, vollflächig oder partiell wird ebenfalls bevorzugt mittels eines Druckverfahrens, besonders bevorzugt mittels eines Inkjet-Verfahrens realisiert. Umfasst sowohl die Vorderfläche als auch die Rückfläche des Substrats wenigstens eine Schicht, deren Oberflächentopographie durch Inkontakbringen mit wenigstens einem Medium verändert werden kann, kann die Schichtdicke der wenigstens einen Schicht einer der Oberflächen identisch zu oder verschieden von der Schichtdicke der wenigstens einen Schicht der jeweils gegenüberliegenden Schicht sein. Dies gilt sowohl für eine vollflächige Belegung beider Oberflächen als auch für eine partielle Belegung beider Oberflächen als auch für eine vollflächige Belegung der einen Oberfläche und eine partielle Belegung der jeweils gegenüberliegenden Oberfläche jeweils mit der wenigstens einen Schicht.

Das wenigstens eine Medium, durch welches durch Inkontaktbringen die Oberflächentopographie der wenigstens einen Schicht verändert werden kann, umfasst bevorzugt wenigstens eine organische Säure, besonders bevorzugt wenigstens eine flüssige organische aliphatische gesättigte oder ungesättigte, optional substituierte, Monocarbonsäure. Das wenigstens eine Medium umfasst besonders bevorzugt wenigstens eine flüssige organische aliphatische gesättigte oder ungesättigte Monocarbonsäure mit 2 bis 22 Kohlenstoffatomen, bevorzugt mit 3 bis 18 Kohlenstoffatomen, verwendet. Beispielsweise kann das wenigstens eine Medium wenigstens eine organische Säure aus der Gruppe bestehend aus Essigsäure, Propionsäure, Acrylsäure, Milchsäure, Buttersäure, Isobuttersäure, Valeriansäure, Önanthsäure, Capronsäure, Caprylsäure, Pelargonsäure, Myristoleinsäure, Palmitoleinsäure, Linolsäure, alpha-Linolensäure, gamma-Linolensäure, Ölsäure, Ricinolsäure, Stearidonsäure, Stearinsäure, Arachidonsäure, Eicosapentaensäure, Docosapentaensäure und Docosahexaensäure umfassen. Bevorzugt umfasst das wenigstens eine Medium wenigstens eine organische Säure aus der Gruppe bestehend aus Essigsäure, Milchsäure, Buttersäure, Capronsäure, Caprylsäure, Pelargonsäure, Linolsäure, alpha-Linolensäure, gamma-Linolensäure und Ölsäure ausgewählt. Besonders bevorzugt umfasst das wenigstens eine Medium wenigstens eine organische Säure ausgewählt aus der Gruppe bestehend aus Milchsäure, Caprylsäure und Ölsäure. Alternativ kann das wenigstens eine Medium wenigstens eine Tricarbonsäure, wie beispielsweise Zitronensäure, oder eine anorganische Säure, wie beispielsweise Salzsäure, umfassen. Die vorstehend genannten Medien können allein oder in Kombination eingesetzt werden. Sollen die vorstehend genannten Medien mittels eines Druckverfahrens, insbesondere mittels eines Inkjet-Verfahrens appliziert werden, können diese zur Einstellung einer geeigneten Viskosität modifiziert werden. Die vorstehend genannten Medien können in kommerziell erhältlicher Qualität, z.B. technisch, oder in verdünnter Form eingesetzt werden.

Nach Inkontaktbringen der wenigstens einen Schicht, welche durch Inkontaktbringen mit wenigstens einem Medium ihre Oberflächentopographie verändern kann, mit wenigstens einem Medium und Entfernen des wenigstens einen Mediums kann die wenigstens eine Schicht, deren Oberflächentopographie mit wenigstens einer weiteren Schicht beschichtet werden. Diese wenigstens eine weitere Schicht kann identisch im Sinne der oben gegebenen Definition zu der wenigstens einen Schicht, welche durch Inkontaktbringen mit wenigstens einem Medium ihre Oberflächentopographie verändern kann, oder verschieden zu sein. Die wenigstens eine weitere identische Schicht kann dann wiederum durch Inkontaktbringen mit wenigstens einem Medium ihre Oberflächentopographie verändern. Bei Veränderung der Oberflächentopographie der wenigstens einen weiteren identischen Schicht kann es weiterhin auch zu einer weiteren Veränderung der Oberflächentopographie der bereits veränderten Oberfläche der wenigstens einen Schicht kommen. Die wenigstens eine weitere Beschichtung und/oder die wenigstens eine Schicht können gezielt mit wenigstens einem Medium in Kontakt gebracht werden. Bei diesem gezielten Inkontaktbringen kann das wenigstens eine Medium in Bezug auf seine chemische Zusammensetzung identisch oder verschieden zueinander sein, jeweils in unterschiedlicher Konzentration und/oder jeweils in unterschiedlicher Menge vorliegen. Das gezielte Inkontaktbringen wird bevorzugt mittels eines Druckverfahrens, bevorzugt mittels eines Inkjet-Verfahrens realisiert. Wird sowohl die wenigstens eine weitere identische Schicht als auch die wenigstens eine Schicht mit demselben wenigstens einen Medium in Kontakt gebracht, kann dies durch vollflächiges Inkontaktbringen, beispielsweise durch Einlegen in das wenigstens eine identische Medium oder durch Bestreichen mit dem wenigstens einen identischen Medium erfolgen. Wie bereits vorstehend beschrieben, dann die wenigstens eine weitere identische Schicht auch vor dem ersten Inkontaktbringen der wenigstens einen Schicht mit dem wenigstens einen Medium bereits beispielsweise als Maskierungsmittel auf der wenigstens einen Schicht, welche durch Inkkontaktbringen mit dem wenigstens einen Medium ihre Oberflächentopographie verändern kann, vorliegen. Vorstehend beschriebene weitere Beschichtung mit wenigstens einer weiteren identischen Schicht und das Inkontaktbringen mit wenigstens einem Medium in allen in dieser Anmeldung beschriebenen Variationen kann mehr als einmal erfolgen.

Die wenigstens eine weitere identische Schicht kann ebenfalls mit einer weiteren Schicht, welche verschieden zu der wenigstens einen weiteren identischen Schicht und verschieden zu der wenigstens einen Schicht, welche durch Inkontaktbringen mit wenigstens einem Medium ihre Oberflächentopographie verändern kann, sein.

Diese wenigstens einen weitere verschiedene Schicht umfasst bevorzugt wenigstens eine Primer-Lackschicht, wenigstens eine Hartlackschicht, wenigstens eine Entspiegelungsschicht, wenigstens eine elektrisch leitfähige oder halbleitende Schicht, welche Bestandteil der Entspiegelungsschicht sein kann, wenigstens eine farbgebende Schicht, wenigstens eine Antibeschlagsschicht und/oder wenigstens eine Clean-Coat-Schicht. Als weitere verschiedene Schicht ist auch ein Dünnglas geeignet, welches in Bezug auf dessen mittlere Dicke, dessen Oberflächenrauigkeit, dessen Glaskomposition, dessen Krümmungsradius und dessen Oberflächentopographie im Zusammenhang mit den Substraten detailliert beschrieben wurde. Das wenigstens eine Dünnglas wird bevorzugt mittels eines dort beschriebenen Klebemittels mit der wenigstens einen Schicht nach Veränderung deren Oberflächentopographie verbunden. Umfasst nur eine der Oberflächen des Substrats wenigstens eine Schicht, welche durch Inkontaktbringen mit wenigstens einem Medium ihre Oberflächentopographie verändern kann, kann die jeweils gegenüberliegende Oberfläche wenigstens eine der vorstehend genannten Schichten umfassen. Umfasst die wenigstens eine weitere verschiedene Schicht wenigstens eine chemisch modifizierte Primer-Lackschicht, wird bevorzugt eine Beschichtungszusammensetzung umfassend

i) wenigstens eine wässrige aliphatische, cycloaliphatische, aromatische oder heteroaromatische Polyurethandispersion, wenigstens eine wässrige aliphatische, cycloaliphatische, aromatische oder heteroaromatische Polyharnstoffdispersion, wenigstens eine wässrige aliphatische, cycloaliphatische, aromatische oder heteroaromatische Polyurethan-Polyharnstoffdispersion und/oder wenigstens eine wässrige aliphatische, cycloaliphatische, aromatische oder heteroaromatische Polyesterdispersion, besonders bevorzugt wenigstens eine wässrige aliphatische Polyurethandispersion oder wenigstens eine wässrige aliphatische Polyesterdispersion und ganz besonders bevorzugt wenigstens eine wässrige aliphatische Polyurethandispersion,
ii) wenigstens ein Lösungsmittel,
iii) wenigstens eine Base sowie
iv) optional wenigstens ein Additiv

eingesetzt.

Der Anteil der wenigstens einen wässrigen aliphatischen, cycloaliphatischen, aromatischen oder heteroaromatischen Polyurethandispersion, der wenigstens einen wässrigen aliphatischen, cycloaliphatischen, aromatischen oder heteroaromatischen Polyharnstoffdispersion, der wenigstens einen wässrigen aliphatischen, cycloaliphatischen, aromatischen oder heteroaromatischen Polyurethan-Polyharnstoffdispersion und/oder der wenigstens einen wässrigen aliphatischen, cycloaliphatischen, aromatischen oder heteroaromatischen Polyesterdispersion in der zur Herstellung der wenigstens einen chemisch modifizierten Primer-Lackschicht einsetzbaren Beschichtungszusammensetzung weist bevorzugt einen Gesamtanteil aus einem Bereich von 2 Gew.-% bis 31 Gew.-%, weiter bevorzugt aus einem Bereich von 4 Gew.-% bis 26 Gew.-%, weiter bevorzugt aus einem Bereich von 5 Gew.-% bis 21 Gew.-%, besonders bevorzugt aus einem Bereich von 6 Gew.-% bis 20 Gew.-% und ganz besonders bevorzugt aus einem Bereich von 7 Gew.-% bis 19 Gew.-%, jeweils bezogen auf das Gesamtgewicht der Beschichtungszusammensetzung, auf. Der Gesamtanteil umfasst hierbei sowohl den Anteil nur einer der vorstehend aufgeführten Dispersionen als auch eine Mischung aus vorstehend aufgeführten Dispersionen. Bevorzugt umfasst die zur Herstellung der wenigstens einen chemisch modifizierten Primer-Lackschicht einsetzbare Beschichtungszusammensetzung eine wässrige Polyurethandispersion, wobei das Polyurethan als Spacer bevorzugt eine Polyestereinheit aufweist. Bevorzugt einzusetzende wässrige Polyurethandispersionen sind in WO 94/17116 A1, insbesondere in WO 94/17116 A1, Seite 7, Zeilen 11 bis 33, offenbart. Gemäß WO 94/17116 A1, Seite 7, Zeilen 11 bis 33, ist eine wässrige Polyurethandispersion typischerweise ein Polyurethan-Polyharnstoff, d.h. ein Polymer, welches durch das Auftreten sowohl von Urethan- als auch Harnstoff-Gruppen in einer makromolekularen Kette gekennzeichnet ist. Die wässrige Polyurethandispersion kann mit einer anionisch stabilisierten Acrylemulsion stabilisiert sein, wie dies beispielsweise in WO 94/17116 A1, insbesondere WO 94/17116 A1, Seite 7, Zeilen 33 bis 35, offenbart ist.

Der Anteil des wenigstens einen Lösungsmittels in der zur Herstellung der wenigstens einen chemisch modifizierten Primer-Lackschicht einsetzbaren Beschichtungszusammensetzung liegt bevorzugt in einem Bereich von 69 Gew.-% bis 98 Gew.-%, weiter bevorzugt in einem Bereich von 73 Gew.-% bis 96 Gew.-%, besonders bevorzugt in einem Bereich von 76 Gew.-% bis 94 Gew.-% und ganz besonders bevorzugt in einem Bereich von 79 Gew.-% bis 93 Gew.-%, jeweils bezogen auf das Gesamtgewicht der Beschichtungszusammensetzung. Vorstehend genannte Anteile gelten sowohl für die Verwendung einer Mischung voneinander verschiedener Lösungsmittel als auch für die Verwendung eines einzelnen Lösungsmittels.

Die zur Herstellung der wenigstens einen chemisch modifizierten Primer-Lackschicht einsetzbare Beschichtungszusammensetzung umfasst bevorzugt wenigstens ein organisches Lösungsmittel mit einem niedrigen Siedepunkt von < 100°C bei Normaldruck und wenigstens ein organisches Lösungsmittel mit einem mittleren Siedepunkt aus einem Bereich von 100°C bis 150°C bei Normaldruck. Als organisches Lösungsmittel mit einem niedrigen Siedepunkt können beispielsweise Methanol, Ethanol, 1-Propanol, 2-Propanol, tert-Butanol, Aceton, Diethylether, tert-Butylmethylether, Tetrahydrofuran, Chloroform, 1,2-Dichlorethan, Methylenchlorid, Cyclohexan, Essigsäureethylester, n-Hexan, n-Heptan und/oder Methylethylketon eingesetzt werden. Bevorzugt wird als organisches Lösungsmittel mit einem niedrigen Siedepunkt Methanol, Ethanol, 1-Propanol und/oder 2-Propanol eingesetzt.

Als organisches Lösungsmittel mit einem mittleren Siedepunkt können beispielsweise 1-Methoxy-2-propanol, 1-Butanol, Dibutylether, 1,4-Dioxan, 3-Methyl-1-butanol, 4-Hydroxy-4-methyl-2-pentanon, Methylisobutylketon und/oder Toluol eingesetzt werden. Bevorzugt wird als Lösungsmittel mit einem mittleren Siedepunkt 1-Methoxy-2-propanol und/oder 4-Hydroxy-4-methyl-2-pentanon eingesetzt.

Bevorzugt liegt das Gewichtsverhältnis des wenigstens einen organischen Lösungsmittels mit einem niedrigen Siedepunkt zu wenigstens einem organischen Lösungsmittel mit einem mittleren Siedepunkt bei 1:1, weiter bevorzugt bei 1:1,4, besonders bevorzugt bei 1:1,5 und ganz besonders bevorzugt bei 1:1,7.

Die zur Herstellung der wenigstens einen chemisch modifizierten Primer-Lackschicht einsetzbare Beschichtungszusammensetzung kann als Lösungsmittel neben wenigstens einem organischen Lösungsmittel mit einem niedrigen Siedepunkt und wenigstens einem organischen Lösungsmittel mit einem mittleren Siedepunkt zusätzlich Wasser umfassen. Hierbei liegt das Gewichtsverhältnis des wenigstens einen organischen Lösungsmittels mit einem niedrigen Siedepunkt zu wenigstens einem organischen Lösungsmittel mit einem mittleren Siedepunkt zu Wasser bevorzugt bei 2:7:1, weiter bevorzugt bei 2,5:6,5:1, weiter bevorzugt bei 3:6:1, besonders bevorzugt bei 3:5:1 und ganz besonders bevorzugt bei 3:6:1.

Die Beschichtungszusammensetzung zur Herstellung der wenigstens einen chemisch modifizierten Primer-Lackschicht umfasst wenigstens eine Base, welche der wenigstens einen chemisch modifizierten Primer-Lackschicht bevorzugt eine pH-puffernde Wirkung verleiht und somit verlangsamt, bevorzugt verhindert, dass pH-saure Komponenten mit einer substratnäheren Schicht, in Kontakt kommen. Die Beschichtungszusammensetzung zur Herstellung der wenigstens einen chemisch modifizierten Primer-Lackschicht umfasst die wenigstens eine Base in einem Anteil aus bevorzugt einem Bereich von 0,1 Gew.-% bis 3,2 Gew.-%, weiter bevorzugt aus einem Bereich von 0,2 Gew.-% bis 2,8 Gew-%, weiter bevorzugt aus einem Bereich von 0,3 Gew.-% bis 2,4 Gew.-%, besonders bevorzugt aus einem Bereich von 0,4 Gew.-% bis 1,9 Gew.-% und ganz besonders bevorzugt aus einem Bereich von 0,5 Gew.-% bis 1,6 Gew.-%, jeweils bezogen auf das Gesamtgewicht der Beschichtungszusammensetzung. Vorstehend genannte Anteile gelten sowohl bei der Verwendung einer einzigen Art von Base als auch bei der Verwendung einer Mischung voneinander verschiedener Basen.

Die Beschichtungszusammensetzung zur Herstellung der wenigstens einen chemisch modifizierten Primer-Lackschicht kann beispielsweise Imidazol, 1-Methylimidazol, 2-Methylimidazol, 4-Methylimidazol, 2,5-Dimethylimidazol, 4-Hydroxymethylimidazol, Pyrazol, 1,2,3-Triazol, 1,2,4-Triazol, Tetrazol, Pentazol, Pyrrol, Pyrrolidin, Pyridin, 4-Aminopyridin, 4-Methylpyridin, 4-Methoxypyridin, 2,4,6-Trimethylpyridin, Piperidin, Piperazin, Triethylamin, Di-isopropylamin, Di-isobutylamin, Natronlauge und/oder Kalilauge als Base umfassen. Bevorzugt umfasst die wenigstens eine chemisch modifizierte Primer-Lackschicht wenigstens eine Base ausgewählt aus der Gruppe bestehend aus 2-Methlyimidazol, Imidazol, 1-Methylimidazol, 4-Methylimidazol, 2,5-Dimethylimidazol, Triethylamin oder Natronlauge, besonders bevorzugt wenigstens eine Base ausgewählt aus der Gruppe bestehend aus 2-Methylimidazol, 1-Methylimidazol, 4-Methylimidazol und Natronlauge. Ganz besonders bevorzugt umfasst die Beschichtungszusammensetzung zur Herstellung der wenigstens einen chemisch modifizierten Primer-Lackschicht wenigstens eine Base ausgewählt aus der Gruppe bestehend aus 2-Methylimidazol und 1-Methylimidazol in einem Anteil aus einem Bereich von 0,1 Gew.-% bis 2 Gew.-%, bevorzugt aus einem Bereich von 0,3 Gew.-% bis 1,5 Gew.-%, jeweils bezogen auf das Gesamtgewicht der Beschichtungszusammensetzung zur Herstellung der wenigstens einen chemisch modifizierten Primer-Lackschicht. Vorstehend genannte Anteile gelten sowohl für den Anteil einer Mischung umfassend 2-Methylimidazol und 1-Methylimidazol als auch für den Anteil von 2-Methylimidazol oder 1-Methylimidazol.

Die Beschichtungszusammensetzung zur Herstellung der wenigstens einen chemisch modifizierten Primer-Lackschicht kann optional wenigstens ein Additiv umfassen. Das wenigstens eine Additiv kann hierbei ein Dispergiermittel, ein Antiabsetzmittel, ein Netzmittel, einschließlich einem Antikrateradditiv oder einem Verlaufsadditiv, ein Biozid und/oder ein UV-Absorber sein. Die Beschichtungszusammensetzung zur Herstellung der wenigstens einen chemisch modifizierten Primer-Lackschicht umfasst das optional vorhandene, wenigstens eine Additiv bevorzugt in einem Anteil aus einem Bereich von 0,01 Gew.-% bis 1,7 Gew.-%, weiter bevorzugt in einem Anteil aus einem Bereich von 0,07 Gew.-% bis 1,4 Gew.-%, besonders bevorzugt in einem Anteil aus einem Bereich von 0,09 Gew.-% bis 1,1 Gew.-% und ganz besonders bevorzugt in einem Anteil aus einem Bereich von 0,1 Gew.-% bis 0,7 Gew.-%, jeweils bezogen auf das Gesamtgewicht der Beschichtungszusammensetzung. Vorstehend genannte Anteile gelten sowohl für den Einsatz einer Art eines Additivs als auch für den Einsatz einer Mischung voneinander verschiedener Additive.

Die Anteile der einzelnen vorstehend beschriebenen Komponenten werden so eingesetzt, dass sie sich zu 100 Gew.-% in der für die Herstellung der wenigstens einen chemisch modifizierten Primer-Lackschicht einzusetzenden Beschichtungszusammensetzung addieren.

Umfasst die wenigstens eine weitere verschiedene Schicht wenigstens eine Primer-Lackschicht wird zu deren Herstellung bevorzugt eine Beschichtungszusammensetzung umfassend

i) wenigstens eine wässrige aliphatische, cycloaliphatische, aromatische oder heteroaromatische Polyurethandispersion, wenigstens eine wässrige aliphatische, cycloaliphatische, aromatische oder heteroaromatische Polyharnstoffdispersion, wenigstens eine wässrige aliphatische, cycloaliphatische, aromatische oder heteroaromatische Polyurethan-Polyharnstoffdispersion und/oder wenigstens eine wässrige aliphatische, cycloaliphatische, aromatische oder heteroaromatische Polyesterdispersion, besonders bevorzugt wenigstens eine wässrige aliphatische Polyurethandispersion oder wenigstens eine wässrige aliphatische Polyesterdispersion und ganz besonders bevorzugt wenigstens eine wässrige aliphatische Polyurethandispersion,
ii) wenigstens ein Lösungsmittel sowie

iii) optional wenigstens ein Additiv

eingesetzt.

Der Anteil der wenigstens einen wässrigen aliphatischen, cycloaliphatischen, aromatischen oder heteroaromatischen Polyurethandispersion, der wenigstens einen wässrigen aliphatischen, cycloaliphatischen, aromatischen oder heteroaromatischen Polyharnstoffdispersion, der wenigstens einen wässrigen aliphatischen, cycloaliphatischen, aromatischen oder heteroaromatischen Polyurethan-Polyharnstoffdispersion und/oder der wenigstens einen wässrigen aliphatischen, cycloaliphatischen, aromatischen oder heteroaromatischen Polyesterdispersion in der zur Herstellung der wenigstens einen Primer-Lackschicht einsetzbaren Beschichtungszusammensetzung weist bevorzugt einen Gesamtanteil aus einem Bereich von 2 Gew.-% bis 38 Gew.-%, weiter bevorzugt aus einem Bereich von 4 Gew.-% bis 34 Gew.-%, weiter bevorzugt aus einem Bereich von 5 Gew.-% bis 28 Gew.-%, besonders bevorzugt aus einem Bereich von 6 Gew.-% bis 25 Gew.-% und ganz besonders bevorzugt aus einem Bereich von 7 Gew.-% bis 21 Gew.-%, jeweils bezogen auf das Gesamtgewicht der Beschichtungszusammensetzung, auf. Der Gesamtanteil umfasst hierbei sowohl den Anteil nur einer der vorstehend aufgeführten Dispersionen als auch eine Mischung aus vorstehend aufgeführten Dispersionen.

Bevorzugt umfasst die zur Herstellung der wenigstens einen Primer-Lackschicht einsetzbare Beschichtungszusammensetzung eine wässrige Polyurethandispersion, wobei das Polyurethan als Spacer bevorzugt eine Polyestereinheit aufweist. Bevorzugt einzusetzende wässrige Polyurethandispersionen sind in WO 94/17116 A1, insbesondere in WO 94/17116 A1, Seite 7, Zeilen 11 bis 33, offenbart. Die wässrige Polyurethandispersion kann mit einer anionisch stabilisierten Acrylemulsion stabilisiert sein, wie dies beispielsweise in WO 94/17116 A1, insbesondere WO 94/17116 A1, Seite 7, Zeilen 33 bis 35, offenbart ist.

Der Anteil des wenigstens einen Lösungsmittels in der zur Herstellung der wenigstens einen Primer-Lackschicht einsetzbaren Beschichtungszusammensetzung liegt bevorzugt in einem Bereich von 69 Gew.-% bis 98 Gew.-%, weiter bevorzugt in einem Bereich von 68 Gew.-% bis 99 Gew.-%, besonders bevorzugt in einem Bereich von 81 Gew.-% bis 97 Gew.-% und ganz besonders bevorzugt in einem Bereich von 89 Gew.-% bis 93 Gew.-%, jeweils bezogen auf das Gesamtgewicht der Beschichtungszusammensetzung. Vorstehend genannte Anteile gelten sowohl für die Verwendung einer Mischung voneinander verschiedener Lösungsmittel als auch für die Verwendung eines einzelnen Lösungsmittels. Die zur Herstellung der wenigstens einen Primer-Lackschicht einsetzbare Beschichtungszusammensetzung umfasst bevorzugt wenigstens ein organisches Lösungsmittel mit einem niedrigen Siedepunkt von < 100°C bei Normaldruck und wenigstens ein organisches Lösungsmittel mit einem mittleren Siedepunkt aus einem Bereich von 100°C bis 150°C bei Normaldruck. Als organisches Lösungsmittel mit einem niedrigen Siedepunkt können beispielsweise Methanol, Ethanol, 1-Propanol, 2-Propanol, tert-Butanol, Aceton, Diethylether, tert-Butylmethylether, Tetrahydrofuran, Chloroform, 1,2-Dichlorethan, Methylenchlorid, Cyclohexan, Essigsäureethylester, n-Hexan, n-Heptan und/oder Methylethylketon eingesetzt werden. Bevorzugt wird als organisches Lösungsmittel mit einem niedrigen Siedepunkt Methanol, Ethanol, 1-Propanol und/oder 2-Propanol eingesetzt.

Als organisches Lösungsmittel mit einem mittleren Siedepunkt können beispielsweise 1-Methoxy-2-propanol, 1-Butanol, Dibutylether, 1,4-Dioxan, 3-Methyl-1-butanol, 4-Hydroxy-4-methyl-2-pentanon, Methylisobutylketon und/oder Toluol eingesetzt werden. Bevorzugt wird als Lösungsmittel mit einem mittleren Siedepunkt 1-Methoxy-2-propanol und/oder 4-Hydroxy-4-methyl-2-pentanon eingesetzt. Bevorzugt liegt das Gewichtsverhältnis des wenigstens einen organischen Lösungsmittels mit einem niedrigen Siedepunkt zu wenigstens einem organischen Lösungsmittel mit einem mittleren Siedepunkt bei 1:1, weiter bevorzugt bei 1:1,4, besonders bevorzugt bei 1:1,5 und ganz besonders bevorzugt bei 1:1,7. Die zur Herstellung der wenigstens einen Primer-Lackschicht einsetzbare Beschichtungszusammensetzung kann als Lösungsmittel neben wenigstens einem organischen Lösungsmittel mit einem niedrigen Siedepunkt und wenigstens einem organischen Lösungsmittel mit einem mittleren Siedepunkt zusätzlich Wasser umfassen. Hierbei liegt das Gewichtsverhältnis des wenigstens einen organischen Lösungsmittels mit einem niedrigen Siedepunkt zu wenigstens einem organischen Lösungsmittel mit einem mittleren Siedepunkt zu Wasser bevorzugt bei 2:7:1, weiter bevorzugt bei 2,5:6,5:1, weiter bevorzugt bei 3:6:1, besonders bevorzugt bei 3:5:1 und ganz besonders bevorzugt bei 3:6:1.

Die Beschichtungszusammensetzung zur Herstellung der wenigstens einen Primer-Lackschicht kann optional wenigstens ein Additiv umfassen. Das wenigstens eine Additiv kann hierbei ein Dispergiermittel, ein Antiabsetzmittel, ein Netzmittel, einschließlich einem Antikrateradditiv oder einem Verlaufsadditiv, ein Biozide, ein UV-Absorber und/oder eine Mischung hiervon sein. Die Beschichtungszusammensetzung zur Herstellung der wenigstens einen Primer-Lackschicht umfasst das optional vorhandene, wenigstens eine Additiv bevorzugt in einem Anteil aus einem Bereich von 0,01 Gew.-% bis 1,7 Gew.-%, weiter bevorzugt in einem Anteil aus einem Bereich von 0,07 Gew.-% bis 1,4 Gew.-%, besonders bevorzugt in einem Anteil aus einem Bereich von 0,09 Gew.-% bis 1,1 Gew.-% und ganz besonders bevorzugt in einem Anteil aus einem Bereich von 0,1 Gew.-% bis 0,7 Gew.-%, jeweils bezogen auf das Gesamtgewicht der Beschichtungszusammensetzung. Vorstehend genannte Anteile gelten sowohl für den Einsatz einer Art eines Additivs als auch für den Einsatz einer Mischung voneinander verschiedener Additive.

Die Anteile der einzelnen vorstehend beschriebenen Komponenten werden so eingesetzt, dass sie sich zu 100 Gew.-

% in der für die Herstellung der wenigstens einen Primer-Lackschicht einzusetzenden Beschichtungszusammensetzung addieren.

Umfasst die wenigstens eine weitere verschiedene zusätzlich oder alternativ zu einer der beiden vorstehend beschriebenen Primer-Lackschichten wenigstens eine Hartlackschicht, wird zu deren Herstellung bevorzugt eine Zusammensetzung wie in EP 2 578 649 A1, insbesondere in EP 2 578 649 A1, Anspruch 1, beschrieben, eingesetzt. Besonders bevorzugt umfasst die Zusammensetzung für die Herstellung der wenigstens einen Hartlackschicht

a) wenigstens ein Silanderivat der Formel R1R23-nSi(OR3)n, wobei R1 eine unsubstituierte oder substituierte Alkylgruppe, Cycloalkylgruppe, Acylgruppe, Alkylenacylgruppe, Arylgruppe oder Alkylenarylgruppe ist, R2 ein organischer Rest ist, der eine Epoxidgruppe umfasst, R3 eine unsubstituierte oder substituierte Alkylgruppe, Cycloalkylgruppe, Arylgruppe oder Alkylenarylgruppe ist und n = 2 oder 3 ist und/oder ein Hydrolyseprodukt und/oder ein Kondensationsprodukt des Silanderivats der Formel R1R23-nSi(OR3)n,
b) wenigstens ein kolloidales anorganisches Oxid, Hydroxid, Oxidhydrat, Fluorid und/oder Oxyfluorid,
c) wenigstens eine Epoxidverbindung, die wenigstens zwei Epoxidgruppen aufweist und
d) wenigstens ein Katalysatorsystem, welches wenigstens eine Lewis-Säure und wenigstens ein thermolatentes Lewis-Säure-Basen-Addukt umfasst.

Die vorstehend beschriebene Zusammensetzung für die Herstellung der wenigstens einen Hartlackschicht umfasst das wenigstens eine Silanderivat der Formel R1R23-nSi(OR3)n und/oder dessen Hydrolyseprodukt und/oder Kondensationsprodukt bevorzugt in einem Anteil aus einem Bereich von 9 Gew.-% bis 81 Gew.-%, weiter bevorzugt aus einem Bereich von 13 Gew.-% bis 76 Gew.-%, besonders bevorzugt aus einem Bereich von 19 Gew.-% bis 71 Gew.-% und ganz besonders bevorzugt aus einem Bereich von 23 Gew.-% bis 66 Gew.-%, jeweils bezogen auf das Gesamtgewicht der Zusammensetzung. Vorstehend genannte Anteile beziehen sich sowohl auf die Verwendung einer Art eines Silanderivats der Formel R1R23-nSi(OR3)n und/oder dessen Hydrolyseprodukt und/oder dessen Kondensationsprodukt als auch auf die Verwendung einer Mischung voneinander verschiedener Silanderivate der Formel R1R23-nSi(OR3)n und/oder deren jeweiliges Hydrolyseprodukt und/oder deren jeweiliges Kondensationsprodukt. Als Silanderivat kann beispielsweise 3-Glycidoxymethyl-trimethoxysilan, 3-Glycidoxypropyltrihydroxysilan, 3-Glycidoxypropyl,dimethylhydroxysilan, 3-Glycidoxypropyldimethylethoxysilan, 3-Glycidoxypropylmethyldiethoxysilan, 3-Glycidoxypropyl,trimethoxysilan, 3-Glycidoxypropyl-triethoxysilan, 3-Glycidoxypropyldimethoxymethyl,silan, 3-Gycidoxypropyldiethoxymethylsilan und/oder 2-(3,4-Epoxycyclohexyl)ethyltrimethoxysilan eingesetzt werden. Bevorzugt wird als Silanderivat 3-Glycidoxypropyltrimethoxysilan und/oder 3-Glycidoxy-propyltriethoxysilan eingesetzt.

Die vorstehend beschriebene Zusammensetzung für die Herstellung der wenigstens einen Hartlackschicht umfasst das wenigstens eine kolloidale anorganische Oxid, Hydroxid, Oxidhydrat, Fluorid und/oder Oxyfluorid bevorzugt in einem Anteil aus einem Bereich von 3 Gew.-% bis 60 Gew.-%, weiter bevorzugt aus einem Bereich von 6 Gew.-% bis 58 Gew.-%, besonders bevorzugt aus einem Bereich von 9 Gew.-% bis 57 Gew.-% und ganz besonders bevorzugt aus einem Bereich von 13 Gew.-% bis 55 Gew.-%, jeweils bezogen auf das Gesamtgewicht der Zusammensetzung. Vorstehend genannte Anteile gelten sowohl bei der Verwendung einer einzigen Art eines kolloidalen anorganischen Oxids, Hydroxids, Oxidhydrats, Fluorids und/oder Oxyfluorids als auch bei der Verwendung einer Mischung voneinander verschiedener kolloidaler anorganischer Oxide, Hydroxide, Oxidhydrate, Fluoride und/oder Oxyfluoride. Bei dem anorganischen Oxid, Hydroxid, Oxidhydrat kann es sich beispielsweise um ein Metalloxid, Metallhydroxid und/oder Metalloxidhydrat aus oder mit Titan, bevorzugt $TiO_2$, aus oder mit Silizium, bevorzugt $SiO_2$, aus oder mit Zirkonium, bevorzugt $ZrO_2$, aus oder mit Zinn, bevorzugt $SnO_2$, aus oder mit Antimon, bevorzugt $Sb_2O_3$, aus oder mit Aluminium, bevorzugt $Al_2O_3$ oder $AlO(OH)$ und/oder Mischoxide und/oder um Mischungen hiervon handeln. Bevorzugt wird als anorganisches Oxid, Hydroxid, Oxidhydrat ein Metalloxid, Metallhydroxid, Metalloxidhydrat aus oder mit Titan, aus oder mit Silizium, aus oder mit Zirkonium und/oder Mischungen hiervon eingesetzt. Besonders bevorzugt wird als anorganisches Oxid, Hydroxid, Oxidhydrat ein Metalloxid, Metallhydroxid, Metalloxidhydrat aus oder mit Silizium, ganz besonders bevorzugt $SiO_2$ eingesetzt. Weiterhin bevorzugt weist das anorganische Oxid, Hydroxid, Oxidhydrat eine Kern-Hülle-Struktur auf. In diesem Fall umfasst der Kern bevorzugt ein Metalloxid, Metallhydroxid und/oder Metalloxidhydrat aus oder mit Titan, bevorzugt $TiO_2$, oder aus oder mit Zirkonium, bevorzugt $ZrO_2$, und die Hülle bevorzugt ein Metalloxid, Metallhydroxid und/oder Metalloxidhydrat aus oder mit Silizium. Bei dem anorganischen Fluorid kann es sich beispielsweise um Magnesiumfluorid handeln. Das wenigstens eine kolloidale anorganische Oxid, Hydroxid, Oxidhydrat, Fluorid und/oder Oxyfluorid weist jeweils bevorzugt eine mittlere Partikelgröße aus einem Bereich von 3 nm bis 70 nm, weiter bevorzugt aus einem Bereich von 6 nm bis 64 nm, besonders bevorzugt aus einem Bereich von 8 nm bis 56 nm und ganz besonders bevorzugt aus einem Bereich von 9 nm bis 52 nm, auf. Die vorstehend beschriebene Zusammensetzung für die Herstellung der wenigstens einen Hartlackschicht umfasst die wenigstens eine Epoxidverbindung bevorzugt in einem Anteil aus einem Bereich von 0,01 Gew.-% bis 14 Gew.-%, weiter bevorzugt aus einem Bereich von 0,07 Gew.-% bis 11 Gew.-%, besonders bevorzugt aus einem Bereich von 0,1 Gew.-% bis 6 Gew.-% und ganz besonders bevorzugt aus einem Bereich von 0,2 Gew.-% bis 3 Gew.-%, jeweils bezogen auf das Gesamtgewicht der Zusammensetzung. Vorstehend genannte Anteile gelten sowohl bei der Verwendung einer einzigen Art an Epoxidverbindung als auch für eine Mischung voneinander verschiedener Epoxidverbindungen. Die wenigstens eine Epoxidverbindung kann beispielsweise Digylcidylether, Ethylenglycoldiglycidylether, Propylenglycoldiglycolglycidylether, 1,4-Butandiol-diglycidylether, 1,6-Hexandioldiglycidylether, Trimethylolpropantriglycidylether, Triglycidylglycerin und/oder Trimethylolethantriglycidylether umfassen. Bevorzugt umfasst die wenigstens eine Epoxidverbindung Trimethylolpropantriglycidylether. Butandioldiglycidylether und/oder 1,6-Hexan-dioldiglycidylether.

Die vorstehend beschriebene Zusammensetzung für die Herstellung der wenigstens einen Hartlackschicht umfasst das wenigstens eine Katalysatorsystem bevorzugt in einem Anteil aus einem Bereich von 0,04 Gew.-% bis 4 Gew.-%, weiter bevorzugt aus einem Bereich von 0,1 Gew.-% bis 3 Gew.-%, besonders bevorzugt aus einem Bereich von 0,2 Gew.-% bis 2 Gew.-% und ganz besonders bevorzugt aus einem Bereich von 0,3 Gew.-% bis 1 Gew.-%, jeweils bezogen auf das Gesamtgewicht der Zusammensetzung. Im wenigstens einen Katalysatorsystem liegt das Gewichtsverhältnis der wenigstens einen Lewis-Säure zu dem wenigstens einen thermolatenten Lewis-Base-Addukt bevorzugt bei 20:1 bis 2:1, weiter bevorzugt bei 18:1 bis 1:2, besonders bevorzugt 13:1 bis 1:1 und ganz besonders bevorzugt bei 6:1 bis 1:1. Als wenigstens eine Lewis-Säure können beispielsweise Ammoniumperchlorat, Magnesiumperchlorat, Sulfonsäuren und/oder Sulfonsäuresalze, wie Trifluormethansulfonsäuren und/oder deren Salze, eingesetzt werden. Bevorzugt wird als wenigstens eine Lewis-Säure Ammoniumperchlorat und/oder Magnesiumperchlorat eingesetzt. Als wenigstens ein thermolatentes Lewis-Säure-Base-Addukt kann beispielsweise wenigstens eine Metallkomplexverbindung, wie Aluminiumacetylacetonat, Eisenacetylacetonat und/oder Zinkacetylacetonat eingesetzt werden. Bevorzugt wird als wenigstens ein thermolatentes Lewis-Säure-Base-Addukt Aluminiumacetylacetonat und/oder Eisenacetylacetonat eingesetzt.

Die vorstehend beschriebene Zusammensetzung für die Herstellung der wenigstens einen Hartlackschicht kann des Weiteren wenigstens ein organisches Lösungsmittel und/oder Wasser umfassen. Die Anteile der einzelnen vorstehend beschriebenen Komponenten werden so eingesetzt, dass sie sich zu 100 Gew.-% in der für die Herstellung der wenigstens einen Hartlackschicht einzusetzenden Zusammensetzung addieren. Alternativ zu vorstehend beschriebener Zusammensetzung für die Herstellung der wenigstens einen Hartlackschicht kann eine Zusammensetzung gemäß US 3,986,997 A, insbesondere gemäß US 3,986,997 A, Beispiel 7, Verwendung finden. Weiterhin alternativ kann für die Herstellung der wenigstens einen Hartlackschicht eine Zusammensetzung gemäß WO 98/46692 A1, insbesondere gemäß WO 98/46692 A1, Beispiel 21, oder gemäß US 6,538,092 B1, insbesondere gemäß US 6,538,092 B1, Beispiel 1, eingesetzt werden.

Umfasst die wenigstens eine weitere Schicht alternativ oder zusätzlich zu einer der vorstehend beschriebenen Primer-Lackschichten und/oder zu einer der vorstehend beschriebenen Hartllackschichten, wenigstens eine Entspiegelungsschicht, umfasst diese als bevorzugt am weitesten vom Substrat entfernt liegende Schicht, bevorzugt alternierende diskrete Metalloxid-, Metallhydroxid- und/oder Metalloxidhydratschichten aus oder mit Eisen, Zinn, Nickel, Molybdän, Cer, Kupfer, Aluminium, Silizium, Zirkonium, Titan, Yttrium, Tantal, Neodym, Lanthan, Niob und/oder Praseodym. Bevorzugt umfasst die wenigstens eine Entspiegelungsschicht wenigstens eine Metalloxid-, Metallhydroxid- und/oder Metalloxidhydratschicht aus oder mit Silizium, wobei diese wenigstens eine Siliziumoxid-, Siliziumhydroxid- und/oder Siliziumoxidhydratschicht auf der Vorderfläche bevorzugt die objektseitig bzw. auf der Rückfläche bevorzugt die augenseitig außenliegende Schicht der wenigstens einen Entspieglungsschicht ausbildet. Unter außenliegender Schicht wird in diesem Zusammenhang diejenige Schicht der Entspiegelungsschicht verstanden, welche sich in der Schichtenfolge am weitesten augenseitig bzw. am weitesten objektseitig befindet. Die wenigstens eine Entspiegelungsschicht weist bevorzugt eine Gesamtschichtdicke aus einem Bereich von 97 nm bis 420 nm, bevorzugt aus einem Bereich von 102 nm bis 360 nm, weiter bevorzugt aus einem Bereich von 111 nm bis 310 nm, besonders bevorzugt aus einem Bereich von 122 nm bis 270 nm und ganz besonders bevorzugt aus einem Bereich von 131 nm bis 223 nm auf.

Die wenigstens eine Entspiegelungsschicht kann beispielsweise folgende Schichtenfolge von substratzugewandt zu substratabgewandt aufweisen:

a) Metalloxid, Metallhydroxid und/oder Metalloxidhydratschicht aus oder mit Titan,
b) Metalloxid, Metallhydroxid und/oder Metalloxidhydratschicht aus oder mit Silizium,
c) Metalloxid, Metallhydroxid und/oder Metalloxidhydratschicht aus oder mit Titan,
d) Metalloxid, Metallhydroxid und/oder Metalloxidhydratschicht aus oder mit Silizium,
e) Metalloxid, Metallhydroxid und/oder Metalloxidhydratschicht aus oder mit Titan,
f) Metalloxid, Metallhydroxid und/oder Metalloxidhydratschicht aus oder mit Silizium.

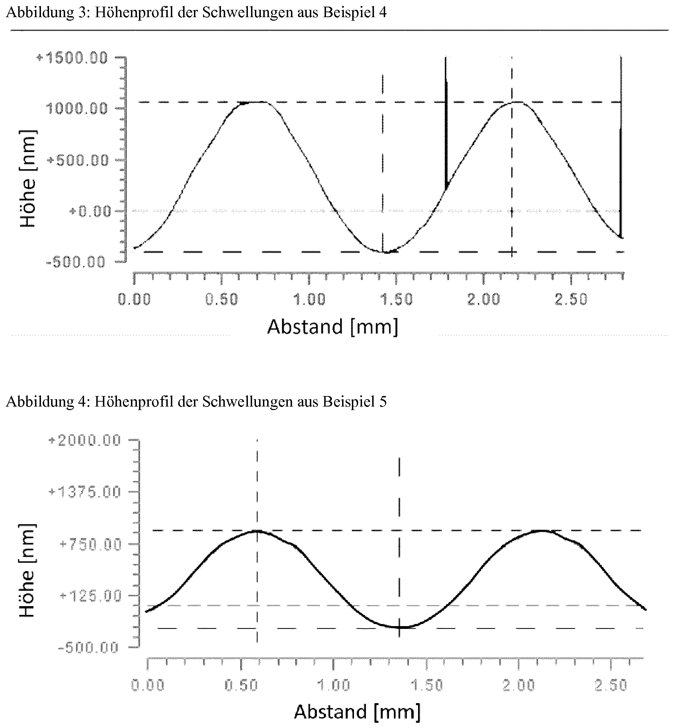

Die wenigstens eine Entspieglungsschicht kann weiterhin die in EP 2 437 084 A1, in den Figuren 3 und 5, jeweils die zwischen der superhydrohoben Schicht und der Hartlackschicht aufgezeigte Schichtenfolge und Schichtdicke aufweisen. Bevorzugt ist im Rahmen dieser Erfindung die dort jeweils an die Hartlackschicht angrenzende Schicht augenseitig und die jeweils an die superhydrophobe Schicht angrenzende Schicht objektseitig auf der Vorderfläche bzw. die dort jeweils an die Hartlackschicht angrenzende Schicht objektseitig und die jeweils an die superhydrophobe Schicht angrenzende Schicht augenseitig in der Schichtenfolge auf der Rückfläche angeordnet.

Umfasst die wenigstens eine weitere verschiedene Schicht zusätzlich oder alternativ zu den vorstehend bereits näher beschriebenen Schichten wenigstens eine elektrisch leitfähige oder halbleitende Schicht, welche auch Bestandteil der wenigstens einen Entspiegelungsschicht sein kann, umfasst diese bevorzugt eine Schicht aus oder mit Indium-Zinn-Oxid $(((In_2O_3)_{0.9}(SnO_2)_{0.1}$; ITO), Fluor-Zinn-Oxid $(SnO_2$:F; FTO), Aluminium-Zink-Oxid (ZnO:Al; AZO) und/oder Antimon-Zinn-Oxid $(SnO_2$:Sb; ATO). Besonders bevorzugt umfasst die elektrisch leitfähige oder halbleitende Schicht eine Schicht aus oder mit ITO bzw. aus oder mit FTO.

Umfasst die wenigstens eine weitere verschiedene Schicht zusätzlich oder alternativ zu den vorstehend beschriebenen weiteren Schichten wenigstens eine Clean-Coat-Schicht umfasst diese bevorzugt ein Material mit oleophoben und hydrophoben Eigenschaften, wie beispielsweise in EP 1 392 613 A1 offenbart, auf dem Wasser einen Kontaktwinkel von mehr als 90°, bevorzugt von mehr als 100° und besonders bevorzugt mehr als 110° einnimmt. Die wenigstens eine Clean-Coat-Schicht umfasst besonders bevorzugt eine fluororganische Schicht mit kovalenter Anbindung an das Substrat gemäß DE 198 48 591 A1, Anspruch 1, oder eine Schicht auf Basis von Perfluorpolyethern.

Umfasst die wenigstens eine weitere verschiedene Schicht zusätzlich oder alternativ zu den vorstehend beschriebenen weiteren Schichten wenigstens eine Antibeschlagschicht, umfasst diese bevorzugt ein Silanderivat gemäß EP 2 664 659 A1, besonders bevorzugt gemäß Anspruch 4 der EP 2 664 659 A1. Alternativ kann die wenigstens eine Antibeschlagschicht auch gemäß dem in DE 10 2015 209 794 A1 beschriebenen Verfahren, insbesondere gemäß des in Anspruch 1 der DE 10 2015 209 794 A1 beschriebenen Verfahrens, hergestellt werden.

Die wenigstens eine Clean-Coat-Schicht oder die wenigstens Antibeschlagschicht stellen bevorzugt alternativ die am weitesten vom Substrat entfernte Schicht in der Schichtenfolge der Beschichtung dar.

Entspricht der Brechungsindex der wenigstens einen Beschichtung des Maskierungsmittels dem Brechungsindex der wenigstens einen Schicht, welche durch Inkontaktbringen mit wenigstens einem Medium ihre Oberflächentopografie verändern kann, so wird bevorzugt diese wenigstens eine Beschichtung des Maskierungsmittels vor einer weiteren Beschichtung entfernt, da sonst die entstandenen Veränderungen der Oberflächentopographie gegebenenfalls optisch nicht mehr wirksam sind. Entspricht der Brechungsindex der wenigstens einen Beschichtung des Maskierungsmittels nicht dem Brechungsindex der wenigstens einen Schicht, welche durch Inkontaktbringen mit wenigstens einem Medium ihre Oberflächentopografie verändern kann, so können nachfolgende weitere Beschichtungen auf der wenigstens einen Beschichtung des Maskierungsmittels erfolgen. Hierbei wird wie bereits vorstehend beschrieben die jeweilige Schichtdicke und der Abstand der veränderten Oberflächentopographie zur unveränderten Oberfläche berücksichtigt.

Die Veränderung der Oberflächentopographie ist, wie eingangs bereits erwähnt, bevorzugt irreversibel. Nach Beschichtung mit wenigstens einer der vorstehend genannten weiteren verschiedenen Schichten ist diese irreversible Veränderung der Oberflächentopographie bei Raumtemperatur, d.h. einer Temperatur von 22°C $\pm$ 2°C, über einen Zeitraum von wenigstens 8 Monaten auch langzeitstabil.

Das Inkontaktbringen der wenigstens einen Schicht, welche ihre Oberflächentopographie verändern kann, mit wenigstens einem Medium ermöglicht die Herstellung eines Erzeugnisses umfassend

(i) ein Brillenglas oder
(ii) ein Brillenglas und Anweisungen zum Gebrauch des Brillenglases oder
(iii) eine auf einem Datenträger in Form von computerlesbaren Daten befindliche Darstellung des Brillenglases oder
(iv) eine auf einem Datenträger in Form von computerlesbaren Daten befindliche Darstellung des Brillenglases und Anweisungen zum Gebrauch des Brillenglases oder
(v) einen Datenträger mit einer virtuellen Darstellung des Brillenglases in Form von computerlesbaren Daten oder
(vi) einen Datenträger mit einer virtuellen Darstellung eines Brillenglases in Form von computerlesbaren Daten und Anweisungen zum Gebrauch des Brillenglases oder
(vii) eine Darstellung des Brillenglases in Form eines computerlesbaren Datensignals oder
(viii) eine Darstellung des Brillenglases in Form eines computerlesbaren Datensignals und Anweisungen zum Gebrauch des Brillenglases, wobei jeweils

- das Brillenglas ein Substrat mit einer Vorderfläche und einer Rückfläche umfasst,
- die Vorderfläche des Substrats eine sphärische Oberflächengeometrie, eine asphärische Oberflächengeometrie, eine torische Oberflächengeometrie, eine atorische Oberflächengeometrie, eine plane Oberflächengeometrie oder eine Freiformflächengeometrie aufweist,
- die Rückfläche des Substrats eine sphärische Oberflächengeometrie, eine asphärische Oberflächengeometrie, eine torische Oberflächengeometrie, eine atorische Oberflächengeometrie, eine plane Oberflächengeometrie oder eine Freiformflächengeometrie aufweist,
- die Vorderfläche und/oder die Rückfläche des Substrats jeweils zumindest teilweise oder jeweils vollflächig wenigstens eine Schicht umfasst, welche durch Inkontaktbringen mit wenigstens einem Medium eine Vielzahl von unabhängigen inselförmigen Bereichen in einem Radius um den Ferndurchblickpunkt bei Einstärkengläsern bzw. um den Prismenbezugspunkt bei Mehrstärkengläsern oder bei Wirkungsvariationsgläsern von jeweils 0,5 cm bis 2,0 cm ausbildet,

- das Brillenglas wenigstens eine der folgenden optischen Anforderungen erfüllt:

(1) keine dioptrische Wirkung,

(2) für ein fertiges Einstärkenglas oder ein fertiges Mehrstärkenglas: eine verordnete dioptrische Wirkung liegt innerhalb der Grenzabweichungen für den bildseitigen Scheitelbrechwert gemäß DIN EN ISO 8980-1:2017-12, Kapitel 5.2.2, insbesondere Kapitel 5.2.2, Tabelle 1, innerhalb der Grenzabweichungen für die Richtung der Zylinderachse gemäß DIN EN ISO 8980-1:2017-12, Kapitel 5.2.3, insbesondere Kapitel 5.2.3, Tabelle 2, innerhalb der Grenzabweichungen für den Nahzusatz von Mehrstärkengläsern gemäß DIN EN ISO 8980-1:2017-12, Kapitel 5.2.4, insbesondere gemäß Kapitel 5.2.4, Tabelle 3, sowie innerhalb der Grenzabweichungen für die prismatische Wirkung gemäß DIN EN ISO 8980-1:2017-12, Kapitel 5.2.5, insbesondere gemäß Kapitel 5.2.5, Tabelle 4,

(3) für fertiges Wirkungsvariationsglas: eine verordnete dioptrische Wirkung liegt innerhalb der Grenzabweichungen für den bildseitigen Scheitelbrechwert von Wirkungsvariationsgläsern gemäß DIN EN ISO 8980-2:2017-12, Kapitel 5.2.2, insbesondere Kapitel 5.2.2, Tabelle 1, innerhalb der Grenzabweichungen für die Richtung der Zylinderachse gemäß DIN EN ISO 8980-2:2017-12, Kapitel 5.2.3, insbesondere Kapitel 5.2.3, Tabelle 2, innerhalb der Grenzabweichungen für die Wirkungsänderung (einschließlich Nahzusatz) gemäß DIN EN ISO 8980-2:2017-12, Kapitel 5.2.4, insbesondere gemäß Kapitel 5.2.4, Tabelle 3, sowie innerhalb der Grenzabweichungen für die prismatische Wirkung gemäß DIN EN ISO 8980-2:2017-12, Kapitel 5.2.5, insbesondere Kapitel 5.2.5, Tabelle 4,

(4) die unabhängigen inselförmigen Bereiche jeweils ein Bild an einer anderen Position als der Netzhaut des Auges abbilden, wobei

das Brillenglas wenigstens eine der optischen Anforderungen (1) bis (3) und die optische Anforderung (4) erfüllt.

Die Vielzahl von unabhängigen Bereich, bevorzugt die Vielzahl von unabhängigen Bereichen analog US 2017/0131567 A1, wird durch Inkontaktbringen der Oberfläche der wenigstens einen Schicht, welche sich auf der Vorderfläche des Substrats befindet, mit wenigstens einem Medium erhalten. Die Vorderfläche des Substrats weist bevorzugt eine sphärische Oberflächengeometrie oder eine plane Oberflächengeometrie auf. Die Rückfläche des Substrats weist bevorzugt eine sphärische Oberflächengeometrie, eine torische Oberflächengeometrie oder eine Freiformflächengeometrie auf.

In einer weiteren Ausführungsform ermöglicht das Inkontaktbringen der wenigstens einen Schicht, welche ihre Oberflächentopographie verändern kann, mit wenigstens einem Medium die Herstellung eines Erzeugnisses umfassend

(i) ein Brillenglas oder

(ii) ein Brillenglas und Anweisungen zum Gebrauch des Brillenglases oder

(iii) eine auf einem Datenträger in Form von computerlesbaren Daten befindliche Darstellung des Brillenglases oder

(iv) eine auf einem Datenträger in Form von computerlesbaren Daten befindliche Darstellung des Brillenglases und Anweisungen zum Gebrauch des Brillenglases oder

(v) einen Datenträger mit einer virtuellen Darstellung des Brillenglases in Form von computerlesbaren Daten oder

(vi) einen Datenträger mit einer virtuellen Darstellung des Brillenglases in Form von computerlesbaren Daten und mit Anweisungen zum Gebrauch des Brillenglases oder

(vii) eine Darstellung des Brillenglases in Form eines computerlesbaren Datensignals oder

(viii) eine Darstellung des Brillenglases in Form eines computerlesbaren Datensignals und Anweisungen zum Gebrauch des Brillenglases, wobei jeweils

- das Brillenglas ein Substrat mit einer Vorderfläche und einer Rückfläche umfasst,
- die Vorderfläche des Substrats eine sphärische Oberflächengeometrie, eine asphärische Oberflächengeometrie, eine torische Oberflächengeometrie, eine atorische Oberflächengeometrie, eine plane Oberflächengeometrie oder eine Freiformflächengeometrie aufweist,
- die Rückfläche des Substrats eine sphärische Oberflächengeometrie, eine asphärische Oberflächengeometrie, eine torische Oberflächengeometrie, eine atorische Oberflächengeometrie, eine plane Oberflächengeometrie oder eine Freiformflächengeometrie aufweist,
- die Vorderfläche und/oder die Rückfläche des Substrats jeweils zumindest teilweise oder jeweils vollflächig wenigstens eine Schicht umfasst, welche durch Inkontaktbringen mit wenigstens einem Medium eine Vielzahl von wenigstens drei nicht zusammenhängenden optischen Elementen ausbildet,
- das Brillenglas wenigstens eine der folgenden optischen Anforderungen erfüllt:

(1) keine dioptrische Wirkung,

(2) für ein fertiges Einstärkenglas oder ein fertiges Mehrstärkenglas: eine verordnete dioptrische Wirkung liegt innerhalb der Grenzabweichungen für den bildseitigen Scheitelbrechwert gemäß DIN EN ISO 8980-1:2017-12, Kapitel 5.2.2, insbesondere Kapitel 5.2.2, Tabelle 1, innerhalb der Grenzabweichungen für die Richtung der Zylinderachse gemäß DIN EN ISO 8980-1:2017-12, Kapitel 5.2.3, insbesondere Kapitel 5.2.3, Tabelle 2, innerhalb der Grenzabweichungen für den Nahzusatz von Mehrstärkengläsern gemäß DIN EN ISO 8980-1:2017-12, Kapitel 5.2.4, insbesondere gemäß Kapitel 5.2.4, Tabelle 3, sowie innerhalb der Grenzabweichungen für die prismatische Wirkung gemäß DIN EN ISO 8980-1:2017-12, Kapitel 5.2.5, insbesondere gemäß Kapitel 5.2.5, Tabelle 4,

(3) für fertiges Wirkungsvariationsglas: eine verordnete dioptrische Wirkung liegt innerhalb der Grenzabweichungen für den bildseitigen Scheitelbrechwert von Wirkungsvariationsgläsern gemäß DIN EN ISO 8980-2:2017-12, Kapitel 5.2.2, insbesondere Kapitel 5.2.2, Tabelle 1, innerhalb der Grenzabweichungen für die Richtung der Zylinderachse gemäß DIN EN ISO 8980-2:2017-12, Kapitel 5.2.3, insbesondere Kapitel 5.2.3, Tabelle 2, innerhalb der Grenzabweichungen für die Wirkungsänderung (einschließlich Nahzusatz) gemäß DIN EN ISO 8980-2:2017-12, Kapitel 5.2.4, insbesondere gemäß Kapitel 5.2.4, Tabelle 3, sowie innerhalb der Grenzabweichungen für die prismatische Wirkung gemäß DIN EN ISO 8980-2:2017-12, Kapitel 5.2.5, insbesondere Kapitel 5.2.5, Tabelle 4,

(4) wenigstens eines der optischen Elemente eine nicht sphärische optische Wirkung aufweist, wobei das Brillenglas wenigstens eine der optischen Anforderungen (1) bis (3) und die optische Anforderung (4) erfüllt.

Die Vielzahl von wenigstens drei nicht zusammenhängenden optischen Elementen, bevorzugt die Vielzahl von wenigstens drei nicht zusammenhängenden optischen Elementen analog WO 2019/166653 A1, wird durch Inkontaktbringen der Oberfläche der wenigstens einen Schicht, welche sich auf der Vorderfläche des Substrats befindet, mit wenigstens einem Medium erhalten. Die Vorderfläche des Substrats weist bevorzugt eine sphärische Oberflächengeometrie oder eine plane Oberflächengeometrie auf. Die Rückfläche des Substrats weist bevorzugt eine sphärische Oberflächengeometrie, eine torische Oberflächengeometrie oder eine Freiformflächengeometrie auf. Weiterhin kann die Vorderfläche und/oder die Rückfläche des Substrats, bevorzugt die Vorderfläche des Substrats, welche jeweils zumindest teilweise oder jeweils vollflächig wenigstens eine Schicht umfasst, welche nach Inkontaktbringen mit wenigstens einem Medium eine Vielzahl von wenigstens drei nicht zusammenhängenden optischen Elementen analog WO 2019/166653 A1, Anspruch 1, ausbildet, wenigstens ein optisches Element umfassen, welches eine der in WO 2019/166653 A1, Seite 2, Zeile 11, bis Seite 5, Zeile 21, aufgeführten Eigenschaften aufweist.

In einer weiteren Ausführungsform ermöglicht das Inkontaktbringen der wenigstens einen Schicht, welche ihre Oberflächentopographie verändern kann, mit wenigstens einem Medium die Herstellung eines Erzeugnisses umfassend

(i) ein Brillenglas oder
(ii) ein Brillenglas und Anweisungen zum Gebrauch des Brillenglases oder
(iii) eine auf einem Datenträger in Form von computerlesbaren Daten befindliche Darstellung des Brillenglases oder
(iv) eine auf einem Datenträger in Form von computerlesbaren Daten befindliche Darstellung des Brillenglases und Anweisungen zum Gebrauch des Brillenglases oder
(v) einen Datenträger mit einer virtuellen Darstellung des Brillenglases in Form von computerlesbaren Daten oder
(vi) einen Datenträger mit einer virtuellen Darstellung des Brillenglases in Form von computerlesbaren Daten und mit Anweisungen zum Gebrauch des Brillenglases oder
(vii) eine Darstellung des Brillenglases in Form eines computerlesbaren Datensignals oder
(viii) eine Darstellung des Brillenglases in Form eines computerlesbaren Datensignals und Anweisungen zum Gebrauch des Brillenglases, wobei jeweils

- das Brillenglas ein Substrat mit einer Vorderfläche und einer Rückfläche umfasst,
- die Vorderfläche des Substrats eine sphärische Oberflächengeometrie, eine asphärische Oberflächengeometrie, eine torische Oberflächengeometrie, eine atorische Oberflächengeometrie, eine plane Oberflächengeometrie oder eine Freiformflächengeometrie aufweist,
- die Rückfläche des Substrats eine sphärische Oberflächengeometrie, eine asphärische Oberflächengeometrie, eine torische Oberflächengeometrie, eine atorische Oberflächengeometrie, eine plane Oberflächengeometrie oder eine Freiformflächengeometrie aufweist,
- die Vorderfläche und/oder die Rückfläche des Substrats jeweils zumindest teilweise oder jeweils vollflächig wenigstens eine Schicht umfasst, welche nach Inkontaktbringen mit wenigstens einem Medium eine Vielzahl von wenigstens drei optischen Elementen umfasst,
- das Brillenglas wenigstens eine der folgenden optischen Anforderungen erfüllt:

(1) keine dioptrische Wirkung,
(2) für ein fertiges Einstärkenglas oder ein fertiges Mehrstärkenglas: eine verordnete dioptrische Wirkung liegt innerhalb der Grenzabweichungen für den bildseitigen Scheitelbrechwert gemäß DIN EN ISO 8980-1:2017-12, Kapitel 5.2.2, insbesondere Kapitel 5.2.2, Tabelle 1, innerhalb der Grenzabweichungen für die Richtung der Zylinderachse gemäß DIN EN ISO 8980-1:2017-12, Kapitel 5.2.3, insbesondere Kapitel 5.2.3, Tabelle 2, innerhalb der Grenzabweichungen für den Nahzusatz von Mehrstärkengläsern gemäß DIN EN ISO 8980-1:2017-12, Kapitel 5.2.4, insbesondere gemäß Kapitel 5.2.4, Tabelle 3, sowie innerhalb der Grenzabweichungen für die prismatische Wirkung gemäß DIN EN ISO 8980-1:2017-12, Kapitel 5.2.5, insbesondere gemäß Kapitel 5.2.5, Tabelle 4,

(3) für fertiges Wirkungsvariationsglas: eine verordnete dioptrische Wirkung liegt innerhalb der Grenzabweichungen für den bildseitigen Scheitelbrechwert von Wirkungsvariationsgläsern gemäß DIN EN ISO 8980-2:2017-12, Kapitel 5.2.2, insbesondere Kapitel 5.2.2, Tabelle 1, innerhalb der Grenzabweichungen für die Richtung der Zylinderachse gemäß DIN EN ISO 8980-2:2017-12, Kapitel 5.2.3, insbesondere Kapitel 5.2.3, Tabelle 2, innerhalb der Grenzabweichungen für die Wirkungsänderung (einschließlich Nahzusatz) gemäß DIN EN ISO 8980-2:2017-12, Kapitel 5.2.4, insbesondere gemäß Kapitel 5.2.4, Tabelle 3, sowie innerhalb der Grenzabweichungen für die prismatische Wirkung gemäß DIN EN ISO 8980-2:2017-12, Kapitel 5.2.5, insbesondere Kapitel 5.2.5, Tabelle 4,

(4) wenigstens eines der optischen Elemente eine optische Wirkung aufweist, so dass ein Bild nicht auf der Netzhaut des Auges abgebildet wird, wobei

das Brillenglas wenigstens eine der optischen Anforderungen (1) bis (3) und die optische Anforderung (4) erfüllt.

Die Vielzahl von wenigstens drei optischen Elementen, bevorzugt die Vielzahl von wenigstens drei optischen Elementen analog WO 2019/166654 A1, wird durch Inkontaktbringen der Oberfläche der wenigstens einen Schicht, welche sich auf der Vorderfläche des Substrats befindet, mit wenigstens einem Medium erhalten. Die Vorderfläche des Substrats weist bevorzugt eine sphärische Oberflächengeometrie oder eine plane Oberflächengeometrie auf. Die Rückfläche des Substrats weist bevorzugt eine sphärische Oberflächengeometrie, eine torische Oberflächengeometrie oder eine Freiformflächengeometrie auf. Weiterhin kann die Vorderfläche und/oder die Rückfläche des Substrats, bevorzugt die Vorderfläche des Substrats, welche jeweils zumindest teilweise oder jeweils vollflächig wenigstens eine Schicht umfasst, welche nach Inkontaktbringen mit wenigstens einem Medium eine Vielzahl von wenigstens drei nicht zusammenhängenden optischen Elementen analog WO 2019/166654 A1, Anspruch 1, ausbildet, wenigstens ein optisches Element umfassen, welches eine der in WO 2019/166654 A1, Seite 2, Zeile 19, bis Seite 6, Zeile 3, aufgeführten Eigenschaften aufweist.

In einer weiteren Ausführungsform ermöglicht das Inkontaktbringen der wenigstens einen Schicht, welche ihre Oberflächentopographie verändern kann, mit wenigstens einem Medium die Herstellung eines Erzeugnisses umfassend

(i) ein Brillenglas oder

(ii) ein Brillenglas und Anweisungen zum Gebrauch des Brillenglases oder

(iii) eine auf einem Datenträger in Form von computerlesbaren Daten befindliche Darstellung des Brillenglases oder

(iv) eine auf einem Datenträger in Form von computerlesbaren Daten befindliche Darstellung des Brillenglases und Anweisungen zum Gebrauch des Brillenglases oder

(v) einen Datenträger mit einer virtuellen Darstellung des Brillenglases in Form von computerlesbaren Daten oder

(vi) einen Datenträger mit einer virtuellen Darstellung des Brillenglases in Form von computerlesbaren Daten und mit Anweisungen zum Gebrauch des Brillenglases oder

(vii) eine Darstellung des Brillenglases in Form eines computerlesbaren Datensignals oder

(viii) eine Darstellung des Brillenglases in Form eines computerlesbaren Datensignals und Anweisungen zum Gebrauch des Brillenglases, wobei jeweils

- das Brillenglas ein Substrat mit einer Vorderfläche und einer Rückfläche umfasst,
- die Vorderfläche des Substrats eine sphärische Oberflächengeometrie, eine asphärische Oberflächengeometrie, eine torische Oberflächengeometrie, eine atorische Oberflächengeometrie, eine plane Oberflächengeometrie oder eine Freiformflächengeometrie aufweist,
- die Rückfläche des Substrats eine sphärische Oberflächengeometrie, eine asphärische Oberflächengeometrie, eine torische Oberflächengeometrie, eine atorische Oberflächengeometrie, eine plane Oberflächengeometrie oder eine Freiformflächengeometrie aufweist,
- die Vorderfläche und/oder die Rückfläche des Substrats jeweils zumindest teilweise oder jeweils vollflächig wenigstens eine Schicht umfasst, welche nach Inkontaktbringen mit wenigstens einem Medium eine Vielzahl von wenigstens drei optischen Elementen umfasst,
- das Brillenglas wenigstens eine der folgenden optischen Anforderungen erfüllt:

(1) keine dioptrische Wirkung,

(2) für ein fertiges Einstärkenglas oder ein fertiges Mehrstärkenglas: eine verordnete dioptrische Wirkung liegt innerhalb der Grenzabweichungen für den bildseitigen Scheitelbrechwert gemäß DIN EN ISO 8980-1:2017-12, Kapitel 5.2.2, insbesondere Kapitel 5.2.2, Tabelle 1, innerhalb der Grenzabweichungen für die Richtung der Zylinderachse gemäß DIN EN ISO 8980-1:2017-12, Kapitel 5.2.3, insbesondere Kapitel 5.2.3, Tabelle 2, innerhalb der Grenzabweichungen für den Nahzusatz von Mehrstärkengläsern gemäß DIN EN ISO 8980-1:2017-12, Kapitel 5.2.4, insbesondere gemäß Kapitel 5.2.4, Tabelle 3, sowie innerhalb der Grenzabweichungen für die prismatische Wirkung gemäß DIN EN ISO 8980-1:2017-12, Kapitel 5.2.5, insbesondere gemäß Kapitel 5.2.5, Tabelle 4,

(3) für fertiges Wirkungsvariationsglas: eine verordnete dioptrische Wirkung liegt innerhalb der Grenzabweichungen für den bildseitigen Scheitelbrechwert von Wirkungsvariationsgläsern gemäß DIN EN ISO 8980-2:2017-12, Kapitel 5.2.2, insbesondere Kapitel 5.2.2, Tabelle 1, innerhalb der Grenzabweichungen für die Richtung der Zylinderachse gemäß DIN EN ISO 8980-2:2017-12, Kapitel 5.2.3, insbesondere Kapitel 5.2.3, Tabelle 2, innerhalb der Grenzabweichungen für die Wirkungsänderung (einschließlich Nahzusatz) gemäß DIN EN ISO 8980-2:2017-12, Kapitel 5.2.4, insbesondere gemäß Kapitel 5.2.4, Tabelle 3, sowie innerhalb der Grenzabweichungen für die prismatische Wirkung gemäß DIN EN ISO 8980-2:2017-12, Kapitel 5.2.5, insbesondere Kapitel 5.2.5, Tabelle 4,

(4) die optischen Elemente derart ausgebildet sind, dass entlang eines Abschnitts des Brillenglases die sphärische Brechkraft der optischen Elemente in Richtung der Peripherie dieses Abschnitts ansteigt, wobei

das Brillenglas wenigstens eine der optischen Anforderungen (1) bis (3) und die optische Anforderung (4) erfüllt.

Die Vielzahl von wenigstens drei optischen Elementen, bevorzugt die Vielzahl von wenigstens drei optischen Elementen analog WO 2019/166655 A1, wird durch Inkontaktbringen der Oberfläche der wenigstens einen Schicht, welche sich auf der Vorderfläche des Substrats befindet, mit wenigstens einem Medium erhalten. Die Vorderfläche des Substrats weist bevorzugt eine sphärische Oberflächengeometrie oder eine plane Oberflächengeometrie auf. Die Rückfläche des Substrats weist bevorzugt eine sphärische Oberflächengeometrie, eine torische Oberflächengeometrie oder eine Freiformflächengeometrie auf. Weiterhin kann die Vorderfläche und/oder die Rückfläche des Substrats, bevorzugt die Vorderfläche des Substrats, welche jeweils zumindest teilweise oder jeweils vollflächig wenigstens eine Schicht umfasst, welche nach Inkontaktbringen mit wenigstens einem Medium eine Vielzahl von wenigstens drei optischen Elementen analog WO 2019/166655 A1, Anspruch 1, ausbildet, wenigstens ein optisches Element umfassen, welches eine der in WO 2019/166655 A1, Seite 2, Zeile 20, bis Seite 6, Zeile 12, aufgeführten Eigenschaften aufweist.

In einer weiteren Ausführungsform ermöglicht das Inkontaktbringen der wenigstens einen Schicht, welche ihre Oberflächentopographie verändern kann, mit wenigstens einem Medium die Herstellung eines Erzeugnisses umfassend

(i) ein Brillenglas oder

(ii) ein Brillenglas und Anweisungen zum Gebrauch des Brillenglases oder

(iii) eine auf einem Datenträger in Form von computerlesbaren Daten befindliche Darstellung des Brillenglases oder

(iv) eine auf einem Datenträger in Form von computerlesbaren Daten befindliche Darstellung des Brillenglases und Anweisungen zum Gebrauch des Brillenglases oder

(v) einen Datenträger mit einer virtuellen Darstellung des Brillenglases in Form von computerlesbaren Daten oder

(vi) einen Datenträger mit einer virtuellen Darstellung des Brillenglases in Form von computerlesbaren Daten und mit Anweisungen zum Gebrauch des Brillenglases oder

(vii) eine Darstellung des Brillenglases in Form eines computerlesbaren Datensignals oder

(viii) eine Darstellung des Brillenglases in Form eines computerlesbaren Datensignals und Anweisungen zum Gebrauch des Brillenglases, wobei jeweils

-    das Brillenglas ein Substrat mit einer Vorderfläche und einer Rückfläche umfasst,

-    die Vorderfläche des Substrats eine sphärische Oberflächengeometrie, eine asphärische Oberflächengeometrie, eine torische Oberflächengeometrie, eine atorische Oberflächengeometrie, eine plane Oberflächengeometrie oder eine Freiformflächengeometrie aufweist,

-    die Rückfläche des Substrats eine sphärische Oberflächengeometrie, eine asphärische Oberflächengeometrie, eine torische Oberflächengeometrie, eine atorische Oberflächengeometrie, eine plane Oberflächengeometrie oder eine Freiformflächengeometrie aufweist,

-    die Vorderfläche und/oder die Rückfläche des Substrats jeweils zumindest teilweise oder jeweils vollflächig wenigstens eine Schicht umfasst, welche nach Inkontaktbringen mit wenigstens einem Medium eine Vielzahl von wenigstens drei optischen Elementen umfasst,

-    das Brillenglas wenigstens eine der folgenden optischen Anforderungen erfüllt:

(1) keine dioptrische Wirkung,

(2) für ein fertiges Einstärkenglas oder ein fertiges Mehrstärkenglas: eine verordnete dioptrische Wirkung liegt innerhalb der Grenzabweichungen für den bildseitigen Scheitelbrechwert gemäß DIN EN ISO 8980-1:2017-12, Kapitel 5.2.2, insbesondere Kapitel 5.2.2, Tabelle 1, innerhalb der Grenzabweichungen für die Richtung der Zylinderachse gemäß DIN EN ISO 8980-1:2017-12, Kapitel 5.2.3, insbesondere Kapitel 5.2.3, Tabelle 2, innerhalb der Grenzabweichungen für den Nahzusatz von Mehrstärkengläsern gemäß DIN EN ISO 8980-1:2017-12, Kapitel 5.2.4, insbesondere gemäß Kapitel 5.2.4, Tabelle 3, sowie innerhalb der Grenzabweichungen für die prismatische Wirkung gemäß DIN EN ISO 8980-1:2017-12, Kapitel 5.2.5, insbesondere gemäß Kapitel 5.2.5, Tabelle 4,

(3) für fertiges Wirkungsvariationsglas: eine verordnete dioptrische Wirkung liegt innerhalb der Grenzabweichungen für den bildseitigen Scheitelbrechwert von Wirkungsvariationsgläsern gemäß DIN EN ISO 8980-2:2017-12, Kapitel 5.2.2, insbesondere Kapitel 5.2.2, Tabelle 1, innerhalb der Grenzabweichungen für die Richtung der Zylinderachse gemäß DIN EN ISO 8980-2:2017-12, Kapitel 5.2.3, insbesondere Kapitel 5.2.3, Tabelle 2, innerhalb der Grenzabweichungen für die Wirkungsänderung (einschließlich Nahzusatz) gemäß DIN EN ISO 8980-2:2017-12, Kapitel 5.2.4, insbesondere gemäß Kapitel 5.2.4, Tabelle 3, sowie innerhalb der Grenzabweichungen für die prismatische Wirkung gemäß DIN EN ISO 8980-2:2017-12, Kapitel 5.2.5, insbesondere Kapitel 5.2.5, Tabelle 4,

(4) wenigstens eines der optischen Elemente die optische Wirkung aufweist, ein Bild nicht auf der Netzhaut des Auges abzubilden, sowohl unter Standardtragebedingen als auch für peripheres Sehen, wobei

das Brillenglas wenigstens eine der optischen Anforderungen (1) bis (3) und die optische Anforderung (4) erfüllt.

Die Vielzahl von wenigstens drei optischen Elementen, bevorzugt die Vielzahl von wenigstens drei optischen Elementen analog WO 2019/166657 A1, wird durch Inkontaktbringen der Oberfläche der wenigstens einen Schicht, welche sich auf der Vorderfläche des Substrats befindet, mit wenigstens einem Medium erhalten. Die Vorderfläche des Substrats weist bevorzugt eine sphärische Oberflächengeometrie oder eine plane Oberflächengeometrie auf. Die Rückfläche des Substrats weist bevorzugt eine sphärische Oberflächengeometrie, eine torische Oberflächengeometrie oder eine Freiformflächengeometrie auf. Weiterhin kann die Vorderfläche und/oder die Rückfläche des Substrats, bevorzugt die Vorderfläche des Substrats, welche jeweils zumindest teilweise oder jeweils vollflächig wenigstens eine Schicht umfasst, welche nach Inkontaktbringen mit wenigstens einem Medium eine Vielzahl von wenigstens drei optischen Elementen analog WO 2019/166657 A1, Anspruch 1, ausbildet, wenigstens ein optisches Element umfassen, welches eine der in WO 2019/166657 A1, Seite 2, Zeile 26, bis Seite 6, Zeile 5, aufgeführten Eigenschaften aufweist.

In einer weiteren Ausführungsform ermöglicht das Inkontaktbringen der wenigstens einen Schicht, welche ihre Oberflächentopographie verändern kann, mit wenigstens einem Medium die Herstellung eines Erzeugnisses umfassend

(i) ein Brillenglas oder

(ii) ein Brillenglas und Anweisungen zum Gebrauch des Brillenglases oder

(iii) eine auf einem Datenträger in Form von computerlesbaren Daten befindliche Darstellung des Brillenglases oder

(iv) eine auf einem Datenträger in Form von computerlesbaren Daten befindliche Darstellung des Brillenglases und Anweisungen zum Gebrauch des Brillenglases oder

(v) einen Datenträger mit einer virtuellen Darstellung des Brillenglases in Form von computerlesbaren Daten oder

(vi) einen Datenträger mit einer virtuellen Darstellung des Brillenglases in Form von computerlesbaren Daten und mit Anweisungen zum Gebrauch des Brillenglases oder

(vii) eine Darstellung des Brillenglases in Form eines computerlesbaren Datensignals oder

(viii) eine Darstellung des Brillenglases in Form eines computerlesbaren Datensignals und Anweisungen zum Gebrauch des Brillenglases, wobei jeweils

- das Brillenglas ein Substrat mit einer Vorderfläche und einer Rückfläche umfasst,
- die Vorderfläche des Substrats eine sphärische Oberflächengeometrie, eine asphärische Oberflächengeometrie, eine torische Oberflächengeometrie, eine atorische Oberflächengeometrie, eine plane Oberflächengeometrie oder eine Freiformflächengeometrie aufweist,
- die Rückfläche des Substrats eine sphärische Oberflächengeometrie, eine asphärische Oberflächengeometrie, eine torische Oberflächengeometrie, eine atorische Oberflächengeometrie, eine plane Oberflächengeometrie oder eine Freiformflächengeometrie aufweist,
- die Vorderfläche und/oder die Rückfläche des Substrats jeweils zumindest teilweise oder jeweils vollflächig wenigstens eine Schicht umfasst, welche nach Inkontaktbringen mit wenigstens einem Medium eine Vielzahl von wenigstens zwei zusammenhängenden optischen Elementen umfasst,
- das Brillenglas wenigstens eine der folgenden optischen Anforderungen erfüllt:

(1) keine dioptrische Wirkung,

(2) für ein fertiges Einstärkenglas oder ein fertiges Mehrstärkenglas: eine verordnete dioptrische Wirkung liegt innerhalb der Grenzabweichungen für den bildseitigen Scheitelbrechwert gemäß DIN EN ISO 8980-1:2017-12, Kapitel 5.2.2, insbesondere Kapitel 5.2.2, Tabelle 1, innerhalb der Grenzabweichungen für die Richtung der Zylinderachse gemäß DIN EN ISO 8980-1:2017-12, Kapitel 5.2.3, insbesondere Kapitel 5.2.3, Tabelle 2, innerhalb der Grenzabweichungen für den Nahzusatz von Mehrstärkengläsern gemäß DIN EN ISO 8980-1:2017-12, Kapitel 5.2.4, insbesondere gemäß Kapitel 5.2.4, Tabelle 3, sowie innerhalb der Grenzabweichungen für die prismatische Wirkung gemäß DIN EN ISO 8980-1:2017-12, Kapitel 5.2.5, insbesondere gemäß Kapitel 5.2.5, Tabelle 4,

(3) für fertiges Wirkungsvariationsglas: eine verordnete dioptrische Wirkung liegt innerhalb der Grenzabweichungen für den bildseitigen Scheitelbrechwert von Wirkungsvariationsgläsern gemäß DIN EN ISO 8980-2:2017-12, Kapitel 5.2.2, insbesondere Kapitel 5.2.2, Tabelle 1, innerhalb der Grenzabweichungen für die Richtung der Zylinderachse gemäß DIN EN ISO 8980-2:2017-12, Kapitel 5.2.3, insbesondere Kapitel 5.2.3, Tabelle 2, innerhalb der Grenzabweichungen für die Wirkungsänderung (einschließlich Nahzusatz) gemäß DIN EN ISO 8980-2:2017-12, Kapitel 5.2.4, insbesondere gemäß Kapitel 5.2.4, Tabelle 3, sowie innerhalb der Grenzabweichungen für die prismatische Wirkung gemäß DIN EN ISO 8980-2:2017-12, Kapitel 5.2.5, insbesondere Kapitel 5.2.5, Tabelle 4,

(4) wenigstens eines der Vielzahl der wenigstens zwei zusammenhängenden optischen Elemente die optische Wirkung aufweist, ein Bild nicht auf der Netzhaut eines Brillenträgers zu fokussieren, wobei

das Brillenglas wenigstens eine der optischen Anforderungen (1) bis (3) und die optische Anforderung (4) erfüllt.

Die Vielzahl von wenigstens drei optischen Elementen, bevorzugt die Vielzahl von wenigstens zwei zusammenhängenden optischen Elementen analog WO 2019/166659 A1, wird durch Inkontaktbringen der Oberfläche der wenigstens einen Schicht, welche sich auf der Vorderfläche des Substrats befindet, mit wenigstens einem Medium erhalten. Die Vorderfläche des Substrats weist bevorzugt eine sphärische Oberflächengeometrie oder eine plane Oberflächengeometrie auf. Die Rückfläche des Substrats weist bevorzugt eine sphärische Oberflächengeometrie, eine torische Oberflächengeometrie oder eine Freiformflächengeometrie auf. Weiterhin kann die Vorderfläche und/oder die Rückfläche des Substrats, bevorzugt die Vorderfläche des Substrats, welche jeweils zumindest teilweise oder jeweils vollflächig wenigstens eine Schicht umfasst, welche nach Inkontaktbringen mit wenigstens einem Medium eine Vielzahl von wenigstens drei optischen Elementen analog WO 2019/166659 A1, Anspruch 1, ausbildet, wenigstens ein optisches Element umfassen, welches eine der in WO 2019/1666597 A1, Seite 2, Zeile 30, bis Seite 6, Zeile 25, aufgeführten Eigenschaften aufweist.

Bei einer weiteren Ausführungsform ermöglicht das Inkontaktbringen der wenigstens einen Schicht, deren Oberflächentopographie durch Inkontaktbringen mit wenigstens einem Medium verändert werden kann, eine vollflächige Veränderung der Oberflächentopographie der wenigstens einen Schicht, wie vorstehend bereits beschrieben. Durch die vollflächige Veränderung der Oberfläche der wenigstens einen Schicht kann somit beispielsweise ein, Brillenglas mit einer Mehrstärkenfläche und einer Rezeptfläche erzeugt werden, bei welcher die vorgegebenen dioptrischen Wirkungen im Fern- und Nahbezugspunkt erreicht werden, dass die Rezeptflache eine allgemeine asphärische Fläche ohne Punkt- und Achsensymmetrie ist und dass von den individuellen Gebrauchsbedingungen zumindest die dioptrische Wirkung bei der Bestimmung der Geometrie der Rezeptfläche flächig berücksichtigt ist, wie in EP 0 562 336 A1 beschrieben. Durch die vollflächige Veränderung der Oberfläche der wenigstens einen Schicht kann weiterhin beispielsweise ein Brillenglas mit einer sphärischen oder rotationssymmetrisch asphärischen Vorderfläche und einer als Rezeptfläche dienenden Rückflache erzeugt werden, wobei alle individuellen Anforderungen des Brillenrezepts, bestehend aus sphärischer und/oder astigmatischer und/oder prismatischer Wirkung und deren Verteilung auf der Rezeptfläche des Brillenglases erfüllt sind und die Rückfläche des Brillenglases eine multifokale Oberfläche ohne Punkt- und/oder Achsensymmetrie ist, wie in EP 0 857 993 A2 beschrieben. Auch die Herstellung eines Bifokal-Brillenglases wie in PCT/US19/41939 beschrieben, kann über die Veränderung der Oberflächentopographie der wenigstens einen Schicht durch Inkontaktbringen mit wenigstens einem Medium erreicht werden. Weiterhin ist die Herstellung eines Brillenglases zum Erzielen einer rezeptgemäßen sphärischen Wirkung und einer rezeptgemäßen astigmatischen Wirkung, welches eine rotationssymmetrische Brillenglasvorderfläche und eine atorische Brillenglasrückfläche aufweist, wie in EP18209854.1 beschrieben, durch Inkontaktbringen der Oberfläche der wenigstens einen Schicht, welche durch Inkontaktbringen mit wenigstens einem Medium ihre Oberflächentopographie verändern kann, durch Inkontaktbringen mit wenigstens einem Medium realisierbar.

Bei einer weiteren Ausführungsform kann jedes der in der vorstehenden Ausführungsform beschriebenen Brillengläser weiterhin wenigstens eine lokale Veränderung der Oberfläche der wenigstens einen Schicht, welche durch Inkontaktbringen mit wenigstens einem Medium ihre Oberflächentopographie verändern kann, durch Inkontaktbringen mit wenigstens einem Medium wie vorstehend erklärt, erfahren. Diese lokale Veränderung kann beispielsweise wenigstens eine lokale Veränderung analog US 2017/131567 A1, WO 2019/166653 A1, WO 2019/166654 A1, WO 2019/166655 A1, WO 2019/166657 A1 und/oder WO 2019/166659 A1 umfassen. Diese wenigstens eine lokale Veränderung kann die wenigstens eine Schicht der Vorderfläche und/oder der Rückfläche des Substrats betreffen.

Bei sämtlichen vorstehend aufgeführten Erzeugnissen kann die Darstellung des jeweiligen Brillenglases insbesondere eine Beschreibung der geometrischen Gestalt und des Substrats des jeweiligen Brillenglases umfassen. Eine derartige Darstellung kann z.B. eine mathematische Beschreibung der Vorderfläche, der Rückfläche, der Anordnung dieser Flächen zueinander, einschließlich der Dicke, und der Randbegrenzung des jeweiligen Brillenglases sowie der Brechzahlverteilung des Substrats, auf dem das jeweilige Brillenglas basieren soll, umfassen. Die Darstellung kann in kodierter oder gar in verschlüsselter Form vorliegen.

Bei sämtlichen vorstehend aufgeführten Erzeugnissen können die Anweisungen zum Gebrauch des Brillenglases mündlich, beispielsweise durch einen Augenoptiker, schriftlich, beispielsweise in Form eines Beipackzettels, einer Gebrauchsanweisung oder einer Produktbeschreibung, auf einem Datenträger in Form von computerlesbaren Daten oder in Form eines Datensignals vorliegen oder übermittelt werden. Die Anweisungen können beispielsweise umfassen, wofür das Brillenglas geeignet ist, beispielsweise zum Autofahren oder als Arbeitsplatzbrille. Weiterhin können diese Anweisungen Zentrierungsparameter umfassen. Sofern es sich bei dem Erzeugnis um eine auf einem Datenträger in Form von computerlesbaren Daten befindliche Darstellung des jeweiligen Brillenglases handelt, können sich die Anweisungen zum Gebrauch des jeweiligen Brillenglases ebenfalls auf diesem oder einem anderen Datenträger in Form von computerlesbaren Daten befinden. Alternativ können die Anweisungen zum Gebrauch auch mündlich übermittelt, in schriftlicher Form oder in Form eines computerlesbaren Datensignals vorliegen. Sofern es sich bei dem Erzeugnis um einen Datenträger mit einer virtuellen Darstellung des jeweiligen Brillenglases in Form von computerlesbaren Daten handelt, können sich die Anweisungen zum Gebrauch des jeweiligen Brillenglases ebenfalls auf diesem oder einem Datenträger in Form von computerlesbaren Daten befinden. Alternativ können auch in diesem Fall die Anweisungen zum Gebrauch mündlich übermittelt, in schriftlicher Form oder in Form eines computerlesbaren Datensignals vorliegen. Sofern es sich bei dem Erzeugnis um eine Darstellung des jeweiligen Brillenglases in Form eines computerlesbaren Datensignals handelt, können die Anweisungen zum Gebrauch des jeweiligen Brillenglases ebenfalls in Form eines computerlesbaren Datensignals vorliegen. Alternativ können in letzterem Fall die Anweisungen zum Gebrauch mündlich übermittelt werden, in schriftlicher Form vorliegen oder sich auf einem Datenträger in Form von computerlesbaren Daten befinden.

Die Anweisungen zum Gebrauch des jeweiligen Brillenglases bezeichnen insbesondere die Position und die Orientierung des jeweiligen Brillenglases bzw. der Brille, in die das jeweilige Brillenglas eingesetzt wird, in Bezug auf die Augen und das Gesicht des Trägers während des Tragens der Brille. Die Gebrauchsbedingungen lassen sich beispielsweise durch den Vorneigungswinkel gemäß DIN EN ISO 13666:2013-10, Abschnitt 5.18, den Fassungsscheibenwinkel gemäß DIN EN ISO 13666:2013-10, Abschnitt 17.3 und den Hornhaut-Scheitelabstand gemäß DIN EN ISO 13666:2013-10, Abschnitt 5.27 angeben. Typische Werte für den Vorneigungswinkel liegen zwischen -20 Grad und +30 Grad, typische Werte für den Hornhaut-Scheitelabstand liegen im Bereich zwischen 5 mm und 20 mm und typische Werte für den Fassungsscheibenwinkel liegen im Bereich von - 5 Grad bis +30 Grad. Neben dem Vorneigungswinkel, dem Fassungsscheibenwinkel und dem Hornhaut-Scheitelabstand gehen in die Gebrauchsbedingungen in der Regel auch der Pupillenabstand gemäß DIN EN ISO 13666:2013-10, Abschnitt 5.29, also der Abstand zwischen den Mittelpunkten der Pupillen für den Fall, dass die Augen bei Blickrichtung geradeaus ein unendlich entferntes Objekt fixieren, die Zentrierdaten, also die zur Zentrierung des jeweiligen Brillenglases vor dem Auge nötigen Maße und Abstände, und das Objektabstandsmodell, welches festlegt, für welchen Objektabstand ein bestimmter Punkt auf der jeweiligen Brillenglasoberfläche optimiert ist, ein.

Nach DIN EN ISO 13666:2013-10, Abschnitt 5.18, ist der Vorneigungswinkel der Winkel in der Vertikalebene zwischen der Normale zur Vorderfläche eines Brillenglases in dessen Mittelpunkt nach Kastensystem und der Fixierlinie des Auges in Primärposition, die üblicherweise als horizontal angenommen wird. Nach DIN EN ISO 13666:2013-10, Abschnitt 17.3, ist der Fassungsscheibenwinkel der Winkel zwischen der Fassungsebene und der rechten bzw. linken Scheibenebene. Nach DIN EN ISO 13666:2013-10, Abschnitt 5.27, ist der Hornhaut-Scheitelabstand der Abstand zwischen der Rückfläche des Brillenglases und dem Apex der Hornhaut gemessen in Blickrichtung senkrecht zur Fassungsebene. Nach DIN EN ISO 13666:2013-10, Abschnitt 17.1, ist die Scheibenebene die Ebene tangential zur Vorderfläche einer in die Brillenfassung eingearbeiteten Demo- oder Stütz-Scheibe in deren geometrischen Scheibenmittelpunkt. Nach DIN EN ISO 13666:2013-10, Abschnitt 17.2, ist die Fassungsebene die Ebene, die durch die beiden vertikalen Mittellinien der rechten und der linken Scheibenebene verläuft.

Erfindungsgemäßes Verfahren zur Herstellung eines Brillenglases

Beispiel 1

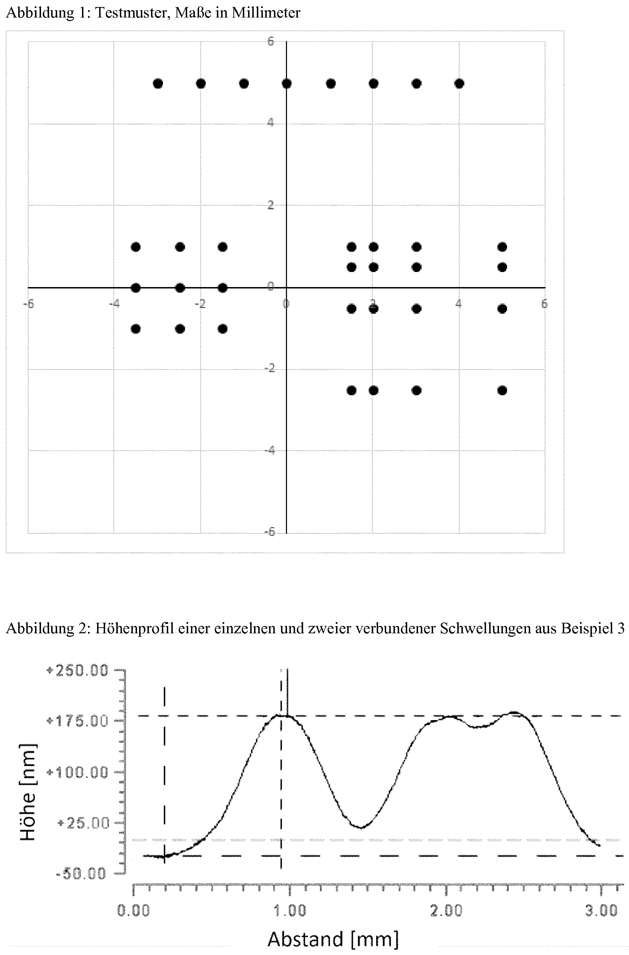

Eine selbstklebende Folie (Superstik Premium MP, Firma Satisloh AG) wurde mit einem Laser (LSU 193, Firma Trotec GmbH) mit einem Testmuster gemäß Abbildung 1 perforiert. Diese Folie mit dem Testmuster wurde anschließend auf die Vorderfläche eines photochromen Brillenglas-Halbfertigprodukts (ZEISS SF Freeform Puck 1.60 (MR8) Photofusion Grau ohne weitere Schutzschicht, Hartlackschicht und/oder Entspiegelungsschicht, Firma Carl Zeiss Vision GmbH) auf die photochrome Schicht aufgebracht. Anschließend wurde auf die Folie dieses Brillenglas-Halbfertigprodukt 97%ige Ölsäure mittels einer Pipette appliziert und mit einem mit 97%iger Ölsäure getränkten Baumwolltuch über die komplette Vorderfläche mit Folie verteilt. Danach wurde dieses Brillenglas-Halbfertigprodukt in der Probenkammer des Geräts Suntest XLS+ (Firma Atlas Material Testing Technology GmbH) für 16 Stunden einer Xenon-Bestrahlung (270W/m2) ausgesetzt. Anschließend wurde die Folie von dem Brillenglas-Halbfertigprodukt entfernt und die Oberflächen des Brillenglas-Halbfertigprodukts mit Ethanol gereinigt. Es wurde ein Brillenglas-Halbfertigprodukt erhalten, welches auf der Vorderfläche an jeder Stelle, die mit einer Perforation der Folie korrespondierte, auf einer kreisrunden Fläche mit einem Radius von 0,75 mm eine stetige Zunahme der Schichtdicke der photochromen Schicht bis zu einem Maximum von 2700 nm aufwies.

Beispiel 2

Eine selbstklebende Folie (Superstik Premium MP, Firma Satisloh AG) wurde mit einem Laser (LSU 193, Firma Trotec GmbH) mit einem Testmuster gemäß Abbildung 1 perforiert. Diese Folie mit dem Testmuster wurde anschließend auf die Vorderfläche eines mit einer photochromen Schicht beschichteten ungerandeten Brillenglases (ZEISS Einstärken Individual 1.6 PhotoFusion Grau ohne jegliche weitere objektseitige Beschichtung) mit einer dioptrischen Wirkung von -2 dpt auf die photochrome Schicht aufgebracht. Anschließend wurde auf die Folie dieses Brillenglases 97%ige Ölsäure mittels einer Pipette appliziert und mit einem mit 97%iger Ölsäure getränkten Baumwolltuch über die komplette Folie verteilt. Danach wurde dieses Brillenglas in der Probenkammer des Geräts Suntest XLS+ (Firma Atlas Material Testing Technology GmbH) für 16 Stunden einem Zyklus aus abwechselnd Xenon-Bestrahlung (270W/m2) und Flutung mit VE-Wasser (VE = vollentsalzt) bei Xenon-Bestrahlung (270W/m2) ausgesetzt. Anschließend wurde die Folie von dem Brillenglas entfernt und die Oberflächen des Brillenglases mit Ethanol gereinigt. Es wurde ein Brillenglas erhalten, welches auf der Vorderfläche an jeder Stelle, die mit einer Perforation der Folie korrespondierte, auf einer kreisrunden Fläche mit einem Radius von 0,75 mm eine stetige Zunahme der Schichtdicke der photochromen Schicht bis zu einem Maximum von 3500 nm aufwies.

Beispiel 3

Mittels eines Lasers (LSU 193, Firma Trotec GmbH) wurde das in Abbildung 1 gezeigte Testmuster in die selbstklebende Folie (Superstik Premium MP, Firma Satisloh AG) geschossen. Die Folie wurde auf die Vorderfläche eines Brillenglases (ZEISS Einstärken Superb 1.60 Photofusion Grau ohne weitere Schutzschicht, Hartlackschicht und/oder Entspiegelungsschicht, Firma Carl Zeiss Vision GmbH) mit einer dioptrischen Wirkung von -2 dpt aufgeklebt. Danach wurde auf die Folie Ölsäure (techn. 96%) mit der Pipette aufgebracht und mithilfe eines Baumwolltuches verteilt. Das so präparierte Vorderfläche mit Folie wurde für 2 Stunden in der Probenkammer des Geräts Suntest XLS+ (Firma Atlas Material Testing Technology GmbH) bei 35°C, 275W/m$^2$, Filterschale Fensterglas, im Zyklus 25 Minuten Bestrahlung/5 Minuten Bestrahlung und Flutung mit VE-Wasser mit Xenon-Licht bestrahlt. Anschließend wurde die Folie entfernt und die Vorderfläche mit einem mit Ethanol (99%) getränktem Baumwolltuch gereinigt. An den mit den Löchern in der Folie korrespondierenden Stellen auf der Vorderfläche sind Schwellungen oder Erhebungen entstanden, die eine Höhe von 240 nm bei einer Breite von 1 mm aufwiesen. An den eng zusammenliegenden Stellen sind die Schwellungen benachbarter Positionen ineinander übergegangen, siehe Abbildung 2. Diese Messungen wurden mit dem auf der Weißlichtinterferometrie basierenden optischen Profilometer NewView 7100 der Firma Zygo Corporation vorgenommen.

Beispiel 4

Mittels eines Lasers (LSU 193, Firma Trotec GmbH) wurde das in US 2017/0131567 A1, Abbildung 2 definierte Muster in eine Klebefolie (Superstik Premium MP, Firma Satisloh AG) geschossen. Die so präparierte Folie wurde auf die Vorderfläche eines Brillenglases ZEISS Einstärken Superb 1.60 Photofusion Grau ohne weitere Schutzschicht, Hartlackschicht und/oder Entspiegelungsschicht, Firma Carl Zeiss Vision GmbH, mit einer dioptrischen Wirkung von -2.0 dpt aufgeklebt. Danach wurde auf die Folie Ölsäure (techn. 96%) mit der Pipette aufgebracht und mithilfe eines Baumwolltuches verteilt. Die so präparierte Vorderfläche mit Folie wurde 18 Stunden lang in der Probenkammer des Geräts Suntest XLS+ (Firma Atlas Material Testing Technology GmbH) bei 35°C mit 765W/m$^2$ (Filterschale Fensterglas) bestrahlt. Anschließend wurde die Folie entfernt und die Vorderfläche mit einem mit Ethanol (99%) getränktem Baumwolltuch gereinigt. An den mit den Löchern in der Folie korrespondierenden Stellen auf der Vorderfläche sind die Abbildung 3 gezeigten Erhebungen entstanden, welche eine Höhe von 1500 nm und eine Breite von 1,45 mm aufwiesen. Die in Abbildung 3 gezeigten Erhebungen wurden mit dem auf der Weißlichtinterferometrie basierenden optischen Profilometer NewView 7100 der Firma Zygo Corporation aufgenommen.

Beispiel 5

Ein nach Beispiel 4 hergestelltes Brillenglas wurde mit einer Zusammensetzung gemäß EP 2 578 649 A1, Beispiel 2, und mit der in EP 2 801 846 A1, in Abschnitt [0056], beschriebenen Entspiegelungsschicht beschichtet. Abbildung 5 zeigt die Erhebungen welche mit dem auf der Weißlichtinterferometrie basierenden optischen Profilometer NewView 7100 der Firma Zygo Corporation aufgenommen wurden. Die Erhebungen wiesen eine Langzeitstabilität von > 8 Monaten bei Lagerung bei Raumtemperatur auf.

Beispiel 6

Auf ein Brillenglas ZEISS Einstärken Superb 1.60 Photo fusion Grau ohne weitere Schutzschicht, Hartlackschicht und/oder Entspiegelungsschicht, Firma Carl Zeiss Vision GmbH, mit einer dioptrischen Wirkung von -2.0 dpt wurden mittels eines Inkjet Printers Dimatix 2850 Printer 30 Ölsäuretropfen a 10 Pikoliter an jedem Punkt der Vorderfläche, der seine Oberflächentopographie verändern soll, aufgebracht. Das so präparierte Brillenglas wurde 20 Stunden lang in der Probenkammer des Geräts Suntest XLS+ bei 35°C mit 765W/m$^2$ (Filterschale Fensterglas) bestrahlt. Anschließend wurde das Brillenglas mit einem mit Ethanol (99%) getränktem Baumwolltuch gereinigt. An den Punkten, auf die Ölsäure appliziert wurde, entstanden Schwellungen mit einer Höhe von circa 1350 nm bei einer lateralen Ausdehnung von 450 μm.

Beispiel 7

Auf ein Brillenglas ZEISS Einstärken Superb 1.60 Photofusion Grau ohne weitere Schutzschicht, Hartlackschicht und/oder Entspiegelungsschicht, Firma Carl Zeiss Vision GmbH, mit einer dioptrischen Wirkung von 2.0 dpt wurden mittels eines Inkjet Printers Dimatix 2850 Printer 30 eine UV aushärtende Schicht (Acrylat basierend) als Maskierung an jedem Punkt der Vorderfläche, der seine Oberflächentopographie nicht verändern soll, aufgebracht. Die Maskierungsschicht wurde mit 20-25V bei 40°C gedruckt und anschließend mittels UV LED der Wellenlänge 385nm für 1 Minute ausgehärtet. Danach wurde auf die Vorderfläche Ölsäure (techn. 96%) mit der Pipette aufgebracht und mithilfe eines Baumwolltuches verteilt. Die so präparierte Vorderfläche wurde 20 Stunden lang in der Probenkammer des Geräts Suntest XLS+ bei 35°C mit 765W/m$^2$ (Filterschale Fensterglas) bestrahlt. Anschließend wurde das Brillenglas mit einem mit Ethanol (99%) getränktem Baumwolltuch gereinigt. Es sind Schwellungen mit einer Höhe von circa 559 nm bei einer lateralen Ausdehnung von 980 μm entstanden.

**Patentansprüche**

1. Verfahren zur Herstellung eines Brillenglases umfassend ein Substrat und wenigstens eine Beschichtung, **dadurch gekennzeichnet, dass** das Verfahren wenigstens die folgenden Schritte in der nachstehenden Reihenfolge umfasst:

   - Bereitstellen wenigstens eines Substrats mit einer Vorderfläche und einer Rückfläche,
   - vollflächiges oder partielles Beschichten oder Belegen wenigstens einer der Oberflächen des Substrats mit wenigstens einer Schicht, deren Oberflächentopographie durch Inkontaktbringen mit wenigstens einem Medium verändert werden kann,
   - Inkontaktbringen wenigstens eines Teils der Oberfläche dieser wenigstens einen Schicht mit diesem wenigstens einen Medium,
   - Entfernen des wenigstens einen Mediums.

2. Verfahren nach Anspruch 1, **dadurch gekennzeichnet, dass** die Veränderung der Oberflächentopographie lokal oder vollflächig erfolgt.

3. Verfahren nach einem der vorstehenden Ansprüche, **dadurch gekennzeichnet, dass** es sich bei der Veränderung der Oberflächentopographie um eine positive Veränderung der Oberflächentopographie handelt.

4. Verfahren nach einem der vorstehenden Ansprüche, **dadurch gekennzeichnet, dass** vor dem Inkontaktbringen der wenigstens einen Schicht mit dem wenigstens einen Medium die Oberfläche der wenigstens einen Schicht mit wenigstens einem Maskierungsmittel belegt wird.

5. Verfahren nach Anspruch 3, **dadurch gekennzeichnet, dass** das wenigstens eine Maskierungsmittel aus der Gruppe bestehend aus wenigstens einem Haftkleber, wenigstens einem Klebemittel, wenigstens einer Beschichtung, wenigstens einem Fotolack und wenigstens einer Folie ausgewählt ist.

**6.** Verfahren nach einem der vorstehenden Ansprüche 3 und 4, **dadurch gekennzeichnet, dass** das wenigstens eine Maskierungsmittel wenigstens eine Beschichtung umfasst, die identisch oder verschieden zu der wenigstens einen Schicht ist, deren Oberflächentopographie durch Inkontaktbringen mit wenigstens einem Medium verändert werden kann.

**7.** Verfahren nach einem der vorstehenden Ansprüche, **dadurch gekennzeichnet, dass** dieselbe wenigstens eine Schicht eine identische oder eine unterschiedliche Schichtdicke aufweisen kann.

**8.** Verfahren nach einem der vorstehenden Ansprüche, **dadurch gekennzeichnet, dass** dieselbe wenigstens eine Schicht eine unterschiedliche chemische Zusammensetzung aufweisen kann.

**9.** Verfahren nach einem der vorstehenden Ansprüche, **dadurch gekennzeichnet, dass** die wenigstens eine Schicht mittels eines Inkjet-Verfahrens aufgebracht wird.

**10.** Verfahren nach einem der vorstehenden Ansprüche, **dadurch gekennzeichnet, dass** das Inkontaktbringen derselben wenigstens eine Schicht, deren Oberflächentopographie durch Inkontaktbringen mit wenigstens einem Medium verändert werden kann, mit einem identischen und/oder einem voneinander verschiedenen Medium erfolgt.

**11.** Verfahren nach einem der vorstehenden Ansprüche, **dadurch gekennzeichnet, dass** nach dem Entfernen des Mediums die topographisch veränderte Oberfläche der wenigstens einen Schicht mit wenigstens einer weiteren Schicht belegt wird, wobei diese weitere Schicht in Bezug auf die chemische Zusammensetzung identisch zu oder verschieden von der wenigstens einen Schicht ist, deren Oberflächentopographie verändert wurde.

**12.** Erzeugnisses umfassend

(i) ein Brillenglas oder
(ii) ein Brillenglas und Anweisungen zum Gebrauch des Brillenglases oder
(iii) eine auf einem Datenträger in Form von computerlesbaren Daten befindliche Darstellung des Brillenglases oder
(iv) eine auf einem Datenträger in Form von computerlesbaren Daten befindliche Darstellung des Brillenglases und Anweisungen zum Gebrauch des Brillenglases oder
(v) einen Datenträger mit einer virtuellen Darstellung des Brillenglases in Form von computerlesbaren Daten oder
(vi) einen Datenträger mit einer virtuellen Darstellung des Brillenglases in Form von computerlesbaren Daten und Anweisungen zum Gebrauch des Brillenglases oder
(vii) eine Darstellung des Brillenglases in Form eines computerlesbaren Datensignals oder
(viii) eine Darstellung des Brillenglases in Form eines computerlesbaren Datensignals und Anweisungen zum Gebrauch des Brillenglases, wobei jeweils

- das Brillenglas ein Substrat mit einer Vorderfläche und einer Rückfläche umfasst,
- die Vorderfläche des Substrats eine sphärische Oberflächengeometrie, eine asphärische Oberflächengeometrie, eine torische Oberflächengeometrie, eine atorische Oberflächengeometrie, eine plane Oberflächengeometrie oder eine Freiformflächengeometrie aufweist,
- die Rückfläche des Substrats eine sphärische Oberflächengeometrie, eine asphärische Oberflächengeometrie, eine torische Oberflächengeometrie, eine atorische Oberflächengeometrie, eine plane Oberflächengeometrie oder eine Freiformflächengeometrie aufweist,
- die Vorderfläche und/oder die Rückfläche des Substrats jeweils zumindest teilweise oder jeweils vollflächig wenigstens eine Schicht umfasst, deren Oberflächentopographie identisch oder verschieden zu der Oberflächengeometrie der jeweiligen Oberfläche des Substrats ist, durch Inkontaktbringen mit wenigstens einem Medium wenigstens eine gezielte Veränderung ihrer Oberflächentopographie erfährt, so dass
- das Brillenglas wenigstens eine der folgenden optischen Anforderungen erfüllt:

(1) keine dioptrische Wirkung,
(2) für ein fertiges Einstärkenglas oder ein fertiges Mehrstärkenglas: eine verordnete dioptrische Wirkung liegt innerhalb der Grenzabweichungen für den bildseitigen Scheitelbrechwert gemäß DIN EN ISO 8980-1:2017-12, Kapitel 5.2.2, insbesondere Kapitel 5.2.2, Tabelle 1, innerhalb der Grenzabweichungen für die Richtung der Zylinderachse gemäß DIN EN ISO 8980-1:2017-12, Kapitel 5.2.3, insbesondere Kapitel 5.2.3, Tabelle 2, innerhalb der Grenzabweichungen für den Nahzusatz von Mehrstärkengläsern gemäß DIN EN ISO 8980-1:2017-12, Kapitel 5.2.4, insbesondere gemäß Kapitel 5.2.4, Tabelle 3, sowie innerhalb der Grenzabweichungen für die prismatische Wirkung gemäß DIN EN ISO 8980-1:2017-12, Kapitel 5.2.5, insbesondere gemäß Kapitel 5.2.5, Tabelle 4,

(3) für fertiges Wirkungsvariationsglas: eine verordnete dioptrische Wirkung liegt innerhalb der Grenzabweichungen für den bildseitigen Scheitelbrechwert von Wirkungsvariationsgläsern gemäß DIN EN ISO 8980-2:2017-12, Kapitel 5.2.2, insbesondere Kapitel 5.2.2, Tabelle 1, innerhalb der Grenzabweichungen für die Richtung der Zylinderachse gemäß DIN EN ISO 8980-2:2017-12, Kapitel 5.2.3, insbesondere Kapitel 5.2.3, Tabelle 2, innerhalb der Grenzabweichungen für die Wirkungsänderung (einschließlich Nahzusatz) gemäß DIN EN ISO 8980-2:2017-12, Kapitel 5.2.4, insbesondere gemäß Kapitel 5.2.4, Tabelle 3, sowie innerhalb der Grenzabweichungen für die prismatische Wirkung gemäß DIN EN ISO 8980-2:2017-12, Kapitel 5.2.5, insbesondere Kapitel 5.2.5, Tabelle 4.

13. Erzeugnis nach Anspruch 12, **dadurch gekennzeichnet, dass** die wenigstens eine Schicht, deren Oberflächentopographie durch Inkontaktbringen mit wenigstens einem Medium wenigstens eine lokale Veränderung der Oberflächentopographie erfährt.

14. Erzeugnis nach einem der vorstehenden Ansprüche 12 oder 13, **dadurch gekennzeichnet, dass** die wenigstens eine lokale Veränderung der Oberflächentopographie wenigstens ein kurzwelliges Oberflächensegment angrenzend an eine langwellige Oberfläche der wenigstens einen Schicht ist.

15. Erzeugnis nach einem der vorstehenden Ansprüche 13 bis 14, **dadurch gekennzeichnet, dass** das wenigstens eine kurzwellige Oberflächensegment ein Oberflächensegment mit einer Periodizität kleiner der kleinsten Periodizität der angrenzenden langwelligen Oberfläche der wenigstens einen Schicht ist.

Abbildung 1: Testmuster, Maße in Millimeter

Abbildung 2: Höhenprofil einer einzelnen und zweier verbundener Schwellungen aus Beispiel 3

Abbildung 3: Höhenprofil der Schwellungen aus Beispiel 4

Abbildung 4: Höhenprofil der Schwellungen aus Beispiel 5

**Europäisches Patentamt**
**European Patent Office**
**Office européen des brevets**

# EUROPÄISCHER RECHERCHENBERICHT

Nummer der Anmeldung

EP 19 20 4745

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 531 195 A1 (ZEISS CARL VISION INT GMBH [DE]) 28. August 2019 (2019-08-28) | 1,2,4-15 | INV. B29D11/00 G02C7/02 |
| A | * Zusammenfassung * <br> * Absätze [0010] - [0012], [0017] - [0019], [0031] - [0034], [0050] - [0057] * | 3 | |
| | ----- | | |
| X | US 2014/099439 A1 (OKUBO SHIGEKI [JP] ET AL) 10. April 2014 (2014-04-10) | 1,2,9-15 | |
| A | * Zusammenfassung * <br> * Abbildungen 1-12 * <br> * Absätze [0056] - [0062] * | 3-8 | |
| | ----- | | |
| X | US 2019/310492 A1 (GROMOTKA JEREMIAS [DE]) 10. Oktober 2019 (2019-10-10) | 1,2,9-15 | |
| A | * Zusammenfassung * <br> * Abbildungen 1-12 * <br> * Absätze [0006] - [0012], [0056], [0057] * | 3-8 | |
| | ----- | | |
| X | US 2008/316558 A1 (DEFRANCO CHRISTELLE [FR]) 25. Dezember 2008 (2008-12-25) | 1,2, 11-15 | RECHERCHIERTE SACHGEBIETE (IPC) |
| A | * Zusammenfassung * <br> * Abbildungen 1a-4 * <br> * Absätze [0007] - [0015] * | 3-10 | B29D G02C C23D B05D |
| | ----- | | |

Der vorliegende Recherchenbericht wurde für alle Patentansprüche erstellt

| Recherchenort | Abschlußdatum der Recherche | Prüfer |
|---|---|---|
| Den Haag | 22. April 2020 | Heckmann, Paul |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 20 4745

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-04-2020

| Im Recherchenbericht angeführtes Patentdokument | Datum der Veröffentlichung | Mitglied(er) der Patentfamilie | Datum der Veröffentlichung |
|---|---|---|---|
| EP 3531195 A1 | 28-08-2019 | EP 3531195 A1 | 28-08-2019 |
| | | WO 2019166472 A1 | 06-09-2019 |
| US 2014099439 A1 | 10-04-2014 | AU 2012224048 A1 | 12-09-2013 |
| | | CN 103502877 A | 08-01-2014 |
| | | EP 2682807 A1 | 08-01-2014 |
| | | JP 6113412 B2 | 12-04-2017 |
| | | JP 2012194547 A | 11-10-2012 |
| | | KR 20130128462 A | 26-11-2013 |
| | | US 2014099439 A1 | 10-04-2014 |
| | | WO 2012118089 A1 | 07-09-2012 |
| US 2019310492 A1 | 10-10-2019 | CN 110073280 A | 30-07-2019 |
| | | EP 3339940 A1 | 27-06-2018 |
| | | US 2019310492 A1 | 10-10-2019 |
| | | WO 2018115479 A1 | 28-06-2018 |
| US 2008316558 A1 | 25-12-2008 | AT 461815 T | 15-04-2010 |
| | | AU 2006323921 A1 | 14-06-2007 |
| | | BR PI0619528 A2 | 04-10-2011 |
| | | CA 2632525 A1 | 14-06-2007 |
| | | CN 101326058 A | 17-12-2008 |
| | | EP 1957274 A2 | 20-08-2008 |
| | | FR 2894515 A1 | 15-06-2007 |
| | | JP 5424645 B2 | 26-02-2014 |
| | | JP 2009518674 A | 07-05-2009 |
| | | KR 20080080360 A | 03-09-2008 |
| | | PL 1957274 T3 | 31-08-2010 |
| | | PT 1957274 E | 25-06-2010 |
| | | US 2008316558 A1 | 25-12-2008 |
| | | WO 2007066006 A2 | 14-06-2007 |

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170131567 A1
- WO 2006034652 A1
- WO 2010075319 A2
- US 20150160477 A1
- WO 2018076057 A1
- WO 2018026697 A1
- JP 2019078859 A
- WO 2019166653 A1
- WO 2019166654 A1
- WO 2019166655 A1
- WO 2019166657 A1
- WO 201916657 A1
- WO 2019166659 A1
- EP 3352001 A1
- EP 2019069422 W
- US 4355135 A
- US 4294950 A
- US 4211823 A
- US 20060269741 A1
- US 20040220292 A1
- EP 1965235 A1
- EP 0217502 A1
- EP 1674898 A1
- US 20060066947 A1
- WO 2005050265 A1
- WO 2009029198 A1
- WO 2009156784 A1
- WO 2015160612 A1
- DE 102012210185 A1
- WO 2009056196 A1
- WO 2015121341 A1
- EP 2578649 A1
- EP 1602479 A1
- EP 1433814 A1
- EP 1561571 A1
- WO 03058300 A1
- WO 9417116 A1
- US 3986997 A
- WO 9846692 A1
- US 6538092 B1
- EP 2437084 A1
- EP 1392613 A1
- DE 19848591 A1
- EP 2664659 A1
- DE 102015209794 A1
- WO 20191666597 A1
- EP 0562336 A1
- EP 0857993 A2
- US 1941939 W
- EP 18209854
- US 2017131567 A1
- EP 2801846 A1

**In der Beschreibung aufgeführte Nicht-Patentliteratur**

- **WERNER KÖPPEN.** Konzeption und Entwicklung von Gleitsichtgläsern. *Deutsche Optiker Zeitschrift DOZ,* Oktober 1995, 42-45